# EUROPEAN PATENT APPLICATION

(11) **EP 4 847 308 A1**
(43) Date of publication of application: **02.12.2026**
(21) Application number: 25744740.9
(22) Date of filing: 24.01.2025
(51) Int. Cl.: B60N 2/28

(54) **CARRIER AND POSITIONING ASSEMBLY THEREFOR**

(30) Priority: 26.01.2024 CN 202410116234; 22.01.2025 CN 202510108329
(71) Applicant: Wonderland Switzerland AG, 6312 Steinhausen (CH)
(72) Inventor: MO, Xiaolong, Guangdong 523648 (CN); LI, Ruyi, Guangdong 523648 (CN); NING, Huan, Guangdong 523648 (CN); ZHANG, Kun, Guangdong 523648 (CN)
(74) Representative: Pfenning, Meinig & Partner mbB
(86) International application number: PCT/CN2025/074866
(87) International publication number: WO 2025/157277

(57) **Abstract**

A carrier (1000) and a positioning assembly (100) therefor. The positioning assembly (100) comprises a first positioning assembly (110) and a second positioning assembly (120), wherein the first positioning assembly (110) is rotatably arranged on the second positioning assembly (120), and is configured to be detachably connected to a carrier body, the carrier body being a first carrier body (500) or a second carrier body (600); when the first positioning assembly (110) is configured to be connected to the first carrier body (500) and rotates relative to the second positioning assembly (120) to face a first direction, the first positioning assembly (110) can restrict the first carrier body (500) from being separated from the first positioning assembly (110); and when the first positioning assembly (110) is configured to be connected to the second carrier body (600), the first positioning assembly (110) is restricted from rotating relative to the second positioning assembly (120) to face the first direction.

## Description

### CROSS-REFERENCE TO RELATED ACPPLCATIONS

This application claims priority to Chinese Patent Application No. 2024101162346, filed with the Chinese Patent Office on January 26, 2024 and entitled "Carrier and positioning assembly thereof", and Chinese Patent Application No. 2025101083298, filed with the Chinese Patent Office on January 22, 2025 and entitled " Carrier and positioning assembly thereof ", and which are incorporated herein by reference in their entireties.

### TECHNICAL FIELD

The present disclosure relates to the field of infant product technologies, and in particular, to a carrier and a positioning assembly thereof.

### BACKGROUND

Positioning assemblies currently on the market generally have functions that are compatible with different types of carrier bodies, for example, infant safety carriers and child safety seats. Various types of carrier bodies are rotatably mounted on the positioning assemblies, allowing users to adjust directions thereof according to actual requirements. However, since different types of carrier bodies have different applicable directions of use, if the users use the carrier bodies in a wrong direction, potential safety hazards may occur.

### SUMMARY

Accordingly, a carrier and a positioning assembly thereof are provided to solve the aforementioned problems. The positioning assembly can selectively allow or restrict detachment of a carrier body, and at the same time, can also selectively restrict a rotation angle of the carrier body.

The present disclosure provides a positioning assembly, including a first positioning assembly and a second positioning assembly. The first positioning assembly is rotatably arranged on the second positioning assembly. The first positioning assembly is configured to be detachably connected to a carrier body. The carrier body is a first carrier body or a second carrier body. When the first positioning assembly is configured to be connected to the first carrier body and rotates towards a first direction relative to the second positioning assembly, the first positioning assembly is capable of restricting the first carrier body from being detached from the first positioning assembly; and when the first positioning assembly is configured to be connected to the second carrier body, the first positioning assembly is restricted from rotating towards the first direction relative to the second positioning assembly.

In an embodiment, the positioning assembly further includes: a first connecting mechanism and a first limiting mechanism. The first connecting mechanism is arranged on the first positioning assembly and has a locked state and an unlocked state. When the first connecting mechanism is in the locked state, the first connecting mechanism is connected to the carrier body, and when the first connecting mechanism is in the unlocked state, the first connecting mechanism is detached from the carrier body. The first limiting mechanism is arranged between the first positioning assembly and the second positioning assembly and configured to selectively allow or restrict switching of the first connecting mechanism between the locked state and the unlocked state.

In an embodiment, the positioning assembly further includes: a locking holding mechanism movably arranged on the first positioning assembly and configured to maintain the connection between the first connecting mechanism and the carrier body. When the first positioning assembly is configured to be connected to the first carrier body and faces the first direction, the first limiting mechanism enters a movement path of the locking holding mechanism to limit movement of the locking holding mechanism, to restrict the first connecting mechanism from switching from the locked state to the unlocked state.

In an embodiment, the first limiting mechanism includes a first limiting groove and a first limiting member. The first limiting groove is provided on a surface of the second positioning assembly facing the first positioning assembly. The first limiting member is movably arranged on the first positioning assembly and is capable of being inserted into or withdrawn from the first limiting groove. When the first limiting member is inserted into the first limiting groove, the first limiting member allows the first connecting mechanism to switch to the unlocked state; when the first limiting member is withdrawn from the first limiting groove, the first limiting member restricts the first connecting mechanism from switching to the unlocked state; and when the first positioning assembly rotates towards the first direction relative to the second positioning assembly, the first limiting member is withdrawn from the first limiting groove.

In an embodiment, the first positioning assembly has a rotation axis, and the first limiting member deviates from the rotation axis. A straight line passing through the rotation axis and perpendicular to the first direction is defined as a control straight line. When the first positioning assembly faces the first direction, the first limiting member and the first limiting groove are misaligned and respectively located on two sides of the control straight line.

In an embodiment, the first positioning assembly has a circular structure, and the rotation axis is a center of a circle of the first positioning assembly. The first limiting groove is a semicircular groove, and a radius of the semicircular groove is a distance between the first limiting member and the center of the circle of the first positioning assembly. When the first positioning assembly rotates away from the first direction relative to the second positioning assembly, the first limiting member is located at a midpoint of the first limiting groove.

In an embodiment, an end of the first limiting member facing the second positioning assembly is provided with a sliding slope, the sliding slope being capable of pushing against a groove wall of the first limiting groove, so that the first limiting member moves out of the first limiting groove in a direction away from the second positioning assembly.

In an embodiment, the first limiting mechanism further includes a first reset member. The first reset member is configured to provide an elastic restoring force for the first limiting member to drive the first limiting member to be inserted into the first limiting groove.

In an embodiment, the first positioning assembly includes a first housing having a first mounting cavity. The first housing is further provided with a first limiting hole in communication with the first mounting cavity. The first limiting member is movably arranged in the first mounting cavity and at least part of the first limiting member is capable of extending out of the first mounting cavity through the first limiting hole.

In an embodiment, the first connecting mechanism includes an engaging hook. The engaging hook is pivotally connected to the first housing and has a locked position and an unlocked position. When the engaging hook is at the locked position, the engaging hook is configured to be engaged and locked with the carrier body.

In an embodiment, the positioning assembly further includes a locking holding mechanism. The locking holding mechanism is movably arranged in the first mounting cavity. When the engaging hook is driven to the locked position, the locking holding mechanism is configured to lock the engaging hook to the locked position.

In an embodiment, the locking holding mechanism includes a first locking member. The first locking member is movably arranged in the first mounting cavity and has a first position and a second position. One of the first locking member and the engaging hook is provided with a locking groove, and the other is provided with an engaging portion. When the first locking member is at the first position, the locking groove is engaged with the engaging portion to lock the engaging hook to the locked position. When the first locking member is at the second position, the locking groove is separated from the engaging portion to allow the engaging hook to switch between the locked position and the unlocked position.

In an embodiment, when the first limiting member is withdrawn from the first limiting groove, the first limiting member is located on a movement path of the first locking member to limit switching of the first locking member from the first position to the second position. When the first limiting member is inserted into the first limiting groove, the first limiting member deviates from the movement path of the first locking member to allow the first locking member to switch from the first position to the second position.

In an embodiment, the locking holding mechanism further includes a third reset member. The third reset member is configured to provide an elastic restoring force for the first locking member to hold the first locking member at the first position.

In an embodiment, the positioning assembly further includes a first unlocking member movably arranged on the first positioning assembly. The first unlocking member is drivingly connected to the first locking member, and the first unlocking member is operable to drive the first locking member to move from the first position to the second position.

In an embodiment, the first unlocking member is provided with a driving slope. The first locking member is further provided with a driving portion. The driving portion is adapted to abut against the driving slope and slide along the driving slope to enable the first locking member to switch between the first position and the second position.

In an embodiment, the positioning assembly further includes a second limiting mechanism. The second limiting mechanism is arranged between the first positioning assembly and the second positioning assembly and configured to selectively limit a range of a rotation angle of the first positioning assembly relative to the second positioning assembly.

In an embodiment, the second limiting mechanism has a first state and a second state. The second limiting mechanism, when in the first state, restricts the first positioning assembly from rotating towards the first direction relative to the second positioning assembly. The second limiting mechanism, when in the second state, allows the first positioning assembly to rotate towards the first direction relative to the second positioning assembly. The positioning assembly further includes an elastic member. The elastic member always keeps the second limiting mechanism in the first state. When the first positioning assembly is configured to be connected to the first carrier body, the second limiting mechanism overcomes an elastic force of the elastic member through the first carrier body and is in the second state; or the elastic member always keeps the second limiting mechanism in the second state, and when the first positioning assembly is configured to be connected to the second carrier body, the second limiting mechanism overcomes the elastic force of the elastic member through the second carrier body and is in the first state.

In an embodiment, the second limiting mechanism includes a second limiting groove and a second limiting member. The second limiting groove is provided in one of the second positioning assembly and the first positioning assembly. The second limiting member is movably arranged on the other of the second positioning assembly and the first positioning assembly and is capable of being inserted into or withdrawn from the second limiting groove. When the first positioning assembly is configured to be connected to the second carrier body, the second limiting member is inserted into the second limiting groove, and the first positioning assembly is restricted from rotating towards the first direction relative to the second positioning assembly.

In an embodiment, the first positioning assembly has a rotation axis, and the second limiting member deviates from the rotation axis. A straight line passing through the rotation axis and perpendicular to the first direction is defined as a control straight line. When the first positioning assembly faces the first direction, the second limiting member and the second limiting groove are misaligned and respectively located on two sides of the control straight line.

In an embodiment, the first positioning assembly has a circular structure. The rotation axis is a center of a circle of the first positioning assembly. The second limiting groove is a semicircular groove. A radius of the semicircular groove is a distance between the second limiting member and the center of the circle of the first positioning assembly. When the first positioning assembly rotates away from the first direction relative to the second positioning assembly, the second limiting member is located at a midpoint of the second limiting groove.

In an embodiment, the positioning assembly further includes a linking mechanism. The linking mechanism is arranged on the first positioning assembly and configured to be drivingly connected to the second limiting member. The linking mechanism is capable of driving the second limiting member to be inserted into or withdrawn from the second limiting groove.

In an embodiment, the linking mechanism includes a linking member. The linking member is movably arranged on the first positioning assembly and has a third position and a fourth position. A first end of the linking member is provided with a first chute, and an end of the second limiting member facing away from the second limiting groove is slidably arranged in the first chute. When the linking member moves to the third position, the second limiting member is inserted into the second limiting groove; and when the linking member moves to the fourth position, the second limiting member is withdrawn from the second limiting groove.

In an embodiment, the linking mechanism further includes a pressing member. The pressing member is movably arranged on the first positioning assembly and has a fifth position and a sixth position. The pressing member is provided with a second chute, and a second end of the linking member is slidably arranged in the second chute. When the pressing member is at the fifth position, the linking member is at the third position; and when the pressing member is at the sixth position, the linking member is at the fourth position.

In an embodiment, an extension direction of the first chute intersects with an extension direction of the second chute.

In an embodiment, the linking mechanism further includes a fourth reset member. The fourth reset member abuts against the linking member and configured to provide an elastic restoring force for the linking member to drive the linking member to be held at the third position.

In an embodiment, when the first positioning assembly is configured to be connected to the second carrier body, the pressing member is at the fifth position, and the linking member is at the third position.

In an embodiment, the positioning assembly further includes a rotation moving mechanism. The first positioning assembly is slidably connected to the second positioning assembly through the rotation moving mechanism, and the first positioning assembly simultaneously slides and rotates relative to the second positioning assembly.

In an embodiment, the rotation moving mechanism includes a first rail, a second rail, a first slider, and a second slider. The first rail extends along the first direction. The second rail intersects the first rail. The first slider and the second slider are arranged at intervals on the first positioning assembly. The first slider is configured to slide in the second rail, and the second slider is configured to slide in the first rail.

In an embodiment, an intersection point is formed at an intersection of the first rail and the second rail, and a distance between the intersection point and an end of the first rail or an end of the second rail is greater than or equal to a distance between the first slider and the second slider.

In an embodiment, when the first slider is at the intersection point, the second slider is in the first rail, and the first positioning assembly faces or faces away from the first direction relative to the second positioning assembly; and when the second slider is at the intersection point, the first slider is in the second rail, and the first positioning assembly faces or faces away from a second direction relative to the second positioning assembly. The second direction intersects the first direction.

In an embodiment, the second positioning assembly includes a second housing. The second housing has a second mounting cavity, and the second mounting cavity is in communication with the first rail and the second rail. The rotation moving mechanism further includes a first sliding block and a second sliding block. The first sliding block is located in the second mounting cavity and connected to the first slider. The second sliding block is located in the second mounting cavity and connected to the second slider.

In an embodiment, the positioning assembly further includes a first locking mechanism. The first locking mechanism is arranged between the first positioning assembly and the second positioning assembly. The first locking mechanism has a first locked state and a first unlocked state. When the first locking mechanism is in the first locked state, the first positioning assembly is restricted from rotating relative to the second positioning assembly, and when the first locking mechanism is in the first unlocked state, the first positioning assembly is allowed to rotate relative to the second positioning assembly.

In an embodiment, the first locking mechanism includes: a locking assembly and a locking concave portion. The locking assembly is movably arranged on one of the second positioning assembly and the first positioning assembly. The locking concave portion is arranged in the other of the second positioning assembly and the first positioning assembly. When the locking assembly is inserted into the locking concave portion, the first positioning assembly is engaged with the second positioning assembly to restrict the first positioning assembly from rotating relative to the second positioning assembly; and when the locking assembly is withdrawn from the locking concave portion, the first positioning assembly is rotatable relative to the second positioning assembly.

In an embodiment, the locking assembly includes a first locking portion. The first locking portion is movably arranged on one of the second positioning assembly and the first positioning assembly along the first direction. When the first positioning assembly rotates in the case of one of being towards the first direction and being away from the first direction relative to the second positioning assembly, the first locking portion is capable of being engaged with the locking concave portion.

In an embodiment, the positioning assembly further includes a first unlocking mechanism. The first unlocking mechanism is operably connected to the first locking portion and configured to drive the first locking portion to exit the locking concave portion.

In an embodiment, the first locking portion is movably arranged on the second positioning assembly. The locking concave portion is arranged on the first positioning assembly. The first unlocking mechanism includes a first driving member, a first operating member and a first traction assembly. The first driving member is pivotally connected to the second positioning assembly and pivotally connected to the first locking portion. The first operating member is operably arranged on the second positioning assembly. The first traction assembly is connected to the first operating member and the first driving member respectively. When the first operating member is operated, the first operating member drives, through the first traction assembly, the first driving member to pivot to enable the first driving member to drive the first locking portion to exit the locking concave portion.

In an embodiment, the locking assembly further includes a second locking portion. The second locking portion is movably arranged on one of the second positioning assembly and the first positioning assembly, and the second locking portion is arranged opposite to the first locking portion along the first direction. When the first positioning assembly rotates in the case of the other of being towards the first direction and being away from the first direction relative to the second positioning assembly, the second locking portion is capable of being engaged with the locking concave portion.

In an embodiment, the first positioning assembly further includes a second driving member and a second transmission assembly. The second transmission assembly is configured to drive the second driving member to move so that the second driving member drives the second locking portion to exit the locking concave portion.

In an embodiment, the locking concave portion is arranged on the first positioning assembly, the second locking portion is arranged on the second positioning assembly, and the second driving member, when driven by the second transmission assembly, is capable of pushing the second locking portion to exit the locking concave portion.

In an embodiment, the second transmission assembly includes a transmission member, a third driving member and a third traction assembly. The transmission member is movably arranged on the first positioning assembly and configured to be drivingly connected to a first transmission assembly arranged on the first carrier body. The third driving member is pivotally connected to the first positioning assembly. The third driving member has one end pivotally connected to the second driving member. The third traction assembly is connected to the transmission member and the other end of the third driving member respectively. When the transmission member is driven by the first transmission assembly to move, the transmission member drives, through the third traction assembly, the third driving member to pivot, so that the second driving member moves to push the second locking portion to exit the locking concave portion.

In an embodiment, the second positioning assembly includes a second housing. A convex body protrudes from an upper surface of the second housing. A limiting convex portion is formed on the convex body. A groove-shaped structure is formed between the limiting convex portion and the upper surface of the second housing. The first positioning assembly includes a first housing. When the first positioning assembly faces the first direction or faces away from the first direction relative to the second positioning assembly, part of an edge of the first housing is inserted into the groove-shaped structure.

In an embodiment, the second housing comprises a second top cover and a second bottom cover connected to each other. The convex body protrudes from an upper surface of the second top cover. The limiting convex portion is formed on the convex body. The groove-shaped structure is formed between the limiting convex portion and the upper surface of the second top cover.

In an embodiment, the second positioning assembly includes a framework and at least one first support mechanism. The first support mechanism includes a first support member and a second support member. The first support member is fixed to the framework. The second support member is supported on the first support member. When the first positioning assembly faces the first direction or faces away from the first direction relative to the second positioning assembly, at least part of the second support member is located below the first positioning assembly.

In an embodiment, the second support member includes two connecting pieces arranged opposite to each other and a joining piece connected between the two connecting pieces. The two connecting pieces are supported on the first support member, and the joining piece is located below the limiting convex portion.

In an embodiment, the connecting piece includes a connecting body and a support convex portion protruding from the connecting body. An engaging groove is formed between the support convex portion and the joining piece. The engaging groove is located in the groove-shaped structure and configured to receive part of the edge of the first housing.

In an embodiment, the second positioning assembly includes two first support structures arranged opposite to each other along the first direction. When the first positioning assembly faces the first direction or faces away from the first direction relative to the second positioning assembly, the second support member provides a support force for the first positioning assembly.

In an embodiment, the first positioning assembly further includes a second support mechanism. The second support mechanism includes a first slider and a second slider. The first positioning assembly includes a first housing, the second positioning assembly includes a second housing, and the first slider and the second slider are connected to the first housing and the second housing respectively.

In an embodiment, the second positioning assembly further includes a third support mechanism and a second housing. The second housing includes a second top cover and a second bottom cover connected to each other. The third support mechanism includes a plurality of support columns. Each of the support columns includes a bottom column arranged on the second bottom cover and a top column arranged on the second top cover. The bottom column is connected to the top column.

The present disclosure further provides a positioning assembly configured to mount one of a first carrier body and a second carrier body to a car seat, which includes a second positioning assembly, a first positioning assembly, a first limiting mechanism and a second limiting mechanism. The second positioning assembly is detachably mounted on the car seat. The first positioning assembly is rotatably arranged on the second positioning assembly. The first positioning assembly is configured to be detachably connected to one of the first carrier body and the second carrier body. The first limiting mechanism is arranged between the first positioning assembly and the second positioning assembly. When the first positioning assembly is connected to the first carrier body, the first limiting mechanism selectively allows or restricts detachment of the first carrier body relative to the first positioning assembly. The second limiting mechanism is arranged between the first positioning assembly and the second positioning assembly. When the first positioning assembly is connected to the second carrier body, the second limiting mechanism is configured to selectively limit a range of a rotation angle of the first positioning assembly relative to the second positioning assembly.

In an embodiment, when the first positioning assembly is connected to the first carrier body and the first positioning assembly rotates towards the first direction relative to the second positioning assembly, the first limiting mechanism is configured to restrict the first carrier body from being detached from the first positioning assembly.

In an embodiment, the first limiting mechanism includes a first limiting groove and a first limiting member. The first limiting groove is provided on a surface of the second positioning assembly facing the first positioning assembly. The first limiting member is movably arranged on the first positioning assembly and is capable of being inserted into or withdrawn from the first limiting groove. When the first positioning assembly is configured to be connected to the first carrier body and rotates towards the first direction relative to the second positioning assembly, the first limiting member is inserted into the first limiting groove and restricts the first carrier body from being detached from the first positioning assembly.

In an embodiment, the first positioning assembly includes a first connecting mechanism. The first connecting mechanism is configured to be detachably connected to the first carrier body, and has a locked state and an unlocked state. When the first connecting mechanism is in the locked state, the first carrier body is restricted from being detached from the first connecting mechanism; and when the first connecting mechanism is in the unlocked state, the first carrier body is allowed to be detached from the first connecting mechanism. The positioning assembly further includes a locking holding mechanism movably arranged on the first positioning assembly and configured to hold the first connecting mechanism in the locked state. When the first limiting member is withdrawn from the first limiting groove, the first limiting member is located on a movement path of the locking holding mechanism to restrict movement of the locking holding mechanism; and when the first limiting member is inserted into the first limiting groove, the first limiting member deviates from the movement path of the locking holding mechanism to allow the locking holding mechanism to move.

In an embodiment, the second limiting mechanism includes a second limiting groove and a second limiting member. The second limiting groove is provided in one of the second positioning assembly and the first positioning assembly. The second limiting member is movably arranged on the other of the second positioning assembly and the first positioning assembly and is capable of being inserted into or withdrawn from the second limiting groove. When the first positioning assembly is configured to be connected to the second carrier body, the second limiting member is inserted into the second limiting groove, and the first positioning assembly is restricted from rotating towards the first direction relative to the second positioning assembly.

In an embodiment, the positioning assembly further includes a rotation moving mechanism. The first positioning assembly is slidably connected to the second positioning assembly through the rotation moving mechanism, and the first positioning assembly simultaneously slides and rotates relative to the sliding of the second positioning assembly.

In an embodiment, the rotation moving mechanism includes a first rail, a second rail, a first slider, and a second slider. An extension direction of the second rail intersects an extension direction of the first rail. The first slider and the second slider are arranged at intervals on the first positioning assembly. The first slider is configured to slide in the second rail, and the second slider is configured to slide in the first rail.

In an embodiment, an intersection point is formed at an intersection of the first rail and the second rail, and a distance between the intersection point and an end of the first rail or an end of the second rail is greater than or equal to a distance between the first slider and the second slider.

The present disclosure further provides a carrier, which includes the positioning assembly as described above and a carrier body detachably connected to the first positioning assembly of the positioning assembly. The carrier body is a first carrier body or a second carrier body.

In an embodiment, the carrier includes the positioning assembly as described above. The first transmission assembly includes a pushing member and a second traction assembly. The pushing member is movably arranged on the first carrier body and configured to push against the transmission member. The second traction assembly is connected to the pushing member and the second operating member respectively. When the second operating member is operated, the second operating member drives, through the second traction assembly, the pushing member to push against the transmission member.

The present disclosure further provides a positioning assembly, which includes a first positioning assembly, a second positioning assembly and a rotation moving mechanism. The first positioning assembly has a rotation axis. The first positioning assembly is configured to be detachably connected to a carrier body. The carrier body is a first carrier body or a second carrier body. The rotation moving mechanism includes a rail and a slider sliding in the rail. The first positioning assembly simultaneously slides and rotates relative to the second positioning assembly through the rotation moving mechanism. The rotation axis moves along a linear trajectory perpendicular to the rail along with the sliding and the rotation of the first positioning assembly, and the rail has a first groove section and a second groove section located on two sides of an intersection point between the linear trajectory and the rail. When the first positioning assembly is configured to be connected to the first carrier body and the slider is located in the second groove section, the first positioning assembly restricts the first carrier body from being detached from the first positioning assembly; and when the first positioning assembly is configured to be connected to the second carrier body, the slider is restricted from moving to the second groove section.

In an embodiment, the slider is arranged on the first positioning assembly and deviates from the rotation axis, and the rail is arranged on the second positioning assembly.

In an embodiment, the first groove section is located in a first direction of the intersection point, the second groove section is located in a direction of the intersection point away from the first direction, and when the slider is located in the second groove section, the first positioning assembly faces the first direction relative to the second positioning assembly.

The present disclosure further provides a positioning assembly. The positioning assembly is configured to mount a first carrier body or a second carrier body to a car seat, which includes a third positioning assembly, a second positioning assembly, a first positioning assembly and an extension mechanism. The third positioning assembly is detachably mounted on the car seat. The second positioning assembly is rotatably arranged on the third positioning assembly. The first positioning assembly is movably arranged on the second positioning assembly and has an extended state and a collapsed state. The first positioning assembly is configured to be detachably connected to the first carrier body or the second carrier body. An extension mechanism is connected between the first positioning assembly and the second positioning assembly and configured to guide the first positioning assembly to switch between the extended state and the collapsed state.

In an embodiment, the extension mechanism includes a first main connecting rod, a second main connecting rod, and a first auxiliary rod. One of the first main connecting rod and the second main connecting rod is connected to the first positioning assembly, and the other is connected to the second positioning assembly. Two ends of the first auxiliary rod are pivotally connected to the first main connecting rod and the second main connecting rod respectively, to enable the first main connecting rod and the second main connecting rod to move close to or away from each other. When the first main connecting rod and the second main connecting rod move close to each other, the first positioning assembly is in the collapsed state, and when the first main connecting rod and the second main connecting rod move away from each other, the first positioning assembly is in the extended state.

In an embodiment, one end of the first main connecting rod and one end of the second main connecting rod are each provided with a gear, the two gears engaging with each other, and two ends of the first auxiliary rod are pivotally connected to wheel centers of the two gears respectively.

In an embodiment, the extension mechanism further includes a first reinforcing rod and a third auxiliary rod. The first reinforcing rod and the third auxiliary rod are pivotally connected to each other. An end of the first reinforcing rod away from the third auxiliary rod is pivotally connected to the first auxiliary rod, and an end of the third auxiliary rod away from the first reinforcing rod is pivotally connected to the first main connecting rod, so that the first main connecting rod, the first auxiliary rod, the first reinforcing rod, and the third auxiliary rod form a four-connecting-rod structure, and the third auxiliary rod is connected to the second positioning assembly.

In an embodiment, the extension mechanism further includes a second auxiliary rod, two ends of the second auxiliary rod are pivotally connected to the wheel centers of the two gears respectively, and the second auxiliary rod and the first auxiliary rod are located on two sides of the gear respectively.

In an embodiment, the extension mechanism further includes a second reinforcing rod and a fourth auxiliary rod. The second reinforcing rod and the fourth auxiliary rod are pivotally connected to each other. An end of the second reinforcing rod away from the fourth auxiliary rod is pivotally connected to the second auxiliary rod, and an end of the fourth auxiliary rod away from the second reinforcing rod is pivotally connected to the second main connecting rod, so that the second main connecting rod, the second auxiliary rod, the second reinforcing rod, and the fourth auxiliary rod form a four-connecting-rod structure, and the fourth auxiliary rod is connected to the first positioning assembly.

In an embodiment, the positioning assembly further includes a second locking mechanism. The second locking mechanism is arranged between the first positioning assembly and the second positioning assembly. The second locking mechanism has a second locked state and a second unlocked state. When the second locking mechanism is in the second locked state, the first positioning assembly is restricted from rotating relative to the second positioning assembly, and when the second locking mechanism is in the second unlocked state, the first positioning assembly is allowed to rotate relative to the second positioning assembly.

In an embodiment, the second locking mechanism includes a second locking member pivotally connected to the first positioning assembly. The second locking member has an operating end and a locking end. The second positioning assembly is provided with a locking fitting portion, and the second locking member is pivotable between a locked position and an unlocked position. When the second locking member is at the locked position, the locking end is capable of being engaged with the locking fitting portion, and when the second locking member is at the unlocked position, the locking end is capable of being disengaged from the locking fitting portion. The operating end is operable so that the second locking member pivots from the locked position to the unlocked position.

### BRIEF DESCRIPTION OF THE DRAWINGS

The accompanying drawings forming part of the present disclosure are intended to provide further understanding of the present disclosure. Exemplary embodiments of the present disclosure and descriptions thereof are intended to explain the present disclosure, and do not constitute any inappropriate limitation on the present disclosure.

In order to more clearly illustrate the technical solutions in embodiments of the present disclosure, the accompanying drawings used in the description of the embodiments will be briefly introduced below. It is apparent that the accompanying drawings in the following description are only some embodiments of the present disclosure, and other accompanying drawings can be obtained by those of ordinary skill in the art from the provided accompanying drawings without creative efforts.

In addition, the accompanying drawings are not drawn to 1:1 scale, and relative sizes of various elements in the accompanying drawings are drawn by way of examples only and not necessarily to true scale. In the drawings,
FIG. 1 is a schematic diagram of a three-dimensional structure of a carrier according to an embodiment of the present disclosure, in which a first carrier body is connected to a first positioning assembly, and the first positioning assembly faces a first direction;
FIG. 2 is a schematic diagram of a three-dimensional structure of a carrier according to an embodiment of the present disclosure, in which a first carrier body is connected to a first positioning assembly, and the first positioning assembly faces a third direction;
FIG. 3 is a schematic diagram of a three-dimensional structure of a carrier according to an embodiment of the present disclosure, in which a first carrier body is connected to a first positioning assembly, and the first positioning assembly faces a fourth direction;
FIG. 4 is a schematic diagram of a three-dimensional structure of a carrier according to an embodiment of the present disclosure, in which a second carrier body is connected to a first positioning assembly, and the first positioning assembly faces a third direction;
FIG. 5 is a schematic diagram of a three-dimensional structure of a carrier according to an embodiment of the present disclosure, in which a second carrier body is connected to a first positioning assembly, and the first positioning assembly faces a fourth direction;
FIG. 6 is a three-dimensional view of the second carrier body in FIG. 5;
FIG. 7 is a schematic diagram of a three-dimensional structure of a positioning assembly according to a first embodiment of the present disclosure, in which a first positioning assembly faces a first direction;
FIG. 8 is a schematic diagram of a three-dimensional structure of the positioning assembly according to the first embodiment of the present disclosure, in which the first positioning assembly faces a second direction;
FIG. 9 is a schematic diagram of a three-dimensional structure of the positioning assembly according to the first embodiment of the present disclosure, in which the first positioning assembly faces a fourth direction;
FIG. 10 is a schematic diagram of a three-dimensional structure of the positioning assembly according to the first embodiment of the present disclosure, in which the first positioning assembly faces a third direction;
FIG. 11 is a schematic diagram of a three-dimensional structure of the first positioning assembly in the positioning assembly in FIG. 7;
FIG. 12 is a sectional view taken along U1-U1 in FIG. 11, in which an engaging hook is at a locked position;
FIG. 13 is a sectional view taken along U1-U1 in FIG. 11, in which the engaging hook is at an unlocked position;
FIG. 14 is a schematic diagram of a three-dimensional structure of the first positioning assembly in the positioning assembly in FIG. 7 from another perspective;
FIG. 15 is an exploded view of the first positioning assembly in FIG. 14;
FIG. 16 is an enlarged view of Circle A in FIG. 15;
FIG. 17 is a schematic diagram of a partial structure of the first positioning assembly in FIG. 15, in which a first top cover is omitted;
FIG. 18 is an enlarged view of Circle B in FIG. 17;
FIG. 19 is an enlarged view of Circle C in FIG. 17;
FIG. 20 is a schematic diagram of a partial structure of the first positioning assembly in FIG. 15, in which a first bottom cover is omitted;
FIG. 21 is an enlarged view of Circle D in FIG. 20;
FIG. 22 is a schematic diagram of a three-dimensional structure of a second positioning assembly in the positioning assembly in FIG. 7;
FIG. 23 is a schematic diagram of a three-dimensional structure of the second positioning assembly in the positioning assembly in FIG. 7 from another perspective;
FIG. 24 is a top view of the second positioning assembly in the positioning assembly in FIG. 7;
FIG. 25 is a top view of the second positioning assembly in the positioning assembly in FIG. 7, in which a second top cover is omitted;
FIG. 26 is an enlarged view of Circle O in FIG. 25;
FIG. 27 is an enlarged view of Circle P in FIG. 25;
FIG. 28 is a bottom view of a second top cover of the second positioning assembly;
FIG. 29 is a sectional view taken along U1-U1 in FIG. 1;
FIG. 30 is an enlarged view of Circle E in FIG. 29;
FIG. 31 is an enlarged view of Circle F in FIG. 29;
FIG. 32 is a sectional view taken along U3-U3 in FIG. 2;
FIG. 33 is an enlarged view of Circle G in FIG. 32;
FIG. 34 is an enlarged view of Circle H in FIG. 32;
FIG. 35 is a sectional view taken along U4-U4 in FIG. 4;
FIG. 36 is an enlarged view of Circle J in FIG. 35;
FIG. 37 is an enlarged view of Circle K in FIG. 35;
FIG. 38 is a schematic diagram of a partial structure of a second positioning assembly according to an embodiment of the present disclosure;
FIG. 39 is a schematic structural diagram of a second support member in the second positioning assembly in FIG. 38;
FIG. 40 is a schematic diagram of a partial structure of a second positioning assembly according to another embodiment of the present disclosure;
FIG. 41 is a schematic structural diagram of FIG. 40 from another perspective;
FIG. 42 is a sectional view taken along U5-U5 in FIG. 9;
FIG. 43 is a schematic diagram of a three-dimensional structure of the positioning assembly according to the first embodiment of the present disclosure, in which the first top cover and the second top cover are omitted;
FIG. 44 is an enlarged view of Circle S in FIG. 43;
FIG. 45 is a schematic diagram of a three-dimensional structure of the positioning assembly according to the first embodiment of the present disclosure, in which the first top cover, the first bottom cover, and the second top cover are omitted;
FIG. 46 is an enlarged view of Circle T in FIG. 45;
FIG. 47 is a schematic structural diagram of a third traction assembly in FIG. 43, in which the third traction assembly does not deform;
FIG. 48 is a schematic structural diagram of the third traction assembly in FIG. 43, in which the third traction assembly has deformed;
FIG. 49 is a front view of the first carrier body in FIG. 1;
FIG. 50 is a sectional view taken along U6-U6 in FIG. 49, in which a pushing member is not pressed down;
FIG. 51 is a sectional view taken along U6-U6 in FIG. 49, in which the pushing member is pressed down;
FIG. 52 is a schematic diagram of a three-dimensional structure of a positioning assembly according to a second embodiment of the present disclosure, in which a first positioning assembly faces a first direction;
FIG. 53 is a schematic diagram of a three-dimensional structure of the positioning assembly according to the second embodiment of the present disclosure, in which the first positioning assembly faces a third direction;
FIG. 54 is a schematic diagram of a three-dimensional structure of the positioning assembly according to the second embodiment of the present disclosure, in which the first positioning assembly faces a second direction, and the first positioning assembly is in a collapsed state;
FIG. 55 is a schematic diagram of a three-dimensional structure of the positioning assembly according to the second embodiment of the present disclosure, in which the first positioning assembly faces the second direction, and the first positioning assembly is in an extended state;
FIG. 56 is an enlarged view of Circle L in FIG. 55;
FIG. 57 is a schematic diagram of a three-dimensional structure of the positioning assembly according to the second embodiment of the present disclosure, in which the first positioning assembly faces a fourth direction; and
FIG. 58 is a sectional view of the positioning assembly according to the second embodiment of the present disclosure.

### Reference signs:

1000: carrier; 100: positioning assembly; 110: first positioning assembly; 111: first housing; 1111: first mounting cavity; 1112: first limiting hole; 1113: second limiting hole; 1114: push hole; 1115: first top cover; 1116: first bottom cover; 1117: pushing hole; 1118: edge; 112: first connecting mechanism; 1121: engaging hook; 11211: engaging portion; 11212: accommodating grooves; 11213: pushing wall; 1122: slot; 113: indication mechanism; 1131: swinging member; 1132: color block; 1133: observation hole; 114: movement limiting seat; 1141: movable cavity; 1142: first opening; 1143: second opening; 115: support plate; 116: support rod; 117: second support mechanism; 120: second positioning assembly; 121: second housing; 1211: second mounting cavity; 1212: second top cover; 1213: second bottom cover; 1214: convex body; 1215: limiting convex portion; 1216: first channel; 1217: second channel; 122: locking fitting portion; 123: support frame; 124: pivot shaft; 125: seat connecting plug; 126: support leg; 127: first support mechanism; 1271: first support member; 1272: second support member; 12721: connecting piece; 12721a: connecting body; 12721b: support convex portion; 12721c: fixed groove; 12721d: engaging groove; 12722: joining piece; 12722a: arched portion; 12722b: receiving groove; 12722c: fastening hole; 1273: support pad; 1274: auxiliary support piece; 12741: first auxiliary piece; 12742: second auxiliary piece; 12743: third auxiliary piece; 12744: orifice; 128: framework; 1281: first straight rod; 1282: second straight rod; 1283: arc-shaped rod; 129: third support mechanism; 1291: first support column; 1291a: first bottom column; 1291b: first top column; 1292: second support column; 1292a: second bottom column; 1292b: second top column; 130: third positioning assembly; 140: first limiting mechanism; 141: first limiting groove; 142: first limiting member; 1421: sliding slope; 1422: strip hole; 143: first reset member; 150: locking holding mechanism; 151: first locking member; 1511: locking groove; 1512: driving portion; 152: third reset member; 160: first unlocking member; 161: driving slope; 170: second limiting mechanism; 171: second limiting groove; 172: second limiting member; 1721: guide convex; 180: linking mechanism; 181: linking member; 1811: first chute; 182: pressing member; 1821: second chute; 183: fourth reset member; 190: rotation moving mechanism; 191: first rail; 192: second rail; 193: intersection point; 194: first slider; 195: second slider; 196: first sliding block; 197: second sliding block; 1971: groove; 198: sliding wheel; 211: locking assembly; 2111: first locking portion; 2112: second locking portion; 2113: fifth reset member; 2114: seventh reset member; 212: locking concave portion; 230: extension mechanism; 231: first main connecting rod; 232: second main connecting rod; 233: first auxiliary rod; 234: gear; 235: first reinforcing rod; 236: third auxiliary rod; 237: second auxiliary rod; 238: second reinforcing rod; 239: fourth auxiliary rod; 240: second locking mechanism; 241: second locking member; 2411: operating end; 2412: locking end; 242: button; 300: first unlocking mechanism; 310: first driving member; 320: first operating member; 330: first traction assembly; 331: first traction rope; 400: second unlocking mechanism; 410: second driving member; 411: elastic arm; 420: second operating member; 430: first transmission assembly; 431: pushing member; 432: second traction assembly; 4321: second traction rope; 433: linking block; 434: guide wheel; 440: second transmission assembly; 441: transmission member; 4411: fixed seat; 44111: first connecting portion; 4412: movable pushing seat; 44121: second connecting portion; 4413: third connecting portion; 442: third driving member; 443: third traction assembly; 4431: third traction rope; 44311: first rope end; 44312: second rope end; 4432: third traction sleeve; 44321: first sleeve end; 44322: second sleeve end; 444: eighth reset member; 500: first carrier body; 520: push member; 530: sixth reset member; 600: second carrier body; 610: engaging member; F1: first direction; F2: second direction; F3: third direction; F4: fourth direction; F5: fifth direction; Q1: first pivot point; Q2: second pivot point; Q3: third pivot point.

### DETAILED DESCRIPTION OF THE EMBODIMENTS

In order to make the above objectives, features, and advantages of the present disclosure more obvious and understandable, specific implementations of the present disclosure are described in detail below with reference to the accompanying drawings. In the following description, many specific details are set forth in order to fully understand the present disclosure. However, the present disclosure can be implemented in many other manners different from those described herein, and those skilled in the art can make similar improvements without departing from the connotation of the present disclosure. Therefore, the present disclosure is not limited by the specific embodiments disclosed below.

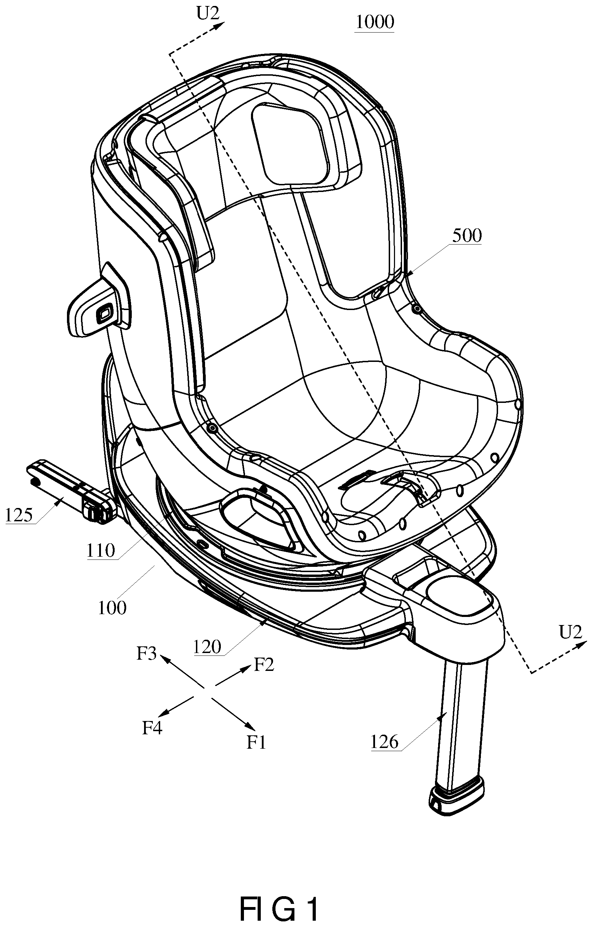

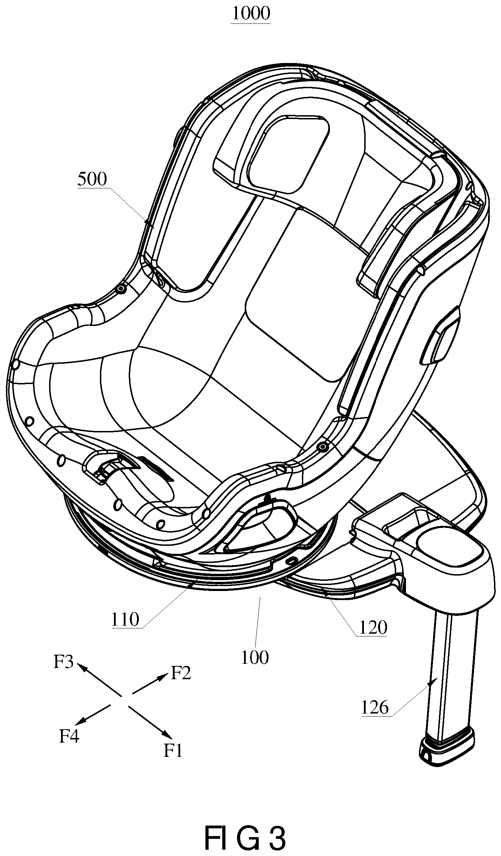

FIG. 1 to FIG. 5 schematically show a three-dimensional view of a carrier 1000 according to some embodiments of the present disclosure. The carrier 1000 may include, for example, a first carrier body 500, a second carrier body 600, and a positioning assembly 100 according to some embodiments of the present disclosure. The first carrier body 500, the second carrier body 600, and the positioning assembly 100 will be described together when the carrier 1000 is described below.

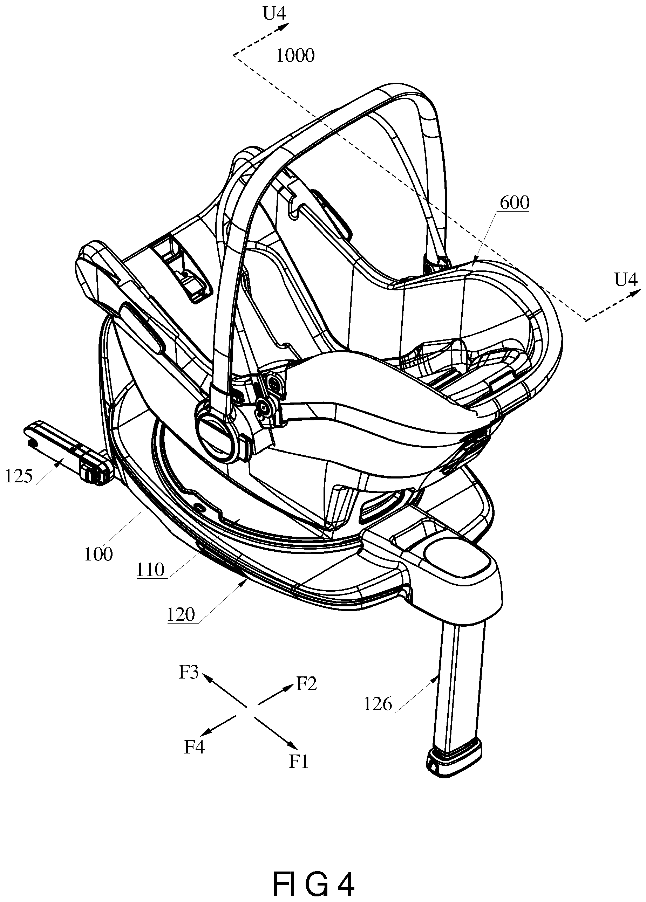

Referring to FIG. 1 to FIG. 3, in some embodiments, the first carrier body 500 may be, for example, a child safety seat. The child safety seat is mainly configured for older children to sit. Referring to FIG. 4 to FIG. 6, in some embodiments, the second carrier body 600 may be, for example, an infant safety carrier. The infant safety carrier is mainly configured for infants aged between 0 and 15 months old (within about ten kilograms) to sit. Considering safety of sitting, when the infant safety carrier is placed on the carrier seat, it is restricted to a direction towards the front of a car, that is, restricted to the front of the car along a normal traveling direction.

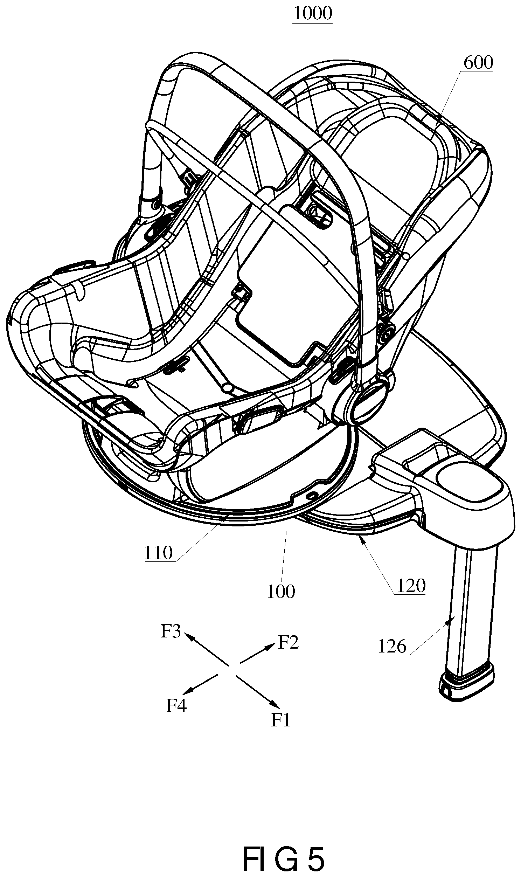

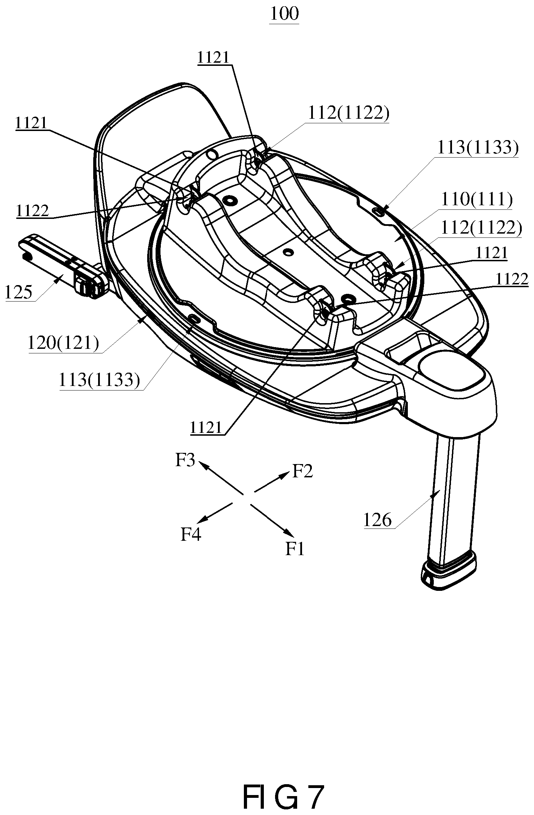

FIG. 7 to FIG. 10 schematically show three-dimensional views of the positioning assembly 100 in different states according to a first embodiment of the present disclosure. It is to be noted that when the carrier 1000 is a child safety seat as a whole, the positioning assembly 100 may be regarded as a carrier base. Specifically, the positioning assembly 100 includes a first positioning assembly 110 and a second positioning assembly 120, and the first positioning assembly 110 is rotatably arranged on the second positioning assembly 120. The second positioning assembly 120 is configured to be detachably connected to a car seat. Specifically, the second positioning assembly 120 is provided with a seat connecting mechanism 125 (e.g., an ISOFIX connecting device) and a support leg 126. The seat connecting mechanism 125 is mainly configured to fix the second positioning assembly 120 to the car seat. The support leg 126 is configured to abut against the floor inside the car. The first positioning assembly 110 can be detachably connected to one of the first carrier body 500 and the second carrier body 600. That is, the first positioning assembly 110 can be detachably connected to the first carrier body 500 alone (see FIG. 1 to FIG. 3), or the first positioning assembly 110 can be detachably connected to the second carrier body 600 alone (see FIG. 4 and FIG. 5). Specifically, when the first carrier body 500 is connected to the first positioning assembly 110, the first positioning assembly 110 can rotate towards a first direction F1 relative to the second positioning assembly 120 (see FIG. 1), and when the first positioning assembly 110 rotates towards the first direction F1 relative to the second positioning assembly 120, the first carrier body 500 is restricted from being detached from the first positioning assembly 110 (see below for the specific principle). In other words, when the first carrier body 500 is connected to the first positioning assembly 110, the first positioning assembly 110 can rotate freely relative to the second positioning assembly 120, and in particular can rotate towards the first direction F1 relative to the second positioning assembly 120. However, when the first positioning assembly 110 rotates towards the first direction F1 relative to the second positioning assembly 120, the first carrier body 500 connected to the first positioning assembly 110 cannot be detached from the first positioning assembly 110. When the second carrier body 600 is connected to the first positioning assembly 110, the first positioning assembly 110 is restricted from rotating towards the first direction F1 relative to the second positioning assembly 120 (see below for the specific principle). It is to be noted that taking normal traveling of the car as a reference, the first direction F1 refers to the front of the car when the positioning assembly 100 is mounted on the car seat, that is, a direction towards the front of the car. It is to be noted that, in the present disclosure, an orientation of the carrier body 600 is the same as a direction in which the infant or child faces after the infant or child rides on the carrier body 600. An orientation of the first positioning assembly 110 relative to the second positioning assembly 120 is also consistent with the direction in which the infant or child faces after the infant or child rides on the carrier body 600.

Referring to FIG. 7 to FIG. 10, in an embodiment, the first positioning assembly 110 includes a first housing 111 and a first connecting mechanism 112. The first connecting mechanism 112 is arranged on the first housing 111 and configured to be detachably connected to the first carrier body 500 or the second carrier body 600. The first connecting mechanism 112 has a locked state and an unlocked state. When the first connecting mechanism 112 is in the locked state, the first connecting mechanism 112 is connected to a carrier body. When the first connecting mechanism 112 is in the unlocked state, the first connecting mechanism 112 is detached from the carrier body.

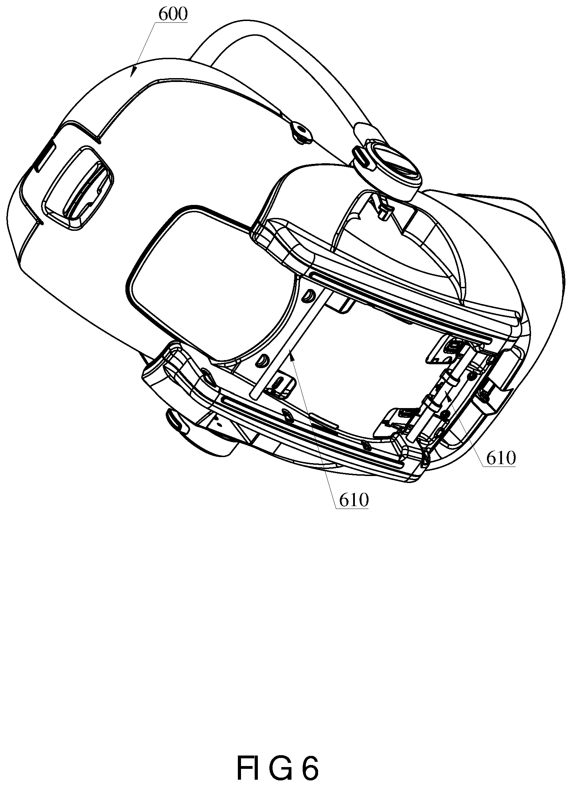

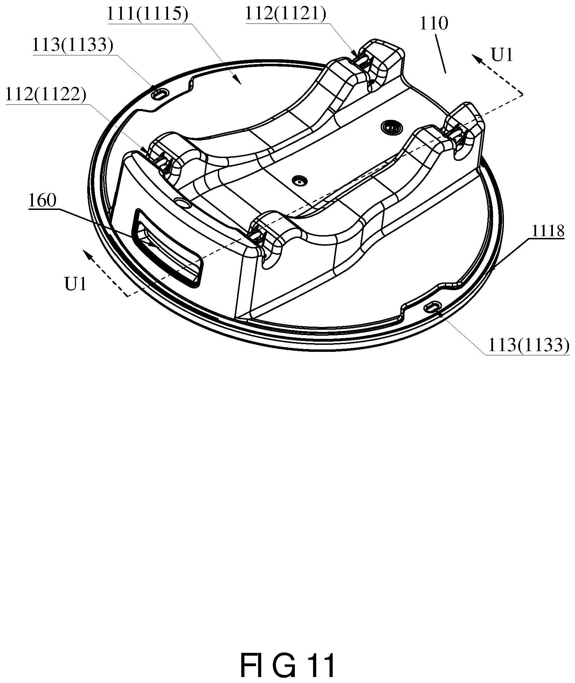

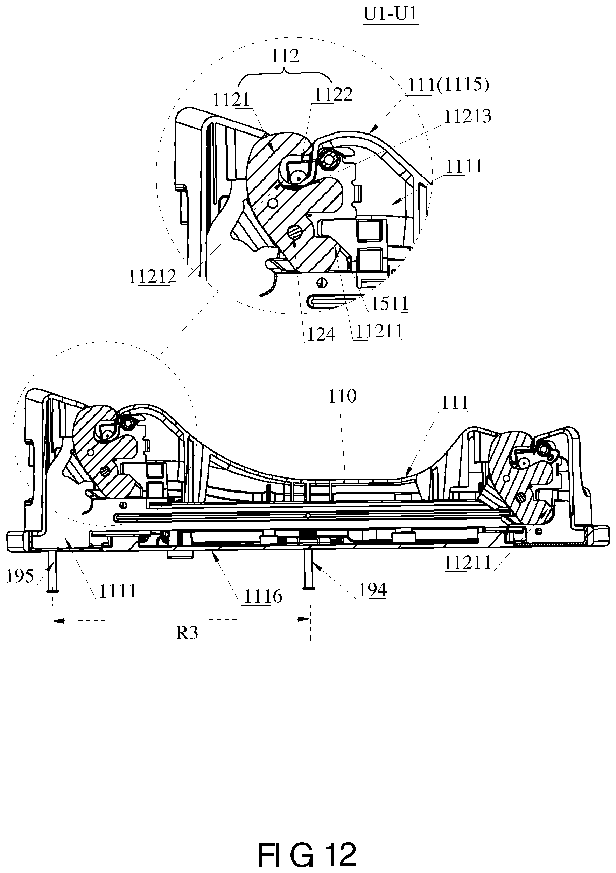

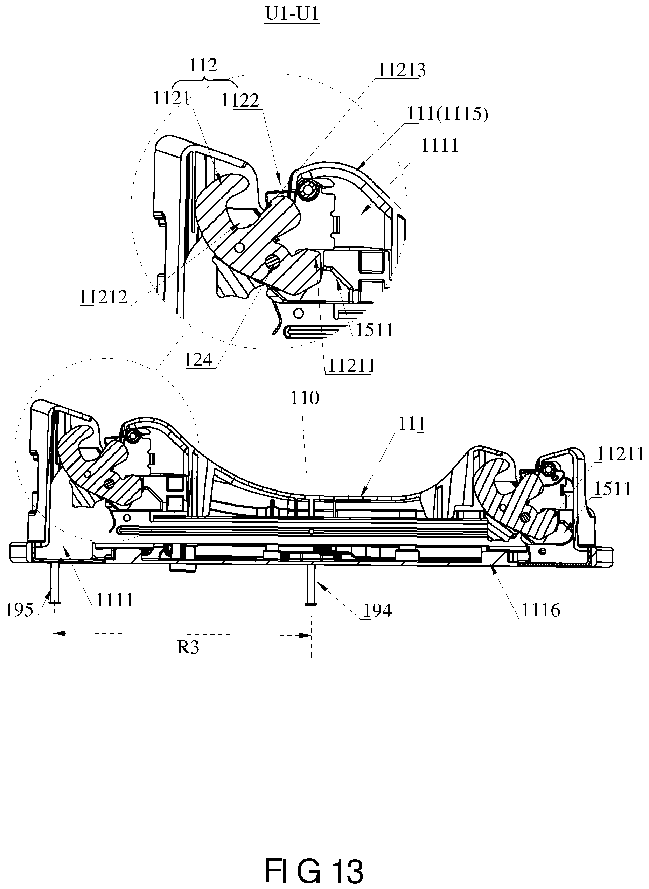

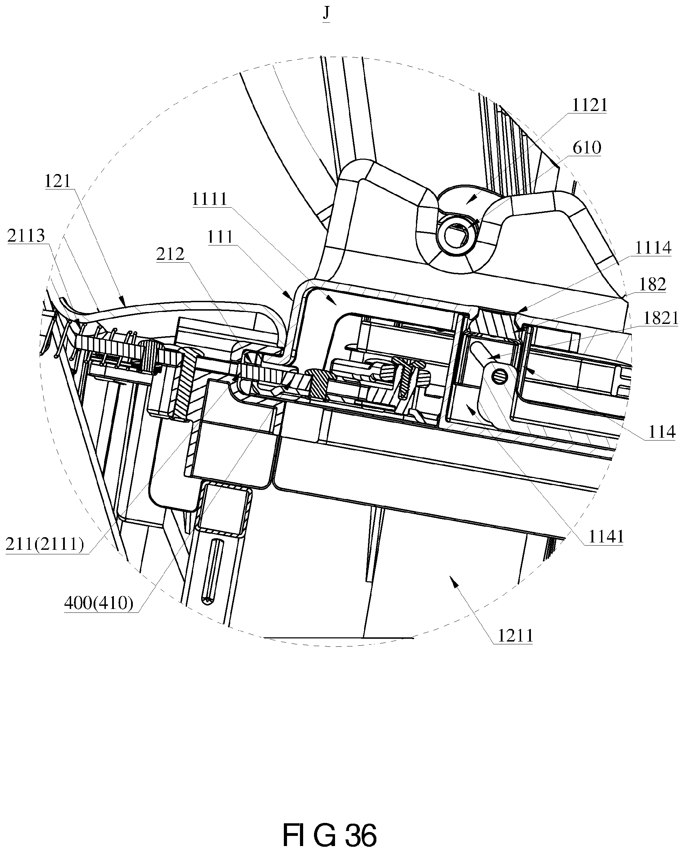

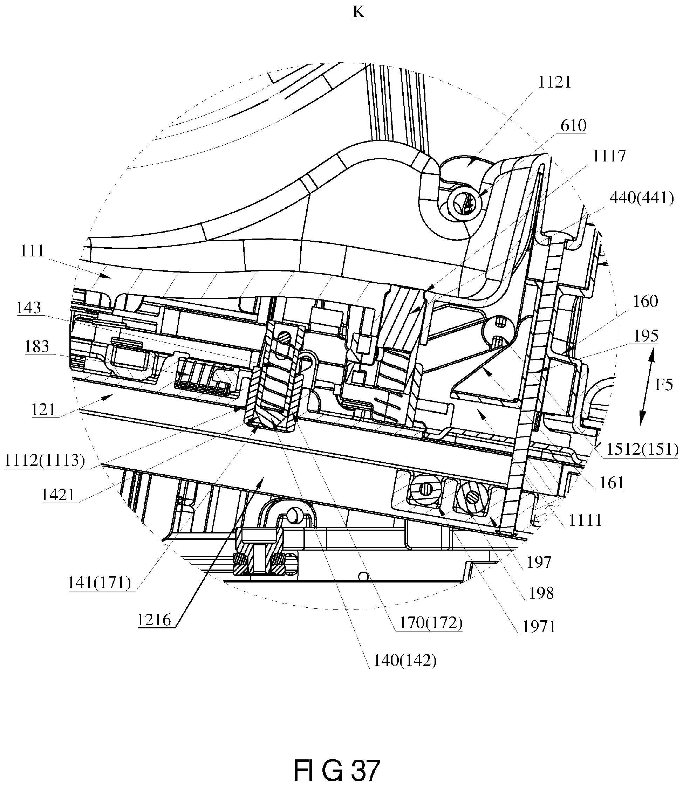

Specifically, the first carrier body 500 and the second carrier body 600 are each provided with an engaging member 610 (see FIG. 6) at the bottom. The engaging member 610 may be, for example, an engaging rod. Specifically, as shown in FIG. 11 to FIG. 13, the first connecting mechanism 112 includes an engaging hook 1121 and a slot 1122 provided in the first housing 111. The slot 1122 is configured to accommodate the engaging member 610 on the first carrier body 500 or the second carrier body 600. The engaging hook 1121 is pivotally connected to the first housing 111 and has a locked position (see FIG. 12) and an unlocked position (see FIG. 13). When the engaging hook 1121 is at the locked position, the engaging hook 1121 at least partially extends into the slot 1122 to be engaged and locked with the engaging member 610 (see FIG. 36 and FIG. 37).

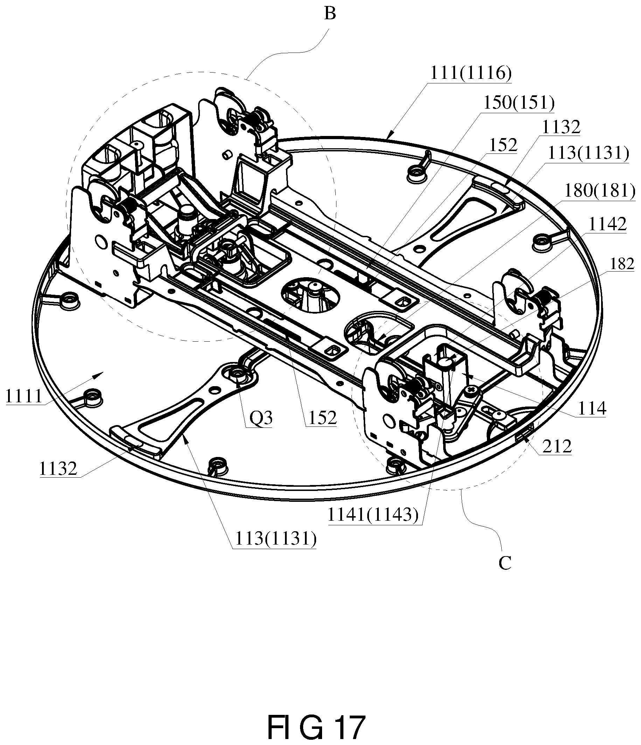

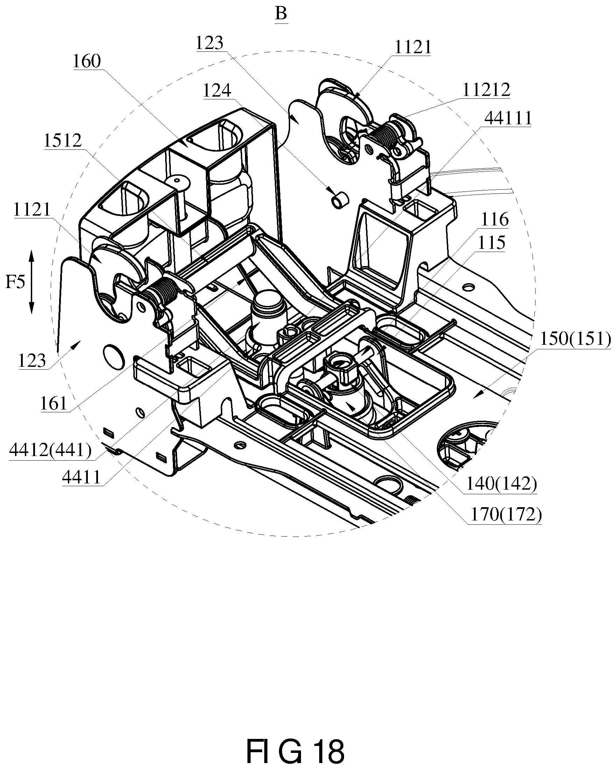

In an embodiment, as shown in FIG. 12 and FIG. 13, the engaging hook 1121 is provided with an accommodating groove 11212 matching the engaging member 610, the accommodating groove 11212 is U-shaped, and the accommodating groove 11212 has a pushing wall 11213 adapted to be pushed against by the engaging member 610 to drive the engaging hook 1121 to pivot from the unlocked position to the locked position. The first housing 111 has a first mounting cavity 1111. A wall of the slot 1122 is provided with a through hole (not shown). The through hole is in communication with the first mounting cavity 1111 and the slot 1122. Specifically, as shown in FIG. 17 and FIG. 18, the first mounting cavity 1111 is provided with a support frame 123, and the engaging hook 1121 is pivotally connected to the support frame 123 through a pivot shaft 124. When the engaging hook 1121 is at the locked position, the engaging hook 1121 at least partially passes through the through hole and extends into the slot 1122 to be engaged and locked with the engaging member 610. When the engaging hook 1121 is at the unlocked position, the engaging hook 1121 is withdrawn from the slot 1122 through the through hole.

Specifically, in this embodiment, as shown in FIG. 6 and FIG. 7, the first carrier body 500 and the second carrier body 600 are each provided with two engaging members 610 at the bottom along front-rear directions thereof. Two rows of slots 1122 are formed in the first housing 111. Each row of slots 1122 includes at least one slot 1122. Specifically, each row of slots 1122 includes two slots 1122. In other words, four slots 1122 are formed in the first housing 111. The four slots 1122 are arranged in the shape of a rectangle, and a distance between two rows of slots 1122 provided along the front and rear of the first positioning assembly 110 is equal to a distance between the two engaging members 610 on the first carrier body 500 or the second carrier body 600. Correspondingly, four engaging hooks 1121 are pivotally connected to the first housing 111, and each slot 1122 corresponds to one engaging hook 1121.

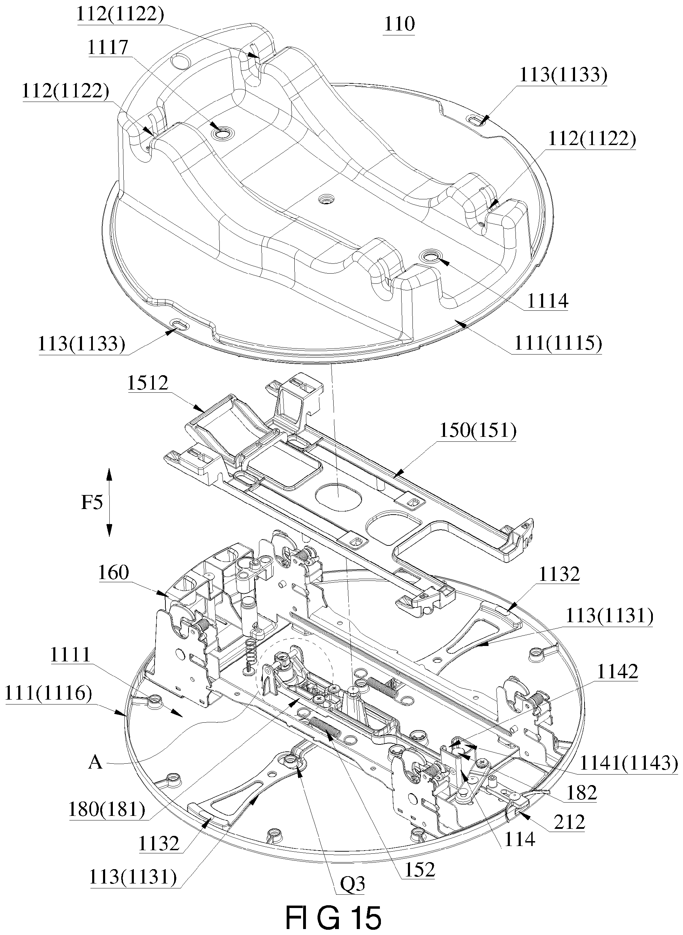

Referring to FIG. 15 to FIG. 18, in an embodiment, the positioning assembly 100 further includes a locking holding mechanism 150. The locking holding mechanism 150 is movably arranged in the first mounting cavity 1111. When the engaging hook 1121 is driven to the locked position, the locking holding mechanism 150 is configured to lock the engaging hook 1121 to the locked position.

Still referring to FIG. 15 to FIG. 18, in an embodiment, the locking holding mechanism 150 includes a first locking member 151. The first locking member 151 is movably arranged in the first mounting cavity 1111 and has a first position and a second position. Specifically, when the first positioning assembly 110 faces the first direction F1 or a third direction F3, a movement direction of the first locking member 151 is parallel to the first direction F1 or the third direction F3. More specifically, one of the first locking member 151 and the engaging hook 1121 is provided with a locking groove 1511 (see FIG. 13), and the other is provided with an engaging portion 11211. In other words, when the first locking member 151 is provided with the locking groove 1511, the engaging hook 1121 is provided with the engaging portion 11211. Alternatively, when the engaging hook 1121 is provided with the locking groove 1511, the first locking member 151 is provided with the engaging portion 11211. Specifically, as shown in FIG. 12 and FIG. 13, in this embodiment, the engaging hook 1121 is provided with the engaging portion 11211, and the first locking member 151 is provided with a locking concave portion 1511. More specifically, when the first locking member 151 is at the first position, the engaging portion 11211 is engaged with the locking groove 1511 to lock the engaging hook 1121 to the locked position (see FIG. 12). When the first locking member 151 is at the second position, the engaging portion 11211 is disengaged from the locking groove 1511 to allow the engaging hook 1121 to switch between the locked position and the unlocked position (see FIG. 13).

In an embodiment, as shown in FIG. 15, FIG. 17, and FIG. 19, the locking holding mechanism 150 further includes a third reset member 152, and the third reset member 152 is configured to provide an elastic restoring force for the first locking member 151 to hold the first locking member 151 at the first position. The third reset member 152 is, for example, a spring. In this way, when the engaging hook 1121 pivots from the unlocked position to the locked position, under the action of the third reset member 152, the first locking member 151 can be automatically switched to the first position, so that the locking groove 1511 of the first locking member 151 can be engaged with the engaging portion 11211 of the engaging hook 1121 to lock the engaging hook 1121 and hold the engaging hook 1121 at the locked position. In this way, stability and reliability of the mounting of the first carrier body 500 or the second carrier body 600 on the first positioning assembly 110 are improved.

In an embodiment, the first connecting mechanism 112 further includes a second reset member (not shown). The second reset member is configured to hold the engaging hook 1121 at the unlocked position. The second reset member is, for example, a torsion spring. The torsion spring sleeves the pivot shaft 124 and abuts against the engaging hook 1121. In this way, when the first locking member 151 moves to the second position, the locking groove 1511 is away from the engaging portion 11211, so that the engaging portion 11211 is detached from the locking groove 1511, and the engaging hook 1121 can automatically rotate around the pivot shaft 124 to be at the unlocked position. Therefore, unlocking can be performed conveniently and smoothly, and the problem of lockup of the engaging hook 1121 is unlikely to occur.

An operating principle and process of the first connecting mechanism 112 according to the first embodiment of the present disclosure are described below with reference to FIG. 6, FIG. 12, FIG. 13, FIG. 17, and FIG. 19.

When the first carrier body 500 or the second carrier body 600 is not mounted on the first positioning assembly 110, the engaging hook 1121 is held at the unlocked position under the action of the second reset member (see FIG. 13). At the same time, the engaging portion 11211 is withdrawn from the locking groove 1511.

When the first carrier body 500 or the second carrier body 600 is required to be mounted on the first positioning assembly 110, that is, the engaging member 610 is required to be connected to the first connecting mechanism 112, referring to FIG. 12, FIG. 13, FIG. 17, and FIG. 18, a user may first place the engaging member 610 into the slot 1122 and make the engaging member 610 abut against the pushing wall 11213 of the accommodating groove 11212. Then, the pushing wall 11213 of the accommodating groove 11212 is pushed downwards to drive the engaging hook 1121 to rotate, for example, clockwise in the viewing angle of FIG. 13, around the pivot shaft 124 (switch from FIG. 13 to FIG. 12) until the engaging hook 1121 extends into the slot 1122 to block a notch of the slot 1122. At the same time, after the engaging hook 1121 rotates, the engaging portion 11211 is opposite to the locking groove 1511, and the third reset member 152 drives the first locking member 151 to move to the first position, so that the locking groove 1511 is locked outside the engaging portion 11211. Finally, the engaging hook 1121 is held at the locked position to achieve a stable connection with the engaging member 610.

When the first carrier body 500 or the second carrier body 600 is required to be separated from the first positioning assembly 110, that is, the engaging member 610 is required to be detached from the first connecting mechanism 112, the user may move the first locking member 151 from the first position to the second position. In this process, the locking groove 1511 gradually moves away from the engaging portion 11211. During the movement, when the engaging portion 11211 is completely withdrawn from the locking groove 1511, under the action of the second reset member, the engaging hook 1121 automatically rotates, for example, counterclockwise in the viewing angle of FIG. 12, around the pivot shaft 124 (switching from FIG. 12 to FIG. 13), so that the engaging hook 1121 is withdrawn from the slot 1122, causing the notch of the slot 1122 to open.

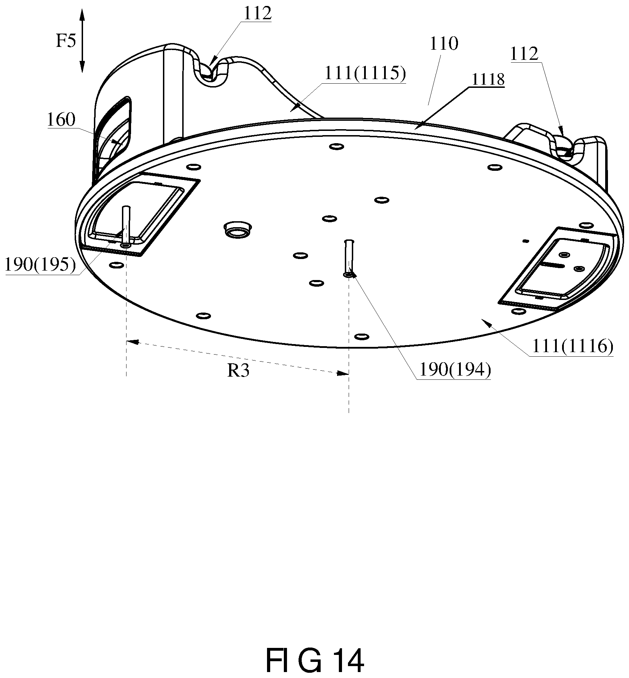

Referring to FIG. 14 to FIG. 18, in an embodiment, the positioning assembly 100 further includes a first unlocking member 160 movably arranged on the first positioning assembly 110, to facilitate the user to control the first locking member 151. The first unlocking member 160 is drivingly connected to the first locking member 151. The first unlocking member 160 is operable to drive the first locking member 151 to move from the first position to the second position. In this way, the user can switch the first locking member 151 from the first position to the second position by controlling the first unlocking member 160.

Referring to FIG. 18, in an embodiment, the first unlocking member 160 is provided with a driving slope 161. The first locking member 151 is further provided with a driving portion 1512. The driving portion 1512 is adapted to be pushed against by the driving slope 161 and slide along the driving slope 161, so that the first locking member 151 can switch between the first position and the second position. Specifically, the first unlocking member 160 moves along a fifth direction F5 on the first housing 111. The fifth direction F5 may be regarded as being perpendicular to a bottom surface of the first housing 111.

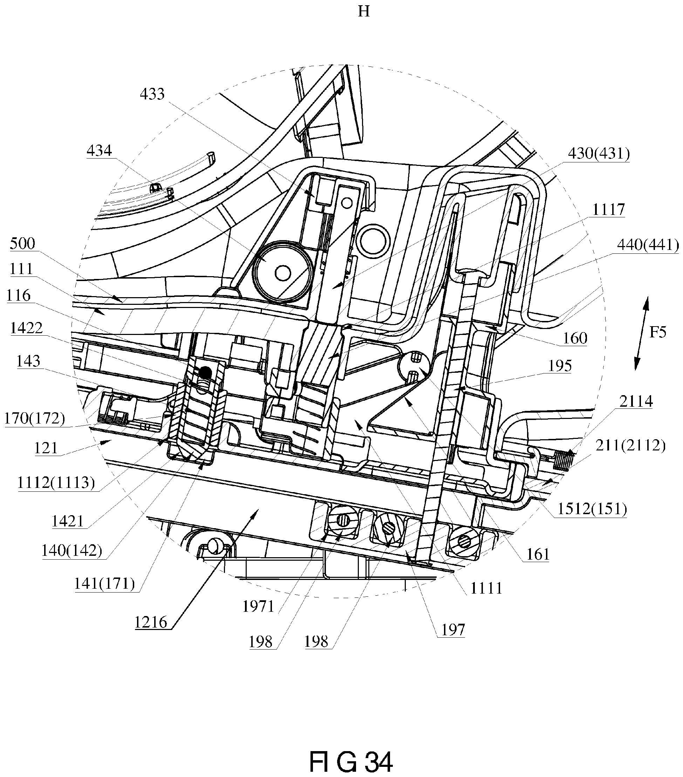

Referring to FIG. 17 and FIG. 18, a fitting relationship between the first unlocking member 160 and the first driving member 310 is briefly described. Specifically, when the first locking member 151 is at the first position, the driving portion 1512 of the first locking member 151 abuts against a top end of the driving slope 161 of the first unlocking member 160. As shown in FIG. 34 and FIG. 37, when the first unlocking member 160 is pushed upwards along the fifth direction F5, under guidance and driving of the driving slope 161, the driving portion 1512 gradually moves to a bottom end of the driving slope 161, thereby causing the first locking member 151 to move to the second position, so that the engaging portion 11211 can be detached from the locking groove 1511.

Referring to FIG. 15 and FIG. 17, in an embodiment, the first housing 111 has an indication mechanism 113. The indication mechanism 113 indicates according to a relative position of the first locking member 151 and the first housing 111 that the engaging hook 1121 is at the locked position or the unlocked position. Specifically, as shown in FIG. 15, the first housing 111 includes a first top cover 1115 and a first bottom cover 1116 connected up and down, and the first top cover 1115 and the first bottom cover 1116 define the first mounting cavity 1111. The slot 1122 is formed in the first top cover 1115. Specifically, the indication mechanism 113 includes a swinging member 1131, a color block 1132, and an observation hole 1133. The swinging member 1131 is pivotally connected to a side of the first bottom cover 1116 facing the first mounting cavity 1111 and forms a third pivot point Q3. Moreover, one end of the swinging member 1131 is pivotally connected to the first locking member 151, and the other end of the swinging member 1131 is provided with the color block 1132 (e.g., green). The first top cover 1115 is provided with the observation hole 1133. As can be seen from the above, when the first unlocking member 160 is operated (e.g., pushed upwards along the fifth direction F5), the first locking member 151 may move from the first position to the second position. In this case, an end of the swinging member 1131 away from the color block 1132 moves with the first locking member 151 to make the entire swinging member 1131 pivot. Then, the end of the swinging member 1131 provided with the color block 1132 can be moved. In this way, the user can determine the position of the first locking member 151 according to whether the color block 1132 is displayed at the observation hole 1133, and then infer the position of the engaging hook 1121. Specifically, in this embodiment, when the first locking member 151 is at the first position, the color block 1132 is opposite to the observation hole 1133, and the user may view the color block 1132 through the observation hole 1133. When the first locking member 151 is at the second position, the color block 1132 is misaligned with the observation hole 1133, and the user may not view the color block 1132 through the observation hole 1133. Therefore, when the color block 1132 is viewed through the observation hole 1133, it indicates that the engaging hook 1121 is at the locked position, and when the color block 1132 is not viewed through the observation hole 1133, it indicates that the engaging hook 1121 is at the unlocked position. Certainly, in this embodiment, when the first locking member 151 is at the first position, the color block 1132 is misaligned with the observation hole 1133, and the user may not view the color block 1132 through the observation hole 1133. When the first locking member 151 is at the second position, the color block 1132 is opposite to the observation hole 1133, and the user may view the color block 1132 through the observation hole 1133. Alternatively, each swinging member 1131 is provided with two color blocks 1132 in different colors (e.g., red and green), the color blocks 1132 in two colors respectively correspond to the first locking member 151 at the first position and the second position, and the user views the color block 1132 through the observation hole 1133 to judge whether the engaging hook 1121 is at the locked position or the unlocked position.

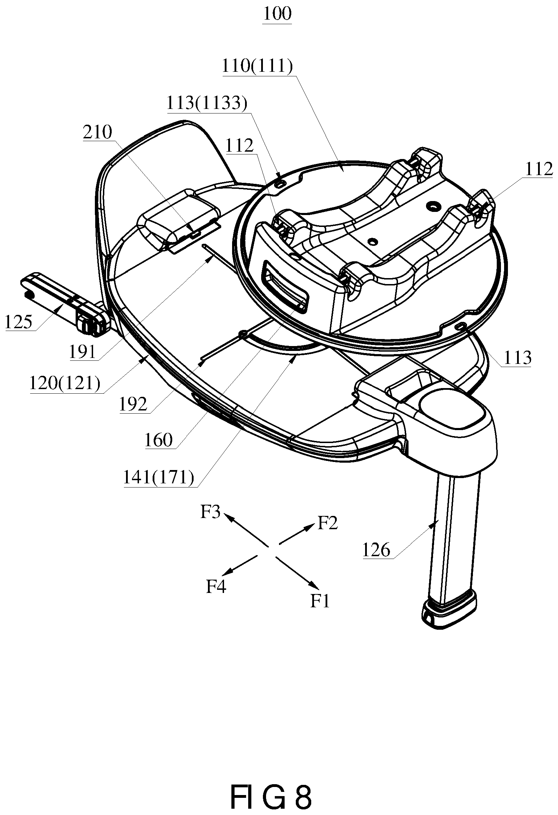

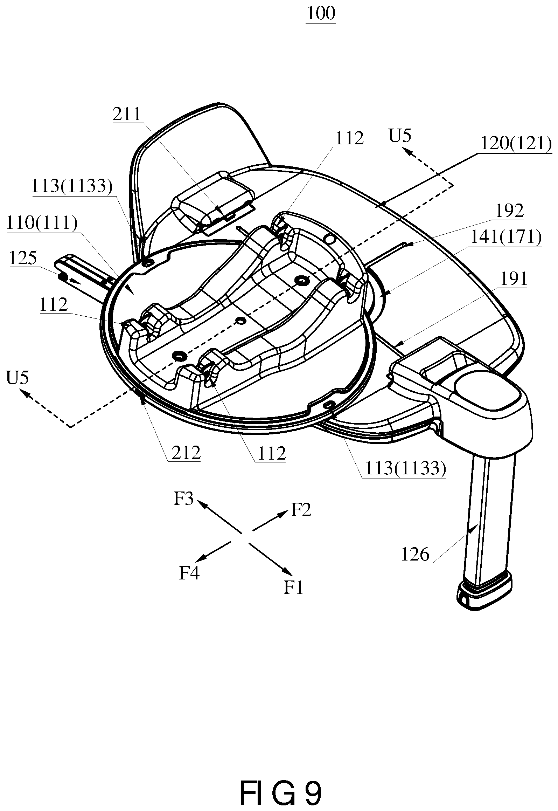

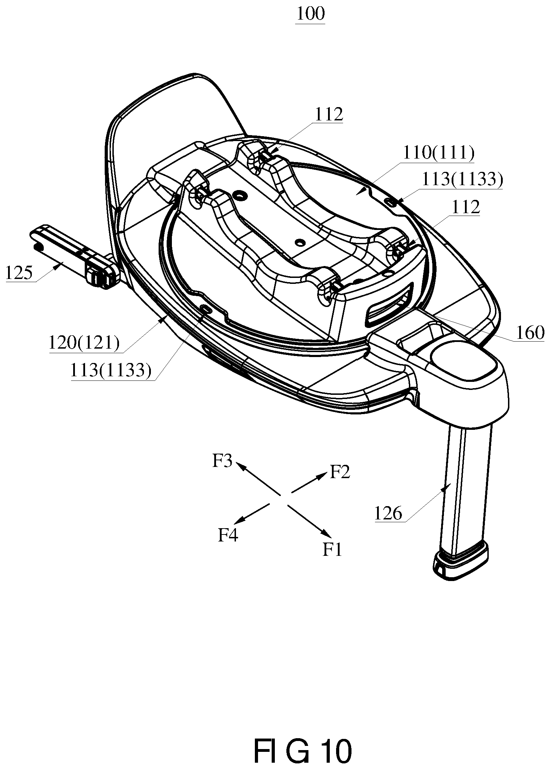

Referring to FIG. 7, FIG. 8, FIG. 22, and FIG. 23, in an embodiment, the positioning assembly 100 further includes a rotation moving mechanism 190. The first positioning assembly 110 may rotate relative to the second positioning assembly 120 through the rotation moving mechanism 190. Specifically, for example, a child sits in the first carrier body 500. When the positioning assembly 100 is mounted on the car seat, the first carrier body 500 is mounted on the first positioning assembly 110, and the child sits in the first carrier body 500, under the action of the rotation moving mechanism 190, the first positioning assembly 110 (or the first carrier body 500) may be mounted towards the first direction F1 (see FIG. 7) or away from the first direction F1 (i.e., the third direction F3) (see FIG. 10). Certainly, under the action of the rotation moving mechanism 190, the first positioning assembly 110 (or the first carrier body 500) may alternatively face a second direction F2 (see FIG. 8) or a fourth direction F4 (see FIG. 9). In this way, it is convenient for the user to put the child into the first carrier body 500 or to take the child out of the first carrier body 500.

It is to be noted that the first direction F1 and the third direction F3 above are parallel and opposite in direction. In this embodiment, the third direction F3 may be regarded as a direction towards the rear of the car, that is, the rear of the car in the normal traveling direction. The second direction F2 and the fourth direction F4 above are parallel and opposite in direction, which may be regarded as left and right directions of the car during normal traveling. The second direction F2 faces a left door of the car, and the fourth direction F4 faces a right door of the car.

In order to further improve convenience for the user to put in or pick up the child when the first carrier body 500 faces the second direction F2 or the fourth direction F4, in an embodiment, the first positioning assembly 110 is slidably connected to the second positioning assembly 120 through the rotation moving mechanism 190, and the first positioning assembly 110 simultaneously slides and rotates relative to the sliding of the second positioning assembly 120. In this way, for example, when the user switches the first carrier body 500 from facing the first direction F1 to facing the second direction F2, the first carrier body 500 can rotate relative to the second positioning assembly 120 to change an orientation and can also be pulled out relative to the second positioning assembly 120 to be closer to the door, making it easier to pick up or put in the child. Relative to a traditional rotation mechanism, the rotation moving mechanism 190 can allow the first positioning assembly 110 to rotate relative to the second positioning assembly 120 and move laterally, without the need to first turn and then pull out laterally as in the traditional manner. In this way, convenience of the operation is improved.

In an embodiment, as shown in FIG. 14 and FIG. 22 to FIG. 24, the rotation moving mechanism 190 includes a first rail 191, a second rail 192, a first slider 194, and a second slider 195. The first rail 191 extends along the first direction F1. The second rail 192 intersects the first rail 191. An intersection point 193 is formed at an intersection of the first rail 191 and the second rail 192. Specifically, the second rail 192 intersects the first rail 191 vertically. That is, the second rail 192 extends towards the second direction F2. More specifically, both the first rail 191 and the second rail 192 are divided into two groove sections by the intersection point 193. One groove section (which may be referred to as a first groove section) of the first rail 191 may be regarded as extending from the intersection point 193 towards the first direction F1, and the other groove section (which may be referred to as a second groove section) of the first rail 191 may be regarded as extending from the intersection point 193 towards the third direction F3. One groove section (which may be referred to as a third groove section) of the second rail 192 may be regarded as extending from the intersection point 193 towards the second direction F2, and the other groove section (which may be referred to as a fourth groove section) of the second rail 192 may be regarded as extending from the intersection point 193 towards the fourth direction F4. In this embodiment, the four groove sections are equal in length. The first slider 194 and the second slider 195 are arranged at intervals on the first positioning assembly 110. The first slider 194 is configured to slide in the second rail 192. The second slider 195 is configured to slide in the first rail 191.

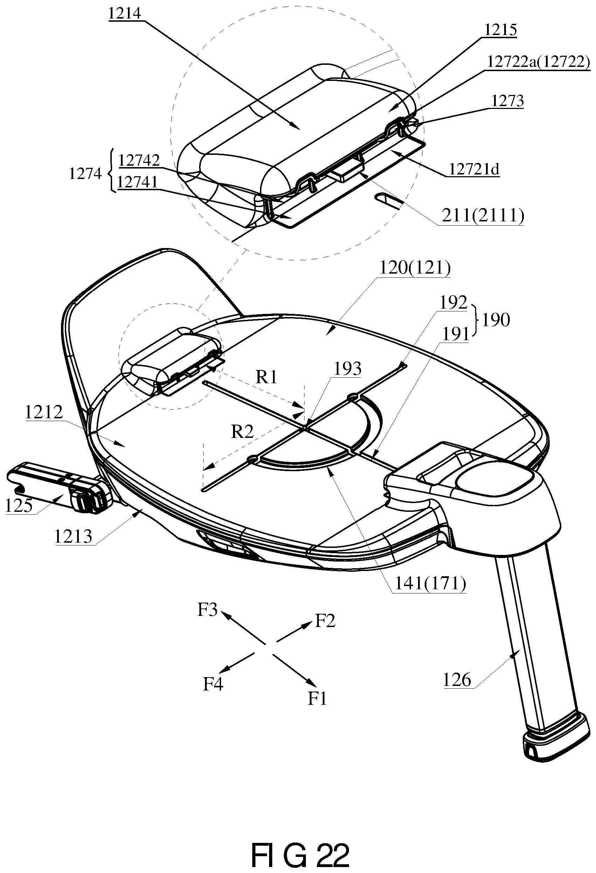

Referring to FIG. 14 and FIG. 22, in an embodiment, a distance R1 between the intersection point 193 and two ends of the first rail 191 is greater than or equal to a distance R3 between the first slider 194 and the second slider 195. That is, R1≥R3. A distance R2 between the intersection point 193 and two ends of the second rail 192 is greater than or equal to the distance R3 between the first slider 194 and the second slider 195. That is, R2≥R3. Specifically, in this embodiment, R1=R2=R3.

Specifically, when the first slider 194 is at the intersection point 193, the second slider 195 is located in the first rail 191, and the first positioning assembly 110 faces or faces away from the first direction F1 relative to the second positioning assembly 120. That is, the first positioning assembly 110 may face the first direction F1 relative to the second positioning assembly 120 (see FIG. 7), or the first positioning assembly 110 may face the third direction F3 relative to the second positioning assembly 120 (see FIG. 10). When the second slider 195 is at the intersection point 193, the first slider 194 is located in the second rail 192, and the first positioning assembly 110 faces or faces away from the second direction F2 relative to the second positioning assembly 120. That is, the first positioning assembly 110 may face the second direction F2 relative to the second positioning assembly 120 (see FIG. 8), or the first positioning assembly 110 may face the fourth direction F4 relative to the second positioning assembly 120 (see FIG. 9). In some non-limiting embodiments, the second slider 195 is closer to the front of the first positioning assembly 110 than the first slider 194. In some non-limiting embodiments, the first positioning assembly 110 has a circular shape, and the first slider 194 is located at a center point of the first positioning assembly 110. When the first positioning assembly 110 faces the first direction F1 or the third direction F3 relative to the second positioning assembly 120, the intersection point 193 overlaps with the center point of the first positioning assembly 110 in a direction perpendicular to a plane in which the first rail 191 and the second rail 192 are located.

A principle and a process of simultaneous sliding and rotating of the first positioning assembly 110 relative to the second positioning assembly 120 through the rotation moving mechanism 190 are briefly described below with reference to FIG. 14 and FIG. 21 to FIG. 23.

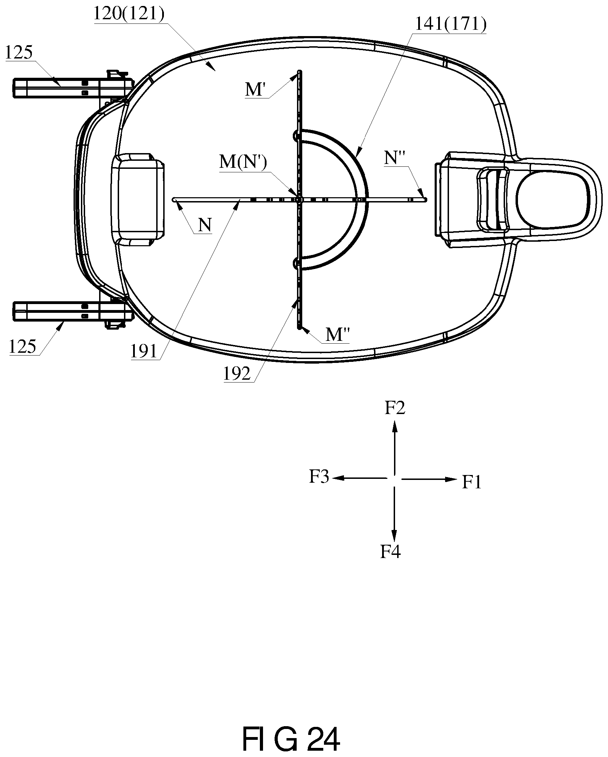

In an embodiment, referring to FIG. 24 together, when the first positioning assembly 110 faces the first direction F1 relative to the second positioning assembly 120, the first slider 194 is at the intersection point 193, i.e., Point M, and the second slider 195 is at Point N of the first rail 191.

When the user needs to switch the first positioning assembly 110 from facing the first direction F1 to facing the second direction F2 relative to the second positioning assembly 120, that is, needs to change the first positioning assembly 110 from facing the front to facing the left relative to the second positioning assembly 120 (switch from FIG. 7 to FIG. 8), the user may pull the first positioning assembly 110 to the left, and at the same time, the first positioning assembly 110 has a tendency to rotate counterclockwise around the first slider 194. In this way, the first slider 194 can be moved from Point M to Point M' in the second rail 192, and at the same time, the second slider 195 is synchronously moved from Point N to Point N' in the first rail 191. In this process, the first positioning assembly 110 gradually begins to rotate relative to the second positioning assembly 120 and may move laterally (specifically, along a left direction) relative to the second positioning assembly 120. When the first slider 194 moves to M', the second slider 195 is at Point N', i.e., the intersection point 193, a position of the first positioning assembly 110 relative to the second positioning assembly 120 is shown in FIG. 8. It is to be noted that a process of the orientation and the position of the first positioning assembly 110 relative to the second positioning assembly 120 from the state in FIG. 7 to the state in FIG. 8 is reversible. That is, the orientation of the first positioning assembly 110 relative to the second positioning assembly 120 may alternatively be switched from facing the second direction F2 to facing the first direction F1.

When the user needs to switch the first positioning assembly 110 from facing the first direction F1 to facing the fourth direction F4 relative to the second positioning assembly 120, that is, needs to change the first positioning assembly 110 from facing the front to facing the right relative to the second positioning assembly 120 (switch from FIG. 7 to FIG. 9), the user may pull the first positioning assembly 110 to the right, and at the same time, the first positioning assembly 110 has a tendency to rotate clockwise around the first slider 194. In this way, the first slider 194 can be moved from Point M to Point M'' in the second rail 192, and at the same time, the second slider 195 is synchronously moved from Point N to Point N' in the first rail 191. In this process, the first positioning assembly 110 gradually begins to rotate relative to the second positioning assembly 120 and may move laterally (specifically, along a right direction) relative to the second positioning assembly 120. When the first slider 194 moves to M'', the second slider 195 is at Point N', i.e., the intersection point 193, the position of the first positioning assembly 110 relative to the second positioning assembly 120 is shown in FIG. 9. It is to be noted that a process of the orientation and the position of the first positioning assembly 110 relative to the second positioning assembly 120 from the state in FIG. 7 to the state in FIG. 9 is reversible. That is, the orientation of the first positioning assembly 110 relative to the second positioning assembly 120 may alternatively be switched from facing the fourth direction F4 to facing the first direction F1.

Referring to FIG. 8 and FIG. 10, the user may switch the first positioning assembly 110 from facing the second direction F2 to facing the third direction F3 relative to the second positioning assembly 120. Alternatively, referring to FIG. 9 and FIG. 10, the user may switch the first positioning assembly 110 from facing the fourth direction F4 to facing the third direction F3 relative to the second positioning assembly 120. Switching of the first positioning assembly 110 from facing the second direction F2 to facing the third direction F3 relative to the second positioning assembly 120 will be described below. Specifically, the user may pull the first positioning assembly 110, and at the same time, the first positioning assembly 110 has a tendency to rotate counterclockwise around the first slider 194. In this way, the second slider 195 can be moved from Point N' to Point N'' in the first rail 191, and at the same time, the first slider 194 is synchronously moved from Point M' to Point M in the second rail 192. In this process, the first positioning assembly 110 gradually begins to rotate relative to the second positioning assembly 120, and at the same time, a rear end of the first positioning assembly 110 may move towards the first direction F1 relative to the second positioning assembly 120. When the second slider 195 moves to N'', the first slider 194 is at Point M, i.e., the intersection point 193, the position of the first positioning assembly 110 relative to the second positioning assembly 120 is shown in FIG. 10. It is to be noted that a process of the orientation and the position of the first positioning assembly 110 relative to the second positioning assembly 120 from the state in FIG. 8 to the state in FIG. 10 is reversible. That is, the orientation of the first positioning assembly 110 relative to the second positioning assembly 120 may alternatively be switched from facing the third direction F3 to facing the second direction F2.

When the user needs to switch the first positioning assembly 110 from facing the third direction F3 to facing the fourth direction F4 relative to the second positioning assembly 120, that is, needs to change the first positioning assembly 110 from facing the rear to facing the right relative to the second positioning assembly 120 (switch from FIG. 10 to FIG. 9), the first positioning assembly 110 is directly pulled, and the first positioning assembly 110 has a tendency to rotate counterclockwise around the first slider 194. In this way, the first slider 194 can be moved from Point M to Point M'' in the second rail 192, and the second slider 195 is synchronously moved from Point N'' to Point N' in the first rail 191. Similarly, when the user needs to switch the first positioning assembly 110 from facing the fourth direction F4 to facing the first direction F1 relative to the second positioning assembly 120, that is, needs to change the first positioning assembly 110 from facing the right to facing the front relative to the second positioning assembly 120 (switch from FIG. 9 to FIG. 7), the first positioning assembly 110 is directly pulled, and the first positioning assembly 110 has a tendency to rotate counterclockwise around the first slider 194. In this way, the second slider 195 can be moved from Point N' to Point N in the first rail 191, and the first slider 194 is synchronously moved from Point M'' to Point M in the second rail 192.

In this embodiment, a shape of a projection of the first positioning assembly 110 on the second positioning assembly 120 is symmetrical about a rotation axis of the first positioning assembly 110. An overlapping region and range when the first positioning assembly 110 rotates towards the first direction F1 relative to the second positioning assembly 120 are the same as those when the first positioning assembly 110 rotates towards the third direction F3 relative to the second positioning assembly 120. In this embodiment, the shape of the projection of the first positioning assembly 110 on the second positioning assembly 120 is a circle. In other embodiments, the shape of the projection of the first positioning assembly 110 on the second positioning assembly 120 may alternatively be other centrally symmetrical figures that are symmetrical about the rotation axis of the first positioning assembly 110.

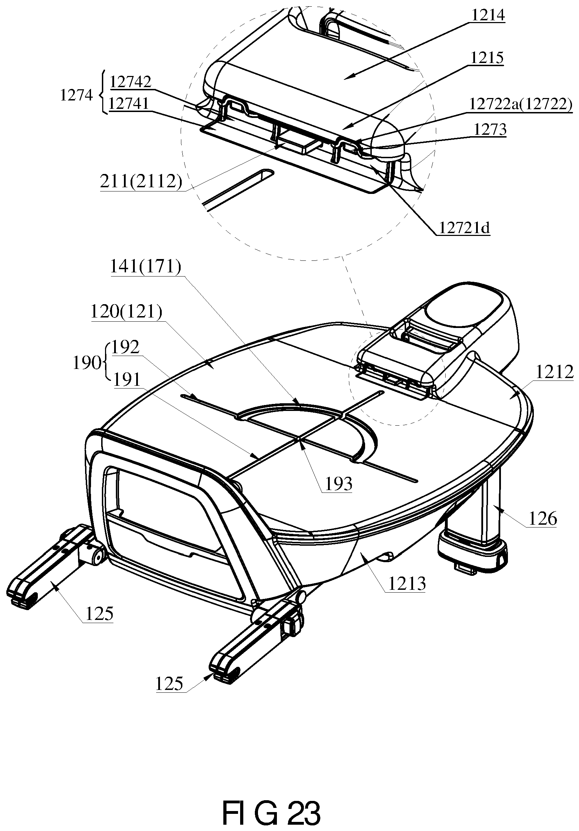

Referring to FIG. 23 to FIG. 28, in an embodiment, the second positioning assembly 120 includes a second housing 121, the second housing 121 has a second mounting cavity 1211, and the second mounting cavity 1211 is in communication with the first rail 191 and the second rail 192. Specifically, the second housing 121 includes a second top cover 1212 and a second bottom cover 1213 connected to each other. A second mounting cavity 1211 is formed between the second top cover 1212 and the second bottom cover 1213. In this embodiment, the second top cover 1212 and the second bottom cover 1213 are arranged up and down. The second top cover 1212 and the second bottom cover 1213 both have a shell structure, and the second top cover 1212 and the second bottom cover 1213 cover up and down to form a second mounting cavity 1211. The first rail 191 and the second rail 192 are both formed on the second top cover 1212. Certainly, in some other embodiments not shown, the second bottom cover 1213 may have a shell structure, the second mounting cavity 1211 with an opening is formed inside, and the second top cover 1212 has a flat structure and covers the opening of the second mounting cavity 1211. The second top cover 1212 may be connected to the second bottom cover 1213 through a connector such as a screw.

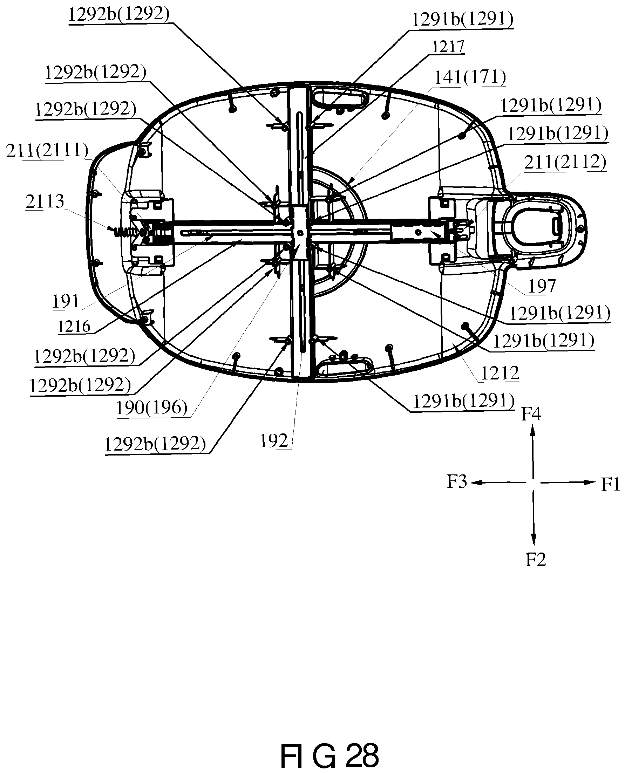

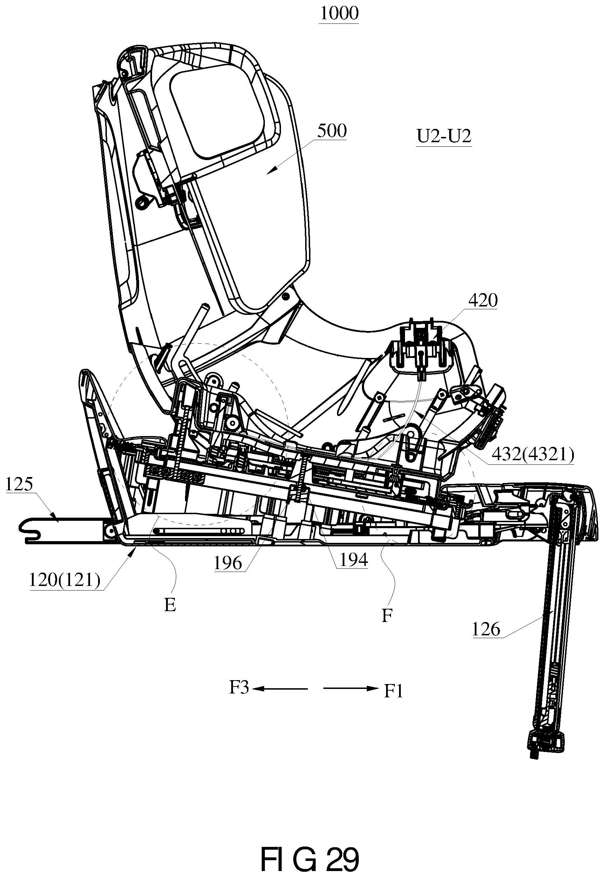

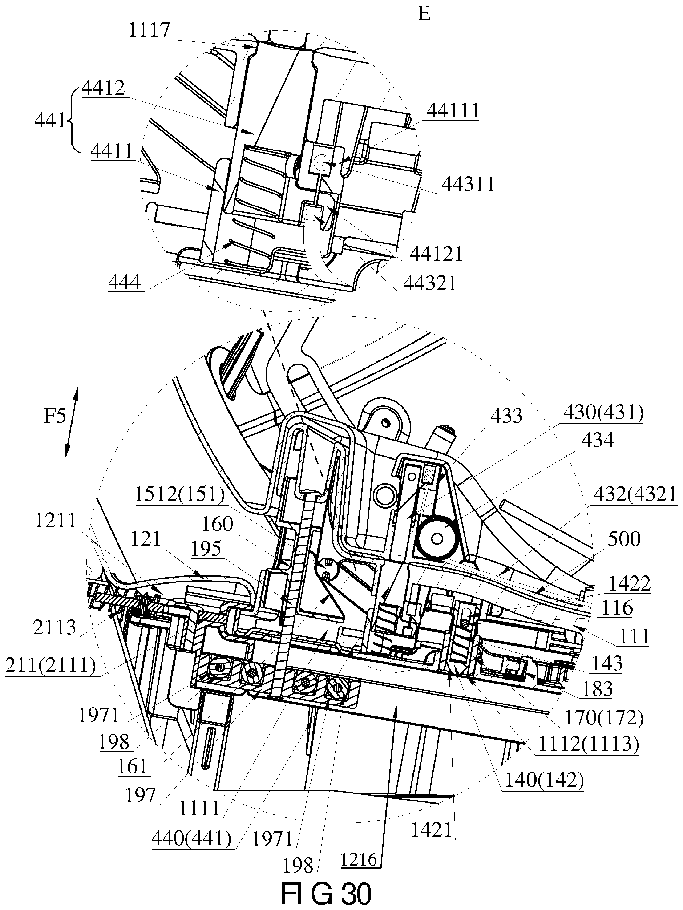

Referring to FIG. 28, in an embodiment, the rotation moving mechanism 190 further includes a first sliding block 196 and a second sliding block 197. The first sliding block 196 is located in the second mounting cavity 1211 and is connected to the first slider 194 (see FIG. 29 and FIG. 30), and the first sliding block 196 is blocked by an inner wall of the second mounting cavity 1211 to limit the first slider 194 in the second rail 192. The second sliding block 197 is located in the second mounting cavity 1211 and is connected to the second slider 195 (see FIG. 30), and the second sliding block 197 is blocked by an inner wall of the second mounting cavity 1211 to limit the second slider 195 in the first rail 191. In this way, detachment of the first positioning assembly 110 from the second positioning assembly 120 when sliding relative to the second positioning assembly 120 can be prevented.

Specifically, the second mounting cavity 1211 further has a first channel 1216 and a second channel 1217. The first channel 1216 is in communication with the first rail 191. The second sliding block 197 is capable of sliding along the first channel 1216. The second slider 195 is capable of sliding along the first rail 191. The second channel 1217 is in communication with the second rail 192. The first sliding block 196 is capable of sliding along the second channel 1217. The first slider 194 is capable of sliding along the second rail 192. A direction of length of the first channel 1216 crosses a direction of length of the second channel 1217. More specifically, in this embodiment, a direction of length (that is, a size corresponding to the first direction F1 or the third direction F3 in this embodiment) of the first channel 1216 crosses a direction of length (that is, a size corresponding to the second direction F2 or the fourth direction F4 in this embodiment) of the second channel 1217 vertically. A direction of width of the first channel 1216 intersects a direction of width of the second channel 1217. More specifically, in this embodiment, a direction of width (that is, a size corresponding to the second direction F2 or the fourth direction F4 in this embodiment) of the first channel 1216 crosses a direction of width (that is, a size corresponding to the first direction F1 or the third direction F3 in this embodiment) of the second channel 1217 vertically. A size of the second sliding block 197 along the direction of length of the first channel 1216 is greater than a width of the second channel 1217, and a size of the first sliding block 196 along the direction of length of the second channel 1217 is greater than a width of the first channel 1216. In this way, the first slider 194 can be limited to sliding in the second rail 192, preventing the first slider 194 from changing to slide along the first rail 191. The second slider 195 can be limited to sliding in the first rail 191, preventing the second slider 195 from changing to slide along the second rail 192. The first channel 1216 is in communication with the second channel 1217. In this embodiment, a length of the first channel 1216 is greater than a length of the first rail 191, and a length of the second channel 1217 is greater than a length of the second rail 192. In this embodiment, two wall bodies (or referred to as the first wall bodies) disposed opposite to each other are formed from a lower surface of the second top cover 1212 toward the second mounting cavity 1211, and the first channel 1216 is formed between the two wall bodies. Two other wall bodies (or referred to as the second wall bodies) disposed opposite to each other by a lower surface of the second top cover 1212 extend toward the second mounting cavity 1211, and a second channel 1217 is formed between the two wall bodies. In some embodiments, the wall body forming the first channel 1216 may also extend from the second bottom cover 1213, and the wall body forming the second channel 1217 may also extend from the second bottom cover 1213, which are not limited herein.

Specifically, as shown in FIG. 30, FIG. 34, and FIG. 37, a side of the second sliding block 197 facing the second top cover 1212 is provided with a groove 1971, and a sliding wheel 198 is mounted in the groove 1971. Part of a wheel surface of the sliding wheel 198 protrudes from the groove 1971 and slidably abuts against a wall surface of the second top cover 1212 provided with the first rail 191. Through the arrangement of the sliding wheel 198, smoothness of movement of the second slider 195 in the first rail 191 can be improved. More specifically, the second sliding block 197 is provided with four grooves 1971, and one sliding wheel 198 is mounted in each groove 1971. Certainly, numbers of the groove 1971 and the sliding wheel 198 on the second rail 192 are not limited to four, which may be, for example, one, two, three, five, or more. More specifically, in this embodiment, the first sliding block 196 may be similar to the second sliding block 197 and also provided with a groove 1971 and a sliding wheel 198. For specific positions and numbers, refer to the groove 1971 and the sliding wheel 198 on the second sliding block 197. As can be seen from the foregoing description, the first positioning assembly 110 can freely rotate relative to the second positioning assembly 120 under the action of the rotation moving mechanism 190. That is, the first positioning assembly 110 may rotate to face any one of the first direction F1, the second direction F2, the third direction F3, and the fourth direction F4 relative to the second positioning assembly 120. Therefore, when the first carrier body 500 (e.g., the child safety seat) is connected to the first positioning assembly 110, the first carrier body 500 may also face any one of the first direction F1, the second direction F2, the third direction F3 and the fourth direction F4 along with the first positioning assembly 110. However, when the second carrier body 600 (e.g., the infant safety carrier) is connected to the first positioning assembly 110, in consideration of safety of sitting of the infant, the second carrier body 600 can face any one of the second direction F2, the third direction F3 and the fourth direction F4 along with the first positioning assembly 110, but cannot rotate towards the first direction F1 along with the first positioning assembly 110. However, when the first positioning assembly 110 is connected to the first carrier body 500 and the first positioning assembly 110 faces the first direction F1, if the user directly detaches the first carrier body 500 from the first positioning assembly 110 and connects the second carrier body 600 to the first positioning assembly 110, the second carrier body 600 may face the first direction F1, leading to a safety hazard. Regarding this, in order to prevent the user from detaching the first carrier body 500 towards the first direction F1 from the first positioning assembly 110 without noticing, the positioning assembly 100 in the present disclosure further includes a first limiting mechanism 140. The first limiting mechanism 140 is arranged between the first positioning assembly 110 and the second positioning assembly 120 and configured to selectively allow or restrict detachment of the first carrier body 500 relative to the first positioning assembly 110. Specifically, when the first positioning assembly 110 rotates towards the first direction F1 relative to the second positioning assembly 120, the first limiting mechanism 140 is configured to restrict the first carrier body 500 from being detached from the first positioning assembly 110. When the first positioning assembly 110 rotates towards the second direction F2, the third direction F3, or the fourth direction F4 relative to the second positioning assembly 120, the first limiting mechanism 140 can allow the first carrier body 500 to be detached from the first positioning assembly 110. Therefore, when needing to remove the first carrier body 500 from the first positioning assembly 110, the user needs to first rotate the first positioning assembly 110 towards a direction except the first direction F1, that is, towards the second direction F2, the third direction F3, or the fourth direction F4.

An operating principle of the first limiting mechanism 140 is briefly described below with reference to the figures.

Referring to FIG. 15, FIG. 16, and FIG. 22, in an embodiment, the first limiting mechanism 140 is arranged between the first positioning assembly 110 and the second positioning assembly 120 and configured to selectively allow or restrict switching of the first connecting mechanism 112 between the locked state and the unlocked state. In this embodiment, when the first positioning assembly 110 is configured to be connected to the first carrier body 500 and faces the first direction F1, the first limiting mechanism 140 enters a movement path of the locking holding mechanism 150 to restrict movement of the locking holding mechanism 150, so as to restrict the first connecting mechanism 112 from switching from the locked state to the unlocked state.

Specifically, the first limiting mechanism 140 includes a first limiting groove 141 and a first limiting member 142. The first limiting groove 141 is arranged on a surface of the second positioning assembly 120 facing the first positioning assembly 110. Specifically, the first limiting groove 141 is arranged on the second top cover 1212 of the second housing 121. The first limiting member 142 is movably arranged on the first positioning assembly 110 and can be inserted into or withdrawn from the first limiting groove 141. Specifically, as shown in FIG. 29 and FIG. 30, the first bottom cover 1116 of the first housing 111 is provided with a first limiting hole 1112, the first limiting hole 1112 is in communication with the first mounting cavity 1111, the first limiting member 142 is movably arranged in the first mounting cavity 1111, and at least part of the first limiting member 142 can extend out of the first mounting cavity 1111 through the first limiting hole 1112 (see FIG. 34). When the first limiting member 142 extends out of the first mounting cavity 1111 through the first limiting hole 1112 and is inserted into the first limiting groove 141, the first limiting member 142 allows the first connecting mechanism 112 to switch to the unlocked state, and the first carrier body 500 is allowed to be detached from the first positioning assembly 110. When the first limiting member 142 is withdrawn from the first limiting groove 141, the first limiting member 142 restricts the first connecting mechanism 112 from switching to the unlocked state, and the first carrier body 500 is restricted from being detached from the first positioning assembly 110. Specifically, when the first positioning assembly 110 rotates towards the first direction F1 relative to the second positioning assembly 120, the first limiting member 142 is withdrawn from the first limiting groove 141. In this way, the first carrier body 500, when facing the first direction F1, cannot be removed from the first positioning assembly 110.

Specifically, the first positioning assembly 110 has a rotation axis, and the first limiting member 142 deviates from the rotation axis. In this embodiment, a straight line passing through the rotation axis and perpendicular to the first direction F1 is defined as a control straight line, and when the first positioning assembly 110 faces the first direction F1, the first limiting member 142 and the first limiting groove 141 are misaligned and respectively located on two sides of the control straight line. More specifically, in this embodiment, in a case that the first positioning assembly 110 has a substantially circular structure, the rotation axis may be regarded as a center of a circle of the first positioning assembly 110. Specifically, the first limiting groove 141 is a semicircular groove (see FIG. 22), and a radius of the semicircular groove is a distance between the first limiting member 142 and the center of the circle of the first positioning assembly 110. More specifically, a notch of the semicircular groove faces the third direction F3, and when the first positioning assembly 110 rotates away from the first direction F1 (i.e., towards the third direction F3) relative to the second positioning assembly 120, the first limiting member 142 is located at a midpoint of the first limiting groove 141. It is to be noted that in this embodiment, the first slider 194 is provided at the rotation axis of the first positioning assembly 110, and the second rail 192 is used for the displacement and sliding of the first slider 194. Therefore, the second rail 192 in this embodiment is also a linear trajectory of displacement of the rotation axis of the first positioning assembly 110. Certainly, in other embodiments, the first positioning assembly 110 may be in another symmetrical shape (such as an oval or a rectangle), and the rotation axis may be a geometric center position of the first positioning assembly 110 or deviate from the geometric center position. Alternatively, the first positioning assembly 110 may be in an asymmetrical shape, and the rotation axis may be set according to an actual requirement.

In this embodiment, a radius of the first limiting groove 141 is equal to a half of a distance between the first slider 194 and the second slider 195, or a radius of the first limiting groove 141 is equal to one quarter of the first rail 191 or the second rail 192. The first limiting member 142 is located at a midpoint position between the first slider 194 and the second slider 195. The center point of the first limiting groove 141 is located at an intersection point 193 between the first rail 191 and the second rail 192. The first limiting groove 141 and the second rail 192 have two intersections, and the two intersections are respectively located at a midpoint position of the third groove section of the second rail 192 and a midpoint position of the fourth groove section of the second rail 192. The first limiting groove 141 and the second rail 192 have an intersection point, and the intersection point is located at a midpoint position of the first groove section of the first rail 191. Certainly, in other embodiments, the first limiting groove 141 may also have other shapes, such as an ellipse, and the first limiting member 142 may deviate from a midpoint position between the first slider 194 and the second slider 195.

As can be seen from the foregoing description, the first carrier body 500 is detachably connected to the first housing 111 through the first connecting mechanism 112. Specifically, when the first locking member 151 is at the first position, the engaging hook 1121 is at the locked position. In this case, the first carrier body 500 cannot be removed from the first connecting mechanism 112. When the first locking member 151 is at the second position, the engaging hook 1121 is at the unlocked position. In this case, the first carrier body 500 can be removed from the first connecting mechanism 112. As can be seen, the position of the first locking member 151 is associated with whether the first carrier body 500 can be removed from the first positioning assembly 110. Specifically, when the first locking member 151 is at the first position, the first carrier body 500 cannot be removed from the first positioning assembly 110. When the first locking member 151 is at the second position, the first carrier body 500 can be removed from the first positioning assembly 110. In this embodiment, when the first limiting member 142 is withdrawn from the first limiting groove 141, correspondingly, the first limiting member 142 is located on a movement path of the first locking member 151. In this way, the first locking member 151 can be restricted from moving from the first position to the second position, thereby restricting the engaging hook 1121 from switching from the locked position to the unlocked position, and the engaging hook 1121 is held at the locked position, so that the notch of the slot 1122 is blocked. The engaging member 610 of the first carrier body 500 cannot be removed from the slot 1122. That is, the first carrier body 500 cannot be removed from the first positioning assembly 110. When the first limiting member 142 is inserted into the first limiting groove 141, correspondingly, the first limiting member 142 deviates from the movement path of the first locking member 151. In this way, the first locking member 151 can be allowed to move to cause the engaging hook 1121 to switch from the locked position to the unlocked position, so that the notch of the slot 1122 is open, and the engaging member 610 of the first carrier body 500 can be removed from the slot 1122, thereby completing removal of the first carrier body 500 from the first positioning assembly 110.

Referring to FIG. 18 and FIG. 30, in this embodiment, according to the foregoing description, when the first carrier body 500 is connected to the first positioning assembly 110 and the first positioning assembly 110 faces the first direction F1, the first limiting member 142 and the first limiting groove 141 are misaligned and are respectively located on two sides of the control straight line. In this case, the first limiting member 142 abuts against the second top cover 1212 of the second housing 121, and the first limiting member 142 is located on the movement path of the first locking member 151. Therefore, the first locking member 151 is blocked and held at the first position, ultimately making the first carrier body 500 irremovable from the first positioning assembly 110. Referring to FIG. 18 and FIG. 34, when the first carrier body 500 is connected to the first positioning assembly 110 and the first positioning assembly 110 gradually rotates from the first direction F1 to the second direction F2 or the fourth direction F4 relative to the second positioning assembly 120, the first limiting member 142 rotates with the first positioning assembly 110 and is gradually opposite to the first limiting groove 141. When the first limiting member 142 is opposite to the first limiting groove 141, the first limiting member 142 can move downwards to be inserted into the first limiting groove 141. In this way, the first limiting member 142 can deviate from the movement path of the first locking member 151, thereby allowing the first locking member 151 to move to the second position to achieve removal of the first carrier body 500 from the first positioning assembly 110.

It is to be noted that when the first positioning assembly 110 faces the second direction F2 or the fourth direction F4, the first limiting member 142 is opposite to an end of the first limiting groove 141 and is inserted into the end. When the first positioning assembly 110 switches from the second direction F2 or the fourth direction F4 to the third direction F3, the first limiting member 142 may move to the midpoint of the first limiting groove 141 in the first limiting groove 141 which is a semicircular groove.

Referring to FIG. 30, FIG. 34, and FIG. 37, in an embodiment, an end of the first limiting member 142 facing the second positioning assembly 120 is provided with a sliding slope 1421, and the sliding slope 1421 can push against groove walls at two ends of the first limiting groove 141 so that the first limiting member 142 moves out of the first limiting groove 141 in a direction away from the second positioning assembly 120, to facilitate the first positioning assembly 110 to be automatically inserted into or withdrawn from the first limiting groove 141 according to the orientation of the first positioning assembly 110 when sliding relative to the second positioning assembly 120.

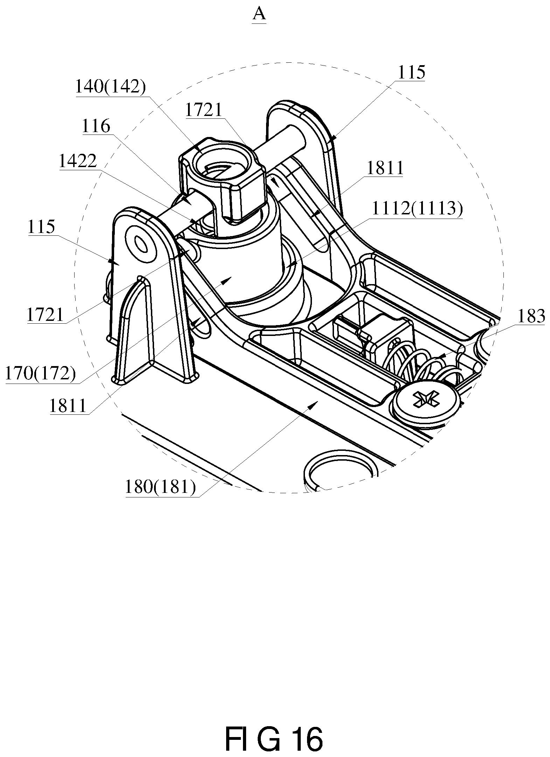

Still referring to FIG. 30, FIG. 34, and FIG. 37, in an embodiment, the first limiting mechanism 140 further includes a first reset member 143, and the first reset member 143 is configured to provide an elastic restoring force for the first limiting member 142 to drive the first limiting member 142 to be inserted into the first limiting groove 141. Specifically, as shown in FIG. 16 and FIG. 18, the first mounting cavity 1111 is provided with a support rod 116 and two support plates 115, and the two support plates 115 are located on two opposite sides of the first limiting hole 1112 respectively. The first limiting member 142 is provided with a strip hole 1422. The support rod 116 passes through the strip hole 1422 and is connected to the two support plates 115. More specifically, a cavity is provided inside the first limiting member 142. The first reset member 143 is, for example, a spring. The spring is accommodated in the cavity, and two ends of the spring abut against the support rod 116 and a bottom wall of the cavity of the first limiting member 142 respectively (see FIG. 30, FIG. 34, and FIG. 37). When the first limiting member 142 is withdrawn from the first limiting groove 141, the first limiting member 142 abuts against a surface of the second positioning assembly 120 so that the first reset member 143 is squeezed and is in a compressed state. When the first limiting member 142 moves above the first limiting groove 141, the first reset member 143 is reset to drive the first limiting member 142 to move downwards and be inserted into the first limiting groove 141.

As can be seen from the foregoing description, the first positioning assembly 110 can freely rotate relative to the second positioning assembly 120 under the action of the rotation moving mechanism 190, so the carrier body connected to the first positioning assembly 110 can also freely rotate with the first positioning assembly 110. However, considering the safety of sitting, some carrier bodies such as the second carrier body 600 (e.g., the infant safety carrier) cannot face the front (that is, face the first direction F1). In other words, when the first positioning assembly 110 is connected to the second carrier body 600, the first positioning assembly 110 is restricted from facing the first direction F1, that is, restricted from facing the front of the car. In this embodiment, the positioning assembly 100 further includes a second limiting mechanism 170 and a linking mechanism 180 to restrict the first positioning assembly 110 from facing the first direction F1 when the second carrier body 600 is connected to the first positioning assembly 110. The second limiting mechanism 170 is configured to limit a range of a rotation angle of the first positioning assembly 110 relative to the second positioning assembly 120. The linking mechanism 180 allows the second limiting mechanism 170 to only play a limiting role when the second carrier body 600 is connected to the first positioning assembly 110. Details of operating principles of the second limiting mechanism 170 and the linking mechanism 180 are as follows.

The second limiting mechanism 170 has a first state and a second state. When the second limiting mechanism 170 is in the first state, the first positioning assembly 110 is restricted from rotating towards the first direction F1 relative to the second positioning assembly 120. When the second limiting mechanism 170 is in the second state, the first positioning assembly 110 is allowed to rotate towards the first direction F1 relative to the second positioning assembly 120.

Specifically, the second limiting mechanism 170 is arranged between the first positioning assembly 110 and the second positioning assembly 120. The second limiting mechanism 170 is configured to limit the range of the rotation angle of the first positioning assembly 110 relative to the second positioning assembly 120 when the second carrier body 600 is connected to the first positioning assembly 110, to prevent the second carrier body 600 from rotating towards the first direction F1.

Referring to FIG. 15, FIG. 16, and FIG. 22, in an embodiment, the second limiting mechanism 170 includes a second limiting groove 171 and a second limiting member 172. The second limiting groove 171 may be provided in one of the second positioning assembly 120 and the first positioning assembly 110. The second limiting member 172 is movably arranged on the other of the second positioning assembly 120 and the first positioning assembly 110, and the second limiting member 172 can be inserted into or withdrawn from the second limiting groove 171. For example, when the second limiting groove 171 is provided on the first positioning assembly 110, the second limiting member 172 is movably arranged on the second positioning assembly 120. Alternatively, in this embodiment, when the second limiting groove 171 is provided in the second positioning assembly 120, the first limiting member 172 is movably arranged on the first positioning assembly 110. More specifically, in this embodiment, the second limiting groove 171 is arranged on a surface of the second positioning assembly 120 facing the first positioning assembly 110. Specifically, as shown in FIG. 29 and FIG. 30, the first bottom cover 1116 of the first housing 111 is provided with a second limiting hole 1113, the second limiting hole 1113 is in communication with the first mounting cavity 1111, the second limiting member 172 is movably arranged in the first mounting cavity 1111, and at least part of the second limiting member 172 can extend out of the first mounting cavity 1111 through the second limiting hole 1113 (see FIG. 37). When the second limiting member 172 is inserted into the second limiting groove 171, the first positioning assembly 110 is restricted from rotating towards the first direction F1 relative to the second positioning assembly 120 (which may be regarded as that the second limiting mechanism 170 is in the first state). When the second limiting member 172 is withdrawn from the second limiting groove 171, the first positioning assembly 110 is allowed to rotate towards the first direction F1 relative to the second positioning assembly 120 (which may be regarded as that the second limiting mechanism 170 is in the second state). Specifically, when the first carrier body 500 is connected to the first positioning assembly 110, the second limiting member 172 is withdrawn from the second limiting groove 171 and remains withdrawn. In this way, the first positioning assembly 110 can rotate towards the first direction F1. In this embodiment, the first positioning assembly 110 can rotate by 360° relative to the second positioning assembly 120. When the second carrier body 600 is connected to the first positioning assembly 110, the second limiting member 172 is inserted into the second limiting groove 171, a length of the second limiting groove 171 limits a movement range of the second limiting member 172. In this way, the first positioning assembly 110 cannot rotate towards the first direction F1.

In an embodiment, like the first limiting member 142, the second limiting member 172 deviates from the rotation axis of the first positioning assembly 110. Moreover, when the first positioning assembly 110 faces the first direction F1, the second limiting member 172 and the second limiting groove 171 are misaligned and respectively located on two sides of the control straight line. Specifically, as shown in FIG. 15 to FIG. 18, the second limiting groove 171 is a semicircular groove (see FIG. 22), and a radius of the semicircular groove is a distance between the second limiting member 172 and the center of the circle of the first positioning assembly 110. More specifically, a notch of the semicircular groove faces the third direction F3, and when the first positioning assembly 110 rotates away from the first direction F1 relative to the second positioning assembly 120, the second limiting member 172 is located at a midpoint of the second limiting groove 171. When the first positioning assembly 110 rotates to the second direction F2 and the fourth direction F4 respectively relative to the second positioning assembly 120, the second limiting member 172 is located at two ends of the second limiting groove 171 in FIG. 22.

In this embodiment, a radius of the second limiting groove 171 is equal to a half of a distance between the first slider 194 and the second slider 195, or, a radius of the second limiting groove 171 is equal to one quarter of the first rail 191 or the second rail 192. The second limiting member 172 is located at a midpoint position between the first slider 194 and the second slider 195. The center point of the second limiting groove 171 is located at an intersection point 193 between the first rail 191 and the second rail 192. The second limiting groove 171 and the second rail 192 have two intersections, and the two intersections are respectively located at a midpoint position of the third groove section of the second rail 192 and a midpoint position of the fourth groove section of the second rail 192. The second limiting groove 171 and the second rail 192 have an intersection point, and the intersection point is located at a midpoint position of the first groove section of the first rail 191. Certainly, in other embodiments, the second limiting groove 171 may have other shapes, such as an ellipse, and the second limiting member 172 may deviate from a midpoint position between the first slider 194 and the second slider 195.

Referring to FIG. 15 to FIG. 19, in an embodiment, the linking mechanism 180 is arranged in the first mounting cavity 1111 and configured to be drivingly connected to the second limiting member 172. The linking mechanism 180 can drive the second limiting member 172 to be withdrawn from or inserted into the second limiting groove 171. In this way, the state of the second limiting member 172 can be controlled through the linking mechanism 180.

Still referring to FIG. 15 to FIG. 19, in an embodiment, the linking mechanism 180 includes a linking member 181, and the linking member 181 is movably arranged in the first mounting cavity 1111 and has a third position and a fourth position. Specifically, a movement direction of the linking member 181 is parallel to the first direction F1 or the third direction F3. Specifically, a first end of the linking member 181 is provided with a first chute 1811 (see FIG. 16), an end of the second limiting member 172 facing away from the second limiting groove 171 is slidably arranged in the first chute 1811, and an end of the second limiting member 172 close to the second limiting groove 171 can pass through the second limiting hole 1113 and be inserted into the second limiting groove 171. More specifically, when the linking member 181 moves to the third position, the second limiting member 172 is inserted into the second limiting groove 171. When the linking member 181 moves to the fourth position, the second limiting member 172 is withdrawn from the second limiting groove 171. In other words, when the linking member 181 switches between the third position and the fourth position, under driving of the first chute 1811, the second limiting member 172 can be inserted into or withdrawn from the second limiting groove 171. In this way, whether the second limiting member 172 is inserted into the second limiting groove 171 can be controlled by changing the position of the linking member 181.

It is to be noted that the second limiting member 172 may be slidably arranged in the first chute 1811 through a connector such as a pin rod. Alternatively, as shown in FIG. 16, a side wall of the second limiting member 172 is provided with a guide convex 1721, and the guide convex 1721 is inserted into the first chute 1811.

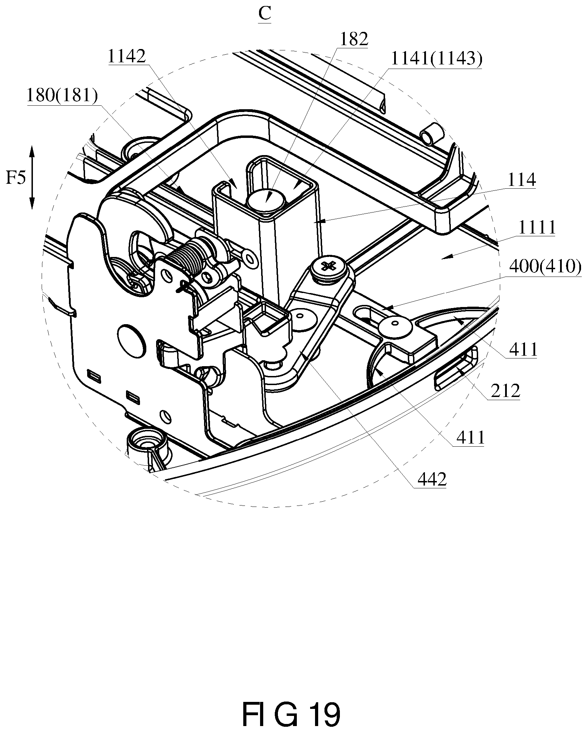

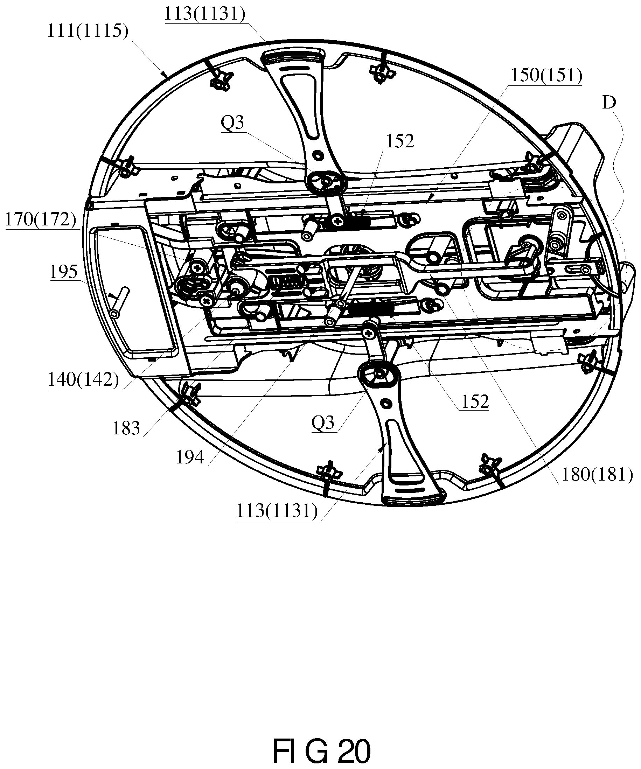

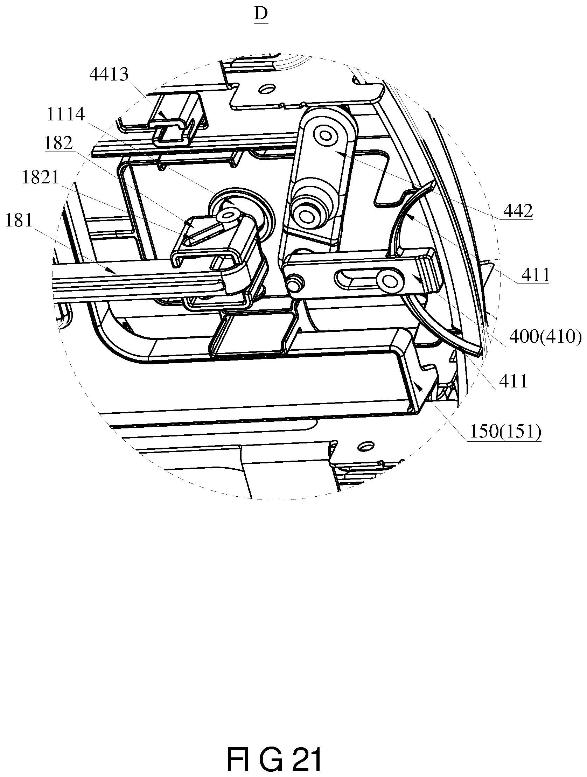

Still referring to FIG. 15 to FIG. 19, in an embodiment, the linking mechanism 180 further includes a pressing member 182, and the pressing member 182 is movably arranged in the first mounting cavity 1111 and has a fifth position and a sixth position. Specifically, a side of the first bottom cover 1116 facing the first mounting cavity 1111 is provided with a movement limiting seat 114 (see FIG. 17 and FIG. 19). The movement limiting seat 114 has a movable cavity 1141. A side of the movement limiting seat 114 facing the second limiting member 172 is provided with a first opening 1142. The first opening 1142 is in communication with the movable cavity 1141. The pressing member 182 is accommodated in the movable cavity 1141 and can move up and down along the fifth direction F5 in the movable cavity 1141. The pressing member 182 is provided with a second chute 1821 (see FIG. 20 and FIG. 21). A second end of the linking member 181 passes through the first opening 1142 and is slidably arranged in the second chute 1821, and an extension direction of the first chute 1811 intersects an extension direction of the second chute 1821. Specifically, when the pressing member 182 is at the fifth position, the linking member 181 is at the third position. When the pressing member 182 is at the sixth position, the linking member 181 is at the fourth position. In this way, the position of the linking member 181 can be changed by changing the position of the pressing member 182, thereby controlling whether the second limiting member 172 can be inserted into the second limiting groove 171. In this embodiment, as shown in FIG. 21, one part of the pressing member 182 has a quadrangular hollow cylindrical structure, the second chute 1821 is provided on a side wall of the hollow cylindrical structure, and the second end of the linking member 181 enters the hollow cylindrical structure. As shown in FIG. 19, the other part of the pressing member 182 has a circular boss structure.

In this embodiment, a distance between a bottom end of the first chute 1811 and a bottom end of the second chute 1821 is less than a distance between a top end of the first chute 1811 and a top end of the second chute 1821. When the pressing member 182 is at the fifth position in the movable cavity 1141, the second end of the linking member 181 is located at the bottom end of the second chute 1821, and the guide convex 1721 of the second limiting member 172 is located at the bottom end of the first chute 1811. When the pressing member 182 is at the sixth position in the movable cavity 1141, the second end of the linking member 181 is located at the top end of the second chute 1821, and the guide convex 1721 of the second limiting member 172 is located at the top end of the first chute 1811.

Specifically, in an embodiment, as shown in FIG. 20, the linking mechanism 180 further includes a fourth reset member 183, and the fourth reset member 183 abuts against the linking member 181 and is configured to provide an elastic restoring force for the linking member 181 to drive the linking member 181 to be held at the third position.

A principle that the first positioning assembly 110 can rotate towards the first direction F1 relative to the second positioning assembly 120 when the first positioning assembly 110 is connected to the first carrier body 500 and the first positioning assembly 110 is restricted from rotating towards the first direction F1 relative to the second positioning assembly 120 when the first positioning assembly 110 is connected to the second carrier body 600 will be briefly described below with reference to the figures. In other words, an operating principle of the second limiting mechanism 170 may be briefly described with reference to the figures. Alternatively, generally, a principle that the first positioning assembly 110 is restricted from rotating towards the first direction F1 relative to the second positioning assembly 120 when the second limiting member 172 is inserted into the second limiting groove 171 and a principle that the first positioning assembly 110 is allowed to rotate towards the first direction F1 relative to the second positioning assembly 120 when the second limiting member 172 is withdrawn from the second limiting groove 171 are briefly described.

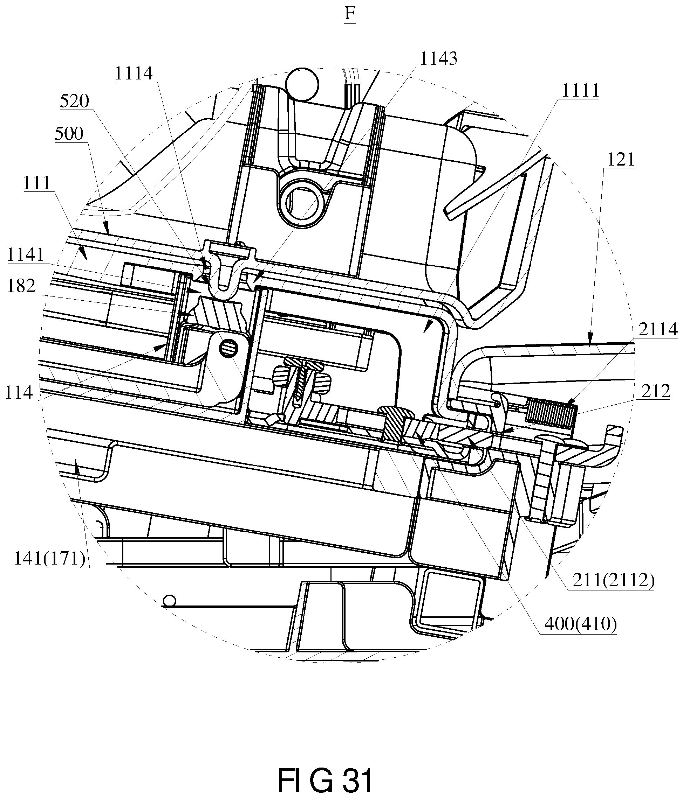

Referring to FIG. 15 and FIG. 31, in an embodiment, the first housing 111 is provided with a push hole 1114 in communication with the first mounting cavity 1111. Specifically, the first top cover 1115 is provided with a push hole 1114, the top of the movement limiting seat 114 is provided with a second opening 1143 (see FIG. 19 and FIG. 31), and the second opening 1143 is arranged opposite to the push hole 1114 along the fifth direction F5. A side of the first carrier body 500 facing the first positioning assembly 110 is provided with a push member 520 (see FIG. 31). When the first carrier body 500 is connected to the first connecting mechanism 112, that is, when the first carrier body 500 is mounted to the first positioning assembly 110, the push member 520 may pass through the push hole 1114 and abut against the pressing member 182, so that the pressing member 182 is at the sixth position.

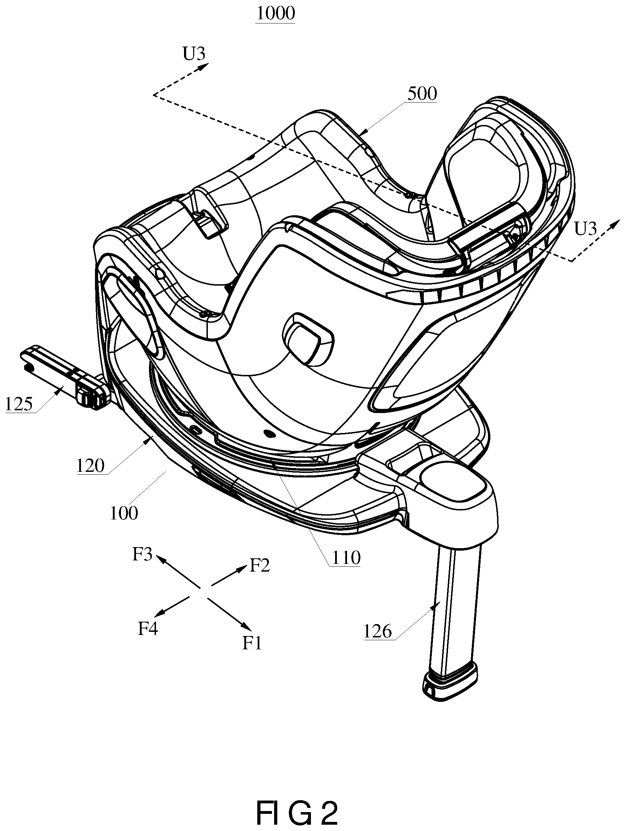

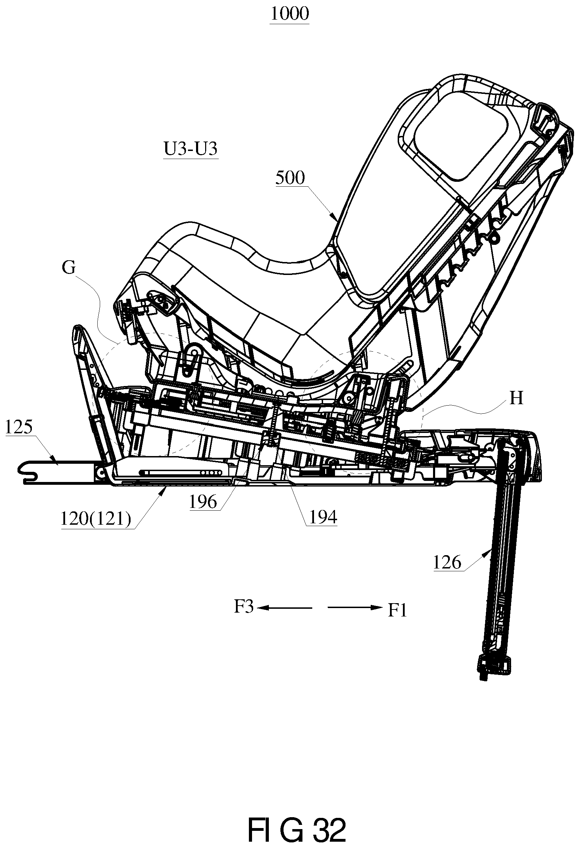

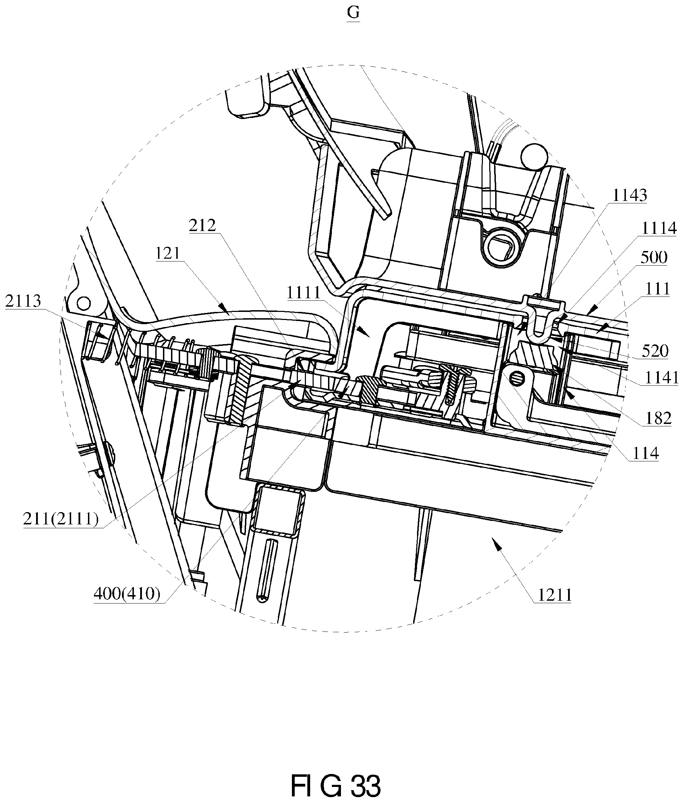

According to the above, when the pressing member 182 is at the sixth position, the linking member 181 is at the fourth position, and the second limiting member 172 is lifted to be withdrawn from the second limiting groove 171. Specifically, the second limiting member 172, when lifted, does not extend out of the second limiting hole 1113. When the first carrier body 500 remains mounted on the first positioning assembly 110, under a pushing action of the push member 520, the pressing member 182 can be held at the sixth position, the second limiting member 172 can always be kept in a lifted state (see FIG. 31 and FIG. 33), and the second limiting member 172 is withdrawn from the second limiting groove 171. Therefore, when the first positioning assembly 110 slides relative to the second positioning assembly 120 through the rotation moving mechanism 190, the second limiting member 172 may not interfere with the second positioning assembly 120, and the first positioning assembly 110 may freely slide relative to the second positioning assembly 120. For example, the first positioning assembly 110 may face the first direction F1 (see FIG. 1 and FIG. 29), or the first positioning assembly 110 may face the third direction F3 (see FIG. 2 and FIG. 32).

However, after the first carrier body 500 is removed from the first positioning assembly 110, the pressing member 182 is no longer subject to a pushing force from the push member 520, under an elastic action of the fourth reset member 183, the linking member 181 can move and be held at the third position, and under a driving action of the first chute 1811 and the second chute 1821, the pressing member 182 is restored to the fifth position, and the second limiting member 172 moves downwards and out of the second limiting hole 1113 and is inserted into the second limiting groove 171.

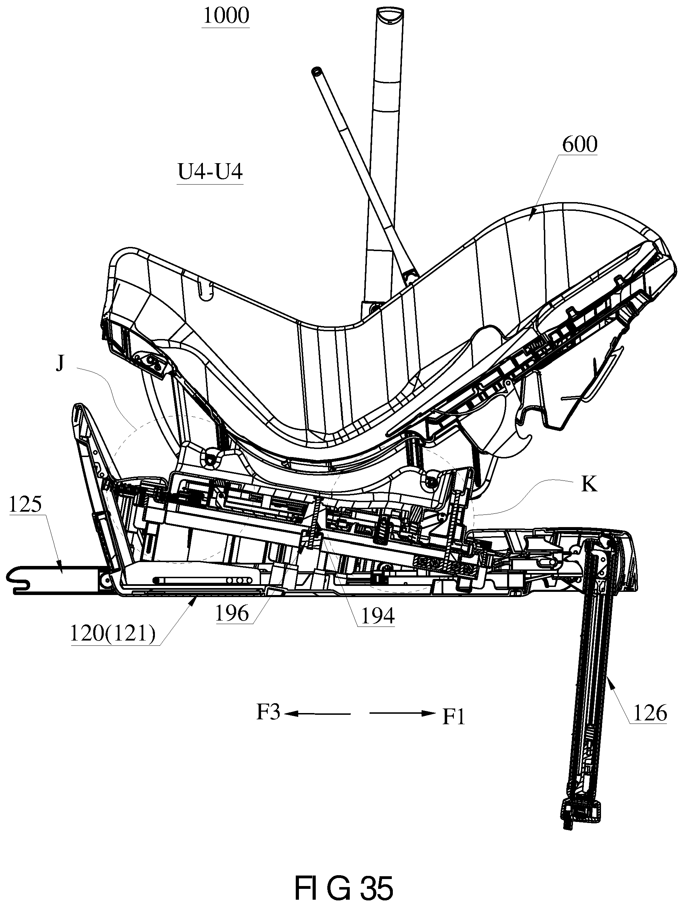

Referring to FIG. 35 and FIG. 36, since a side of the second carrier body 600 facing the first positioning assembly 110 is not provided with a push member 520, when the second carrier body 600 is mounted on the first positioning assembly 110, the top of the pressing member 182 is still not affected by thrust from the outside and can be held at the fifth position. Meanwhile, the linking member 181 is held at the third position, and the second limiting member 172 remains protruding out of the second limiting hole 1113 and inserted into the second limiting groove 171. Specifically, in this embodiment, the second limiting groove 171 is a semicircular groove and is connected to the first rail 191 and the second rail 192, and a notch of the semicircular groove faces the third direction F3. Therefore, after being inserted into the second limiting groove 171, the second limiting member 172 can only move within an extension range of the semicircular groove. When the first positioning assembly 110 faces the third direction F3, the second limiting member 172 is located at a midpoint of the semicircular groove. When the first positioning assembly 110 faces the second direction F2 or the fourth direction F4, the second limiting member 172 is located at an end of the semicircular groove and abuts against a groove wall at the end, and the end of the second limiting groove 171 restricts the second limiting member 172 from continuously rotating, thereby restricting the first positioning assembly 110 from rotating towards the first direction F1 relative to the second positioning assembly 120.

In an embodiment, a radius of the first limiting groove 141 may be the same as or different from a radius of the second limiting groove 171. When the radius of the first limiting groove 141 is the same as the radius of the second limiting groove 171, the first limiting groove 141 may be regarded as the second limiting groove 171. Correspondingly, the first limiting hole 1112 may be regarded as the second limiting hole 1113. More specifically, as shown in FIG. 16 and FIG. 30, the second limiting member 172 has a substantially cylindrical structure with openings at two ends, and the second limiting member 172 sleeves the outside of the first limiting member 142. Certainly, in other embodiments, when the radius of the first limiting groove 141 is different from the radius of the second limiting groove 171, the first limiting groove 141 and the second limiting groove 171 may be regarded as concentric structures.

As described above, in this embodiment, through the insertion of the second limiting member 172 of the second limiting mechanism 170 into the second limiting groove 171, rotation of the second carrier body 600 towards the first direction F1 can be prevented. The second limiting mechanism 170 may be referred to as an anti-misuse structure. In this embodiment, the fourth reset member 183 serves as an elastic member, under an elastic force of the fourth reset member 183, the second limiting mechanism 170 can always be kept in the first state, that is, the linking mechanism 180 always drives the second limiting member 172 to be inserted into the second limiting groove 171, and through the push member 520 on the first carrier body 500, the elastic force of the fourth reset member 183 can be overcome to make the second limiting mechanism 170 in the second state. Therefore, after the first positioning assembly 110 is connected to the first carrier body 500 or the second carrier body 600, the restriction of the second limiting mechanism 170 on the range of the rotation angle of the first positioning assembly 110 can be released or the restriction of the second limiting mechanism 170 on the range of the rotation angle of the first positioning assembly 110 can be driven without the user's manual operation.

It is to be noted that, in other embodiments, by always keeping the second limiting mechanism 170 in the second state through the elastic member, when the first positioning assembly 110 is configured to be connected to the second carrier body 600, the second limiting mechanism 170 overcomes the elastic force of the elastic member through the second carrier body 600 and is in the first state. In other embodiments, the linking mechanism 180 may be omitted. For example, an elastic member is located in the second limiting member 172 and abuts against the second limiting member 172, an elastic force of the elastic member always keeps the second limiting member 172 detached from the second limiting groove 171, and the second carrier body 600 is provided with a push structure similar to the push member 520. When the second carrier body 600 is connected to the first positioning assembly 110, the push structure overcomes the elastic force of the elastic member and jacks the second limiting member 172 to move to be inserted into the second limiting groove 171, thereby limiting the range of the rotation angle of the first positioning assembly 110. Alternatively, the positioning assembly 100 may be further provided with an anti-misuse structure (not shown), and the anti-misuse structure is provided with an anti-misuse button for a manual operation by the user. The anti-misuse button is operable to move at different positions. When the user manually operates the anti-misuse button to move to one of the positions, the second limiting member 172 can be driven to be inserted into the second limiting groove 171.

In order to prevent arbitrary rotation of the first positioning assembly 110 relative to the second positioning assembly 120, in an embodiment, the positioning assembly 100 further includes a first locking mechanism. The first locking mechanism is arranged between the first positioning assembly 110 and the second positioning assembly 120. The first locking mechanism has a first locked state and a first unlocked state. When the first locking mechanism is in the first locked state, the first positioning assembly 110 is restricted from rotating relative to the second positioning assembly 120. When the first locking mechanism is in the first unlocked state, the first positioning assembly 110 is allowed to rotate relative to the second positioning assembly 120. In this embodiment, when the first locking mechanism is in the first locked state, a side face of the first positioning assembly 110 is locked with the second positioning assembly 120. That is, the first positioning assembly 110 and the second positioning assembly 120 are laterally locked.

Referring to FIG. 9, FIG. 22, and FIG. 23, in an embodiment, the first locking mechanism includes a locking assembly 211 and a locking concave portion 212. The locking assembly 211 is movably arranged on one of the second positioning assembly 120 and the first positioning assembly 110, and the locking concave portion 212 is arranged in the other of the second positioning assembly 120 and the first positioning assembly 110. For example, when the locking assembly 211 is movably arranged on the first positioning assembly 110, the locking concave portion 212 is arranged in the second positioning assembly 120. Alternatively, when the locking assembly 211 is movably arranged on the second positioning assembly 120, the locking concave portion 212 is arranged on the first positioning assembly 110. When the locking assembly 211 is inserted into the locking concave portion 212, the first positioning assembly 110 is engaged with the second positioning assembly 120 to restrict the first positioning assembly 110 from rotating relative to the second positioning assembly 120. When the locking assembly 211 is withdrawn from the locking concave portion 212, the first positioning assembly 110 may rotate relative to the second positioning assembly 120.

It is to be noted that, in this embodiment, when the first positioning assembly 110 faces the first direction F1 or the third direction F3 relative to the second positioning assembly 120, the locking assembly 211 can be engaged with the locking concave portion 212 to restrict the first positioning assembly 110 from rotating relative to the second positioning assembly 120. When the first positioning assembly 110 faces the second direction F2 or the fourth direction F4 relative to the second positioning assembly 120, the locking assembly 211 and the locking concave portion 212 are mutually unlocked, and the first positioning assembly 110 may rotate relative to the second positioning assembly 120. In this embodiment, the locking concave portion 212 is arranged on a side face of the first positioning assembly 110. In other embodiments, the locking concave portion 212 may be provided at the bottom of the first positioning assembly 110, so that the bottom of the first positioning assembly 110 is locked with the second positioning assembly 120.

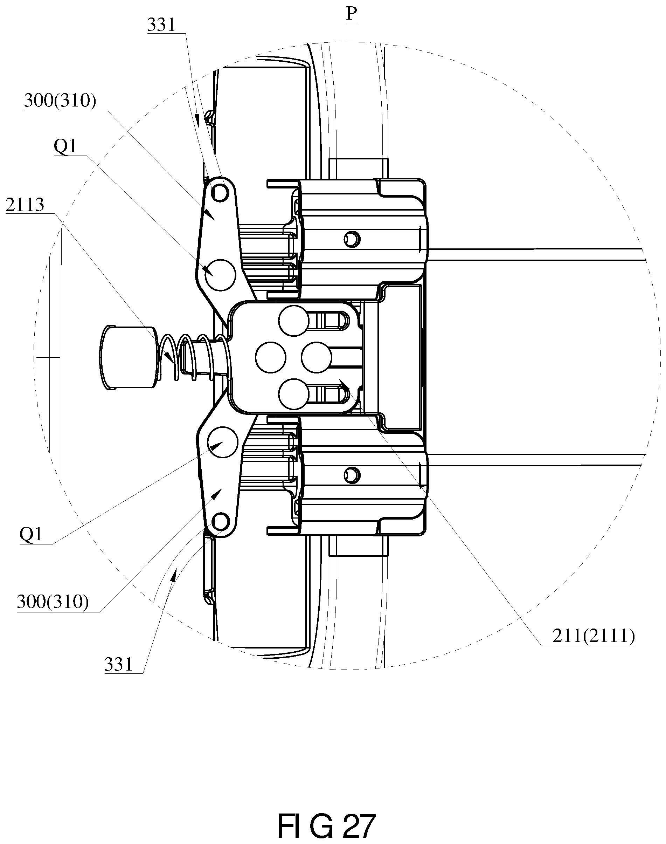

In this embodiment, as shown in FIG. 22, FIG. 23, FIG. 25 and FIG. 27, the locking assembly 211 includes a first locking portion 2111. The first locking portion 2111 may be movably arranged on one of the second positioning assembly 120 and the first positioning assembly 110 along the first direction F1. Specifically, in this embodiment, the first locking portion 2111 is movably arranged on the second positioning assembly 120. A convex body 1214 protrudes from a top surface of the second housing 121. Specifically, the second housing 121 is provided with two convex bodies 1214 arranged at intervals along the first direction F1 or the third direction F3 (see FIG. 22 and FIG. 23), and a space between the two convex bodies 1214 is used to accommodate the first positioning assembly 110. Optionally, the first locking portion 2111 may be movably arranged at a front end or a rear end of the second positioning assembly 120 along the first direction F1, that is, movably arranged on one of the two convex bodies 1214 arranged front and back. Specifically, the two convex bodies 1214 are each provided with a perforation, and the two perforations are in communication with the second mounting cavity 1211 respectively. The first locking portion 2111 corresponds to one perforation and is movably arranged in the second mounting cavity 1211, and at least part of the first locking portion 2111 can extend out of the second mounting cavity 1211 through the corresponding perforation. More specifically, as shown in FIG. 22 and FIG. 27, the first locking portion 2111 is located at the rear end of the second positioning assembly 120 along the first direction F1. That is, the first locking portion 2111 movably passes through the perforation of the convex body 1214 arranged at the rear. It is to be noted that the convex body 1214 protrudes upwards relative to the first rail 191 and the second rail 192. In this embodiment, the first rail 191 and the second rail 192 are arranged on an upper surface of the second top cover 1212. Therefore, the convex body 1214 protrudes upwards relative to the upper surface of the second top cover 1212. In other embodiments, if the first rail 191 and the second rail 192 are not arranged on the upper surface of the second top cover 1212 but are sunk relative to the upper surface of the second top cover 1212, the convex body 1214 may not protrude upward relative to the upper surface of the second top cover 1212. For example, the convex body 1214 may be flush with the upper surface of the second top cover 1212. In this embodiment, the convex body 1214 is provided on the second top cover 1212. In other embodiments, the convex body 1214 may also be provided on other parts of the second housing 121. In some non-limiting embodiments, the convex body 1214 may be only one or more than two.

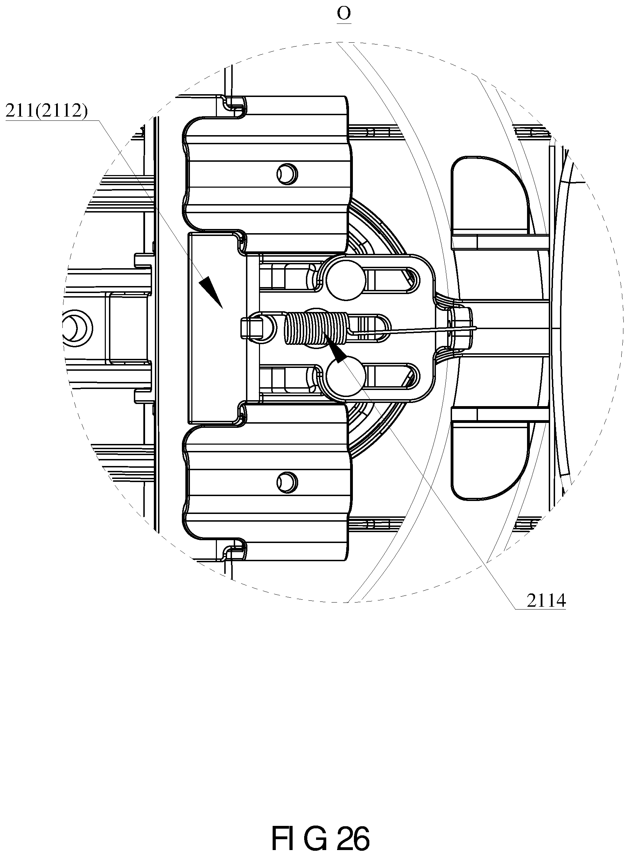

Further, in this embodiment, as shown in FIG. 23, the locking assembly 211 further includes a second locking portion 2112. The second locking portion 2112 may be movably arranged on one of the second positioning assembly 120 and the first positioning assembly 110 along the first direction F1. Specifically, in this embodiment, the second locking portion 2112 is movably arranged on the second positioning assembly 120 together with the first locking portion 2111, and the second locking portion 2112 is opposite to the first locking portion 2111 along the first direction F1. Specifically, as shown in FIG. 23 and FIG. 26, the second locking portion 2112 is movably arranged at the front end of the second positioning assembly 120. That is, the second locking portion 2112 movably passes through the perforation of the convex body 1214 in the front.

Specifically, in this embodiment, as shown in FIG. 9, the locking concave portion 212 is arranged only on one side of the first positioning assembly 110, and one locking concave portion 212 is arranged on the side. When the first positioning assembly 110 faces the first direction F1, the locking concave portion 212 faces the first direction F1, and the locking concave portion 212 rotates synchronously with the rotation of the first positioning assembly 110. Therefore, when the first positioning assembly 110 faces the first direction F1, the second locking portion 2112 may be inserted into the locking concave portion 212 and be engaged with the locking concave portion 212, so that the first positioning assembly 110 remains facing the first direction F1. When the first positioning assembly 110 faces the third direction F3, the locking concave portion 212 rotates synchronously to face the third direction F3, and the first locking portion 2111 may be inserted into the locking concave portion 212 and be engaged with the locking concave portion 212, so that the first positioning assembly 110 remains facing the third direction F3.

Optionally, in other embodiments, two sides of the first positioning assembly 110 may each be provided with the locking concave portion 212. In this case, the locking assembly 211 may include the first locking portion 2111 and the second locking portion 2112, or include only the first locking portion 2111 or the second locking portion 2112. For example, the two sides of the first positioning assembly 110 are each provided with the locking concave portion 212, and the locking assembly 211 includes only the first locking portion 2111. When the first positioning assembly 110 faces the first direction F1 or the third direction F3, the locking concave portion 212 on one side faces the first direction F1, and the locking concave portion 212 on the other side faces the third direction F3. In this way, when the first positioning assembly 110 rotates to the first direction F1 or the third direction F3, the first locking portion 2111 can be inserted into the corresponding locking concave portion 212 to achieve locking fit, so that the first positioning assembly 110 can be held in the first direction F1 or the third direction F3. In this embodiment, both the first locking portion 2111 and the second locking portion 2112 include only one insert tongue, and one locking concave portion 212 is also correspondingly arranged on the corresponding side of the first positioning assembly 110. In other embodiments, the first locking portion 2111 and the second locking portion 2112 may be provided with two or more insert tongues, and two or more locking concave portions 212 are also correspondingly arranged on the corresponding side of the first positioning assembly 110.

Referring to FIG. 22 and FIG. 23, in an embodiment, a limiting convex portion 1215 is formed on each of the two convex bodies 1214 arranged at intervals on the second top cover 1212 along the first direction F1 or the third direction F3, the two limiting convex portions 1215 both protrude towards a space accommodating the first positioning assembly 110, and a groove-shaped structure with an opening is formed between each limiting convex portion 1215 and the upper surface of the second housing 121 (that is, the upper surface of the second top cover 1212 in this embodiment). In this way, when the first positioning assembly 110 is accommodated in a space between the two convex bodies 1214, part of an edge 1118 (see FIG. 11 and FIG. 14) of the first housing 111 can be inserted into the two groove-shaped structures. Specifically, the first housing 111 has a circular shape. When the first positioning assembly 110 is disposed in a space between the two convex bodies 1214, part of the edge 1118 of the first housing 111 in a circumferential direction can be inserted into the two groove-shaped structures. When the carrier body is mounted on the first positioning assembly 110, a center of gravity of the carrier body is generally towards a rear side of the carrier body, i.e., a side of the carrier body close to a backrest portion thereof. Taking the first carrier body 500 as an example, as shown in FIG. 2, when the first carrier body 500 is arranged backwards, that is, the first positioning assembly 110 is arranged towards the third direction F3, part of the edge 1118 of the first housing 111 facing the third direction F3 may have a tendency to tilt upwards. The insertion of part of the edge 1118 of the first housing 111 into the two groove-shaped structures can prevent arbitrary detachment of the first positioning assembly 110 from the second positioning assembly 120 under gravity of the carrier body. In some non-limiting embodiments, the groove-shaped structure may also be only one or more than two.

Further, a first support mechanism 127 may also be provided in the second mounting cavity 1211. On the one hand, when the carrier body (e.g., the first carrier body 500 or the second carrier body 600) is connected to the first positioning assembly 110 and the first positioning assembly 110 rotates towards the first direction F1 or the third direction F3 relative to the second positioning assembly 120, the first support mechanism 127 is configured to assist in supporting the carrier body to improve stability of mounting of the carrier body on the first positioning assembly 110. On the other hand, the first support mechanism 127 in this embodiment is at least partially located in the groove-shaped structure of the convex body 1214, and the first support mechanism 127 in this embodiment may be configured to strengthen strength of a groove wall of the groove-shaped structure configured to engage with the part of the edge 1118 of the first housing 111. In this embodiment, two first support mechanisms 127 are provided and are respectively arranged at the two convex bodies 1214.

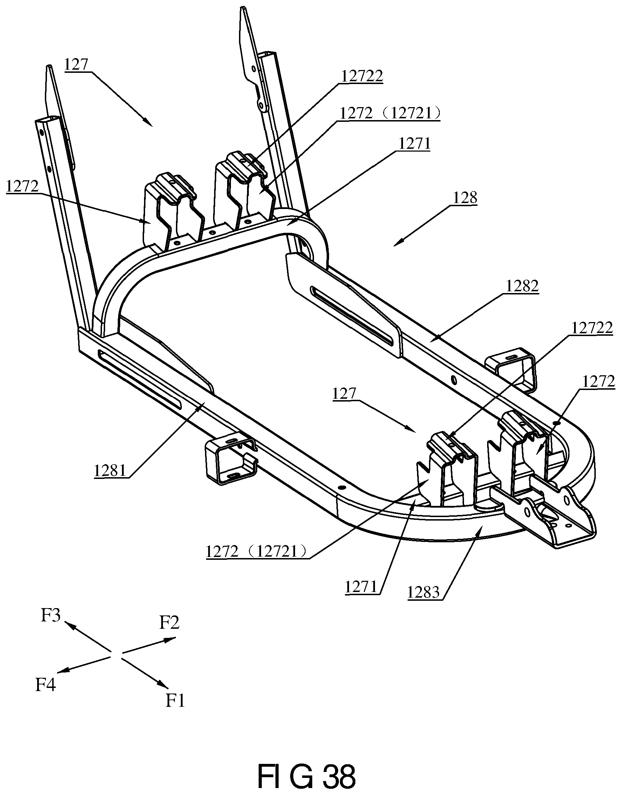

The structure thereof is specifically described below by taking the first support mechanism 127 at the rear end of the second positioning assembly 120 as an example. The first support mechanism 127 may include a first support member 1271 and a second support member 1272. In this embodiment, as shown in FIG. 38, the second positioning assembly 120 further includes a framework 128 arranged in the second mounting cavity 1211. The framework 128 has a substantially U-shaped structure and includes a first straight rod 1281 and a second straight rod 1282 extending along a front-rear direction of the positioning assembly 100 and arranged at intervals along a left-right direction, and an arc-shaped rod 1283 with two ends connected to the first straight rod 1281 and the second straight rod 1282 respectively. In this embodiment, the first support member 1271 at the rear end of the second positioning assembly 120 is a U-shaped rod, and two ends of the first support member 1271 are respectively fixed to upper surfaces of the first straight rod 1281 and the second straight rod 1282. Two second support members 1272 are provided and are arranged at intervals on an upper surface of the first support member 1271. Certainly, in other embodiments, the first support member 1271 may also have other shapes such as a straight-shaped structure. More than two or less than two second support members 1272 may alternatively be provided.

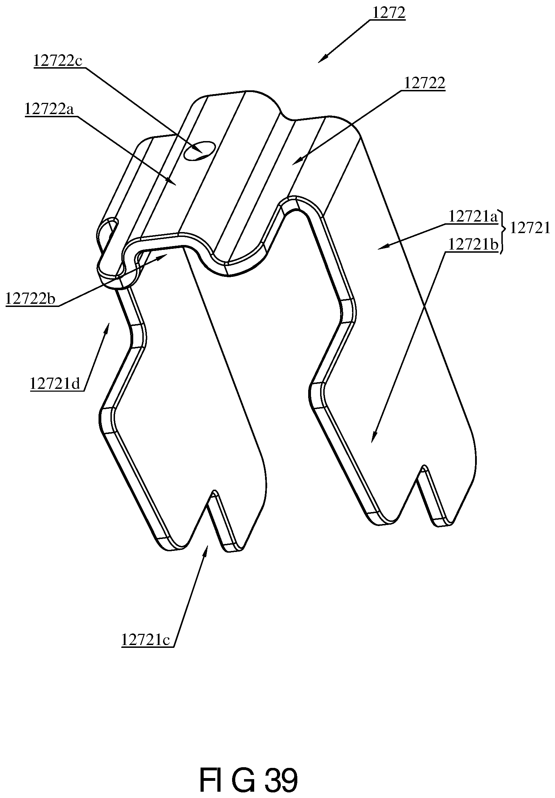

The structure thereof is specifically described below by taking one second support member 1272 as an example. Referring to FIG. 38 and FIG. 39 together, the second support member 1272 has a substantially U-shaped frame structure and includes two connecting pieces 12721 opposite to each other, and a joining piece 12722 connected between the two connecting pieces 12721. Each connecting piece 12721 includes a connecting body 12721a and a support convex portion 12721b protruding from the connecting body 12721a. The support convex portion 12721b protrudes from substantially the middle of the connecting body 12721a. In this embodiment, the connecting piece 12721 has an integrally formed structure. In other embodiments, the connecting piece 12721 may alternatively be formed by connecting the connecting body 12721a and the support convex portion 12721b by welding, riveting, or the like. The connecting body 12721a and a lower surface of the support convex portion 12721b define a fixed groove 12721c, and the first support member 1271 is at least partially engaged in the fixed groove 12721c, so that the second support member 1272 is supported on the first support member 1272. Further, to improve stability of the connection between the first support member 1271 and the second support member 1272, a part of the connecting body 12721a located below the support convex portion 12721b and the lower surface of the support convex portion 12721b are fixedly connected to the part of the first support member 1271. An upper surface of the support convex portion 12721b, the connecting body 12721a, and the joining piece 12722 define an engaging groove 12721d. Specifically, the joining piece 12722 has a roughly square sheet-like structure and a roughly middle part of the joining piece 12722 arches upwards, that is, arches away from the first support member 1271 to form an arched portion 12722a. A receiving groove 12722b is formed on a side of the arched portion 12722a facing the first support member 1271. A roughly middle part of the arched portion 12722a is further provided with a fastening hole 12722c in communication with the receiving groove 12722b.

In this embodiment, referring to FIG. 22 and FIG. 23 together, a side of the convex body 1214 facing the space accommodating the first positioning assembly 110 is provided with a communication hole (not shown) in communication with the second mounting cavity 1211. The communication hole is specifically located at the bottom of the groove-shaped structure. The first support member 1271 is located in the second mounting cavity 1211, a part of the second support member 1272 located below the upper surface of the support convex portion 12721b is located in the second mounting cavity 1211, and a part of the second support member 1272 located above the upper surface of the support convex portion 12721b extends through the communication hole out of the second mounting cavity 1211 and protrudes from the upper surface of the second top cover 1212. The arched portion 12722a of the joining piece 12722 is located below the limiting convex portion 1215. More specifically, the arched portion 12722a of the joining piece 12722 can be supported below the limiting convex portion 1215.

In this embodiment, the limiting convex portion 1215 (or the convex body 1214) is generally made of a plastic material, and the second support member 1272 is made of a steel material (e.g., a metal sheet). Therefore, the second support member 1272 can enhance structural strength of the limiting convex portion 1215 (or the convex body 1214). When the first positioning assembly 110 is accommodated in the space between the two convex bodies 1214, part of the edge 1118 (see FIG. 11 and FIG. 14) of the first housing 111 can be inserted into the two groove-shaped structures, that is, inserted into the two engaging grooves 12721d at the front and rear ends of the second positioning assembly 120, which can further prevent arbitrary detachment of the first positioning assembly 110 from the second positioning assembly 120.

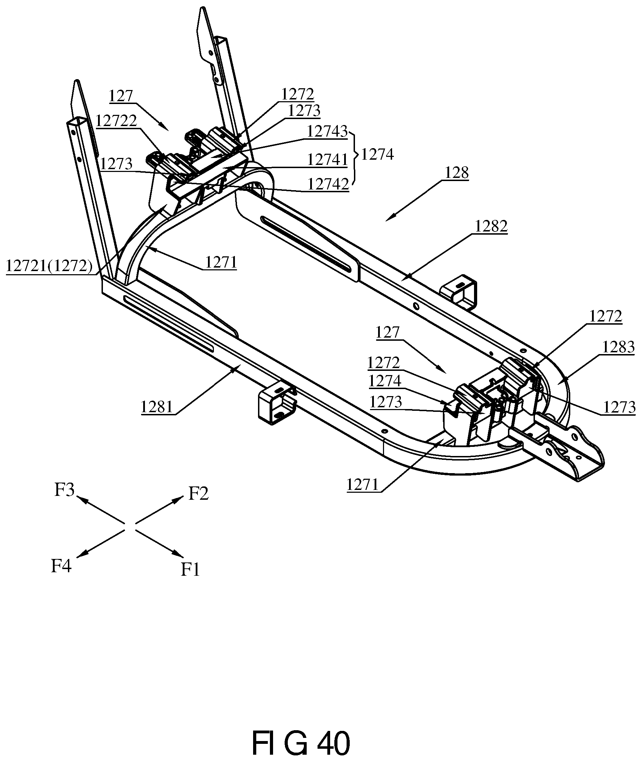

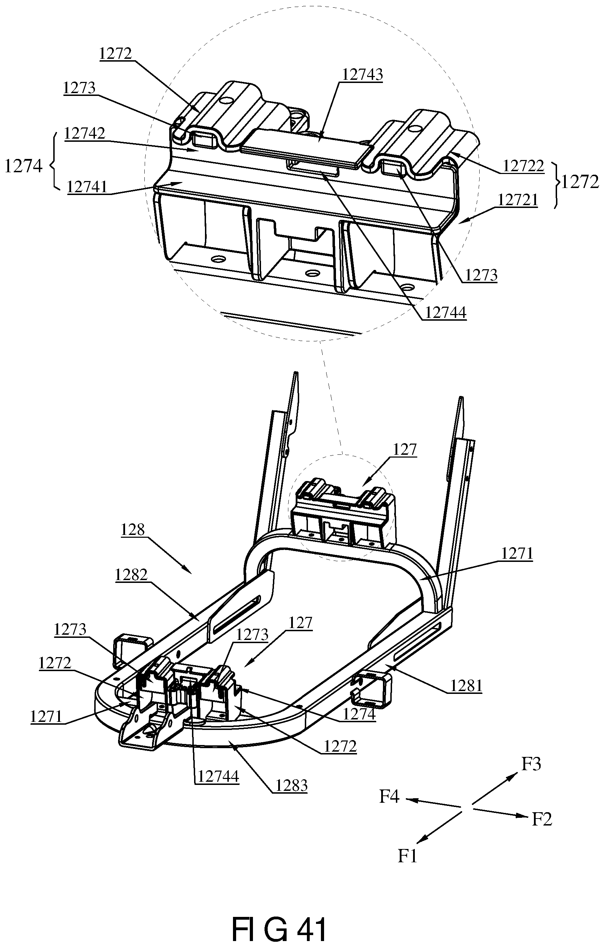

Further, referring to FIG. 40 and FIG. 41, a support pad 1273 may also be provided in the receiving groove 12722b of each second support member 1272. The support pad 1273 may be fixed to a side of the arched portion 12722a facing the first support member 1271 through fasteners such as screws passing through a fastening hole 12722c and the support pad 1273. The support pad 1273 may increase an area of contact between the second support member 1272 and the edge 1118, thereby further improving structural strength of the limiting convex portion 1215, and preventing damage to the limiting convex portion 1215 or failure of the limiting on the first positioning assembly 110.

Further, as shown in FIG. 40 and FIG. 41, the first support mechanism 127 may further include an auxiliary support piece 1274 with a substantially C-shaped cross section. For example, the auxiliary support piece 1274 may include a first auxiliary piece 12741, a second auxiliary piece 12742, and a third auxiliary piece 12743 that are connected in sequence and arranged at an angle. A length of the third auxiliary piece 12743 is less than lengths of the first auxiliary piece 12741 and the second auxiliary piece 12742, and the third auxiliary piece 12743 is connected to a middle position of the second auxiliary piece 12742. In this embodiment, the first auxiliary piece 12741 and the second auxiliary piece 12742 are perpendicular to each other, and the second auxiliary piece 12742 and the third auxiliary piece 12743 are perpendicular to each other. In other embodiments, an angle between the first auxiliary piece 12741 and the second auxiliary piece 12742 and an angle between the second auxiliary piece 12742 and the third auxiliary piece 12743 may alternatively be greater than 90 degrees or less than 90 degrees. When the auxiliary support piece 1274 is arranged on the second support member 1272, the first auxiliary piece 12741 is arranged substantially along a horizontal direction and is disposed above the upper surfaces of the support convex portions 12721b of the two second support members 1272. The second auxiliary piece 12742 is arranged substantially along a vertical direction and abuts against bottoms of the engaging grooves 12721d of the two second support members 1272, that is, abuts against parts of the connecting bodies 12721a of the two second support members 1272 above the support convex portions 12721b. The third auxiliary piece 12743 is between the two second support members 1272 and can abut against two joining pieces 12722. More specifically, in this embodiment, the support pad 1273 arranged in the receiving groove 12722b of each second support member 1272 may be regarded as part of the auxiliary support piece 1274, and the two support pads 1273 are arranged on the second auxiliary piece 12742 and located at two ends of the third auxiliary piece 12743. In this embodiment, the auxiliary support piece 1274 has an integrally formed mechanism. That is, the first auxiliary piece 12741, the second auxiliary piece 12742, the third auxiliary piece 12743, and the support pad 1273 are integrally formed. Certainly, in other embodiments, the first auxiliary piece 12741, the second auxiliary piece 12742, the third auxiliary piece 12743, and the support pad 1273 may alternatively be connected by welding, riveting, or the like to form the auxiliary support piece 1274. More specifically, the second auxiliary piece 12742 is provided with an orifice 12744, and the orifice 12744 is in communication with the second mounting cavity 1211 and the communication hole in the convex body 1214 to allow the first locking portion 2111 or the second locking portion 2112 to pass through. When the first positioning assembly 110 is accommodated in the space between the two convex bodies 1214, part of the edge 1118 (see FIG. 11 and FIG. 14) of the first housing 111 can be supported by the first auxiliary piece 12741 of the auxiliary support piece 1274. Compared with the manner of being directly supported by the upper surfaces of the support convex portions 12721b of the two second support members 1272, a support area thereof is greatly increased, which plays a certain role of releasing force and reduces pressure borne by the support area per unit, so as to further assist in supporting the first positioning assembly 110, that is, assist in supporting the carrier body, to improve stability of mounting of the carrier body on the first positioning assembly 110.

It is to be noted that the structure of the first support mechanism 127 at the front end of the second positioning assembly 120 is substantially similar to the structure of the first support mechanism 127 at the back end of the second positioning assembly 120. An only difference is that since the second positioning assembly 120 has a structure with low front and high back as a whole, the first support member 1271 of the first support mechanism 127 located at the front end of the second positioning assembly 120 is a straight rod instead of a U-shaped rod.

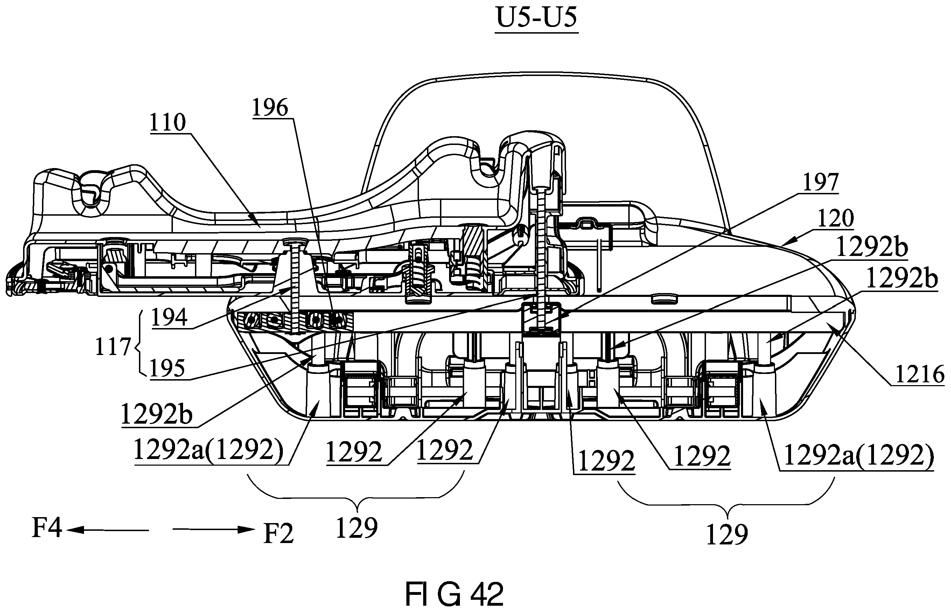

Further, as shown in FIG. 42, the first positioning assembly 110 further includes a second support mechanism 117. Specifically, the second support mechanism 117 includes the first slider 194 and the second slider 195 above. Two ends of the first slider 194 are connected to the first positioning assembly 110 and the first sliding block 196 arranged on the second positioning assembly 120 respectively. Two ends of the second slider 195 are connected to the first positioning assembly 110 and the second sliding block 197 arranged on the second positioning assembly 120 respectively. Referring to FIG. 8 and FIG. 9 together, when the first positioning assembly 110 rotates towards the second direction F2 or the fourth direction F4 relative to the second positioning assembly 120, a projection of at least part of the first positioning assembly 110 in the fifth direction F5 may exceed a projection of the second positioning assembly 120 in the fifth direction F5. That is, the part of the first positioning assembly 110 may be suspended. The first slider 194 and the second slider 195 are always located within a projection range of the second positioning assembly 120 in the fifth direction F5. Therefore, the first slider 194 and the second slider 195 can support the first positioning assembly 110 and the carrier body mounted above the first positioning assembly 110 and can also produce a certain pulling force on a non-suspended part of the first positioning assembly 110, preventing upward tilting thereof due to gravity of the suspended part of the first positioning assembly 110.

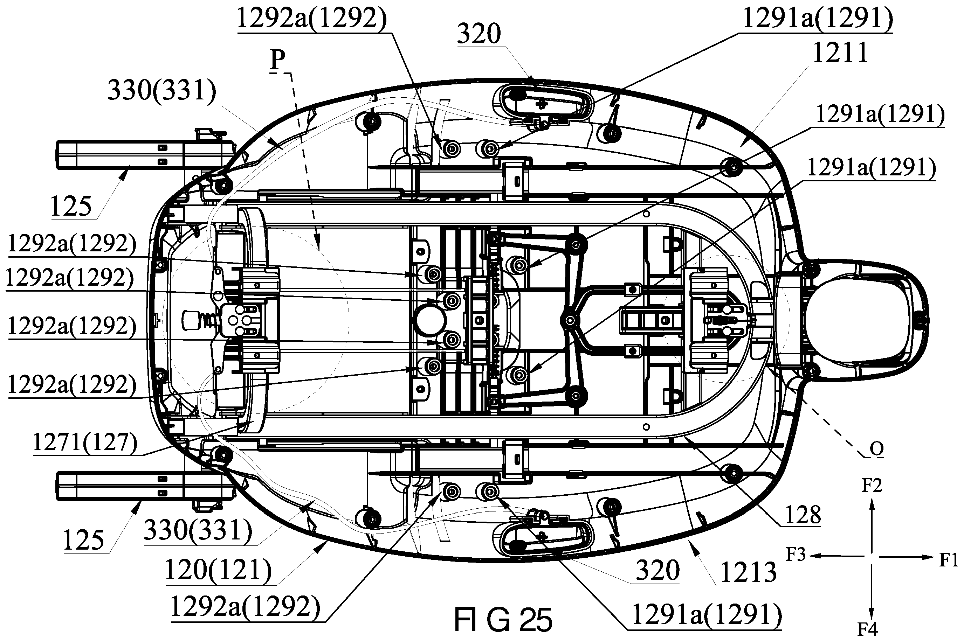

Further, referring to FIG. 25, FIG. 28, and FIG. 42 together, the second positioning assembly 120 may further include a third support mechanism 129. The third support mechanism 129 includes a plurality of support column assemblies arranged in the second mounting cavity 1121. In this embodiment, the third support mechanism 129 includes six support column assemblies, and the six support column assemblies are arranged at intervals along an extension direction of the second rail 192. Specifically, each support column assembly includes a first support column 1291 and a second support column 1292 respectively located on two sides of the second rail 192. The first support column 1291 includes a first bottom column 1291a fixed to the second bottom cover 1213 and a first top column 1291b fixed to the second top cover 1212. The first bottom column 1291a and the first top column 1291b abut to form a support structure. The second support column 1292 includes a second bottom column 1292a fixed to the second bottom cover 1213 and a second top column 1292b fixed to the second top cover 1212. The second bottom column 1292a and the second top column 1292b abut to form a support structure. In this way, the six support column assemblies can further enhance structural strength of the second positioning assembly 120, and play an auxiliary supporting role for the first positioning assembly 110. In this embodiment, as shown in FIG. 25 and FIG. 28, two support column assemblies (hereinafter referred to as a first support column assembly) are close to two ends of the first rail 192 respectively. Two other support column assemblies (hereinafter referred to as a second support column assembly) are arranged close to the intersection point 193. Two other support column assemblies (hereinafter referred to as a third support column assembly) are away from the second rail 192 along the first direction F1 relative to the second support column assembly and are away from the first rail 191 along the second direction F2 relative to the second support column assembly. When the first positioning assembly 110 rotates towards the second direction or the fourth direction relative to the second positioning assembly 120, the first slider 194 and the second slider 195 may assist in bearing a force, the first support column assembly and the second support column assembly can provide a support force for the first positioning assembly 110 adjacent to the first slider 194 and the second slider 195, and in addition, the third support column assembly can further expand a support range, thereby providing a support force for the carrier body connected to the first positioning assembly 110 and improving structural strength of the second positioning assembly 120, which prevents damage to the second positioning assembly 120. Certainly, in other embodiments, the number and the position of the support column assemblies may alternatively be adjusted according to a requirement.

Referring to FIG. 25 to FIG. 27, in an embodiment, the carrier 1000 further includes a first unlocking mechanism 300. The first unlocking mechanism 300 can be operably connected to the first locking portion 2111 or the second locking portion 2112, and can be configured to drive the first locking portion 2111 or the second locking portion 2112 to exit the locking concave portion 212.

Specifically, in this embodiment, as shown in FIG. 25 to FIG. 27, the first unlocking mechanism 300 is operably connected to the first locking portion 2111. Therefore, an unlocking principle and process of the first unlocking mechanism 300 will be described below based on linking cooperation between the first unlocking mechanism 300 and the first locking portion 2111. Specifically, the first unlocking mechanism 300 includes a first driving member 310, a first operating member 320, and a first traction assembly 330. The first driving member 310 is pivotally connected to the second positioning assembly 120 and is pivotally connected to the first locking portion 2111. The first operating member 320 is operably arranged on the second positioning assembly 120 and is exposed from the second positioning assembly 120. In this way, it is convenient for the user to operate the first operating member 320. The first traction assembly 330 is connected to the first operating member 320 and the first driving member 310 respectively. When the first operating member 320 is operated (e.g., pressed or pushed), the first operating member 320 drives, through the first traction assembly 330, the first driving member 310 to pivot, so that the first driving member 310 can drive the first locking portion 2111 to exit the locking concave portion 212. In some non-limiting embodiments, since the first locking portion 2111 is located at the rear end of the second positioning assembly 120, the locking concave portion 212 is provided in front of the first positioning assembly 110, so the first locking portion 2111 can be engaged with the locking concave portion 212 only when the first positioning assembly 110 rotates towards the third direction F3 (i.e., away from the first direction F1) relative to the second positioning assembly 120, and then the first locking portion 2111 can be controlled by the first unlocking mechanism 300 to exit the locking concave portion 212.

In an embodiment, as shown in FIG. 25 to FIG. 27, two first unlocking mechanisms 300 are provided, and the two first unlocking mechanisms 300 are located on left and right sides of the second positioning assembly 120 respectively along a left-right direction. The two first unlocking mechanisms 300 are operably connected to the first locking portion 2111. In this way, the user can operate any first operating member 320 to withdraw the first locking portion 2111 from the locking concave portion 212.

Referring to FIG. 25 to FIG. 27, in an embodiment, the first traction assembly 330 includes a first traction rope 331, one end of the first traction rope 331 is connected to the first driving member 310, and the other end of the first traction rope 331 is connected to the first operating member 320. Specifically, the positioning assembly 100 is mounted on the car seat, and an operating principle thereof is described by taking the first unlocking mechanism 300 close to the right door as an example. The first driving member 310 in the first unlocking mechanism 300 and the second bottom cover 1213 are pivotally connected to a first pivot point Q1, and a pivot point between the first driving member 310 and the first locking portion 2111 and a connection point between the first driving member 310 and the first traction rope 331 are respectively located on two sides of the first pivot point Q1. More specifically, the first operating member 320 is movably arranged on the second housing 121. Therefore, when the first locking portion 2111 is required to be unlocked, the first operating member 320 close to the right door may be moved to drive the first traction rope 331 to pull the first driving member 310 to rotate counterclockwise around the first pivot point Q1, thereby enabling the first driving member 310 to drive the first locking portion 2111 to move towards the third direction F3, so that the first locking portion 2111 can exit the locking concave portion 212. It is to be noted that when the first operating member 320 close to the right door rotates counterclockwise around the first pivot point Q1, since the first driving member 310 close to the left door is also connected to the first locking portion 2111, the first locking portion 2111 may drive the first driving member 310 close to the left door to rotate clockwise around the first pivot point Q1. That is, the left and right first driving members 310 are linked, and when one first driving member 310 is operated, the first locking portion 2111 can be unlocked and drive the two first driving members 310 to pivot.

Still referring to FIG. 25 to FIG. 27, in an embodiment, the locking assembly 211 further includes a fifth reset member 2113. The fifth reset member 2113 abuts between the second bottom cover 1213 and the first locking portion 2111 and is configured to drive the first locking portion 2111 to be reset, so as to always keep the first locking portion 2111 have a tendency to be inserted into the locking concave portion 212. The fifth reset member 2113 is, for example, a spring. In this way, when the locking concave portion 212 rotates with the first positioning assembly 110 to be opposite to the first locking portion 2111, a housing wall of the first housing 111 releases abutment against the first locking portion 2111, and under an elastic action of the fifth reset member 2113, the first locking portion 2111 can be automatically inserted into the locking concave portion 212.

As can be seen from the above, when the first positioning assembly 110 is connected to the second carrier body 600, the first positioning assembly 110 is restricted from facing the first direction F1. Therefore, in this embodiment, in a case that the first positioning assembly 110 is connected to the second carrier body 600, only the first locking portion 2111 can play a locking role, and the second locking portion 2112 is not engaged with the locking concave portion 212. Specifically, when the first positioning assembly 110 faces the third direction F3, under the action of the fifth reset member 2113, the first locking portion 2111 can be automatically inserted into the locking concave portion 212 to be engaged with the locking concave portion 212. Meanwhile, the second locking portion 2112 is abutted by the housing wall of the first housing 111 to be accommodated in the second mounting cavity 1211. When the user needs to switch the first positioning assembly 110 from facing the third direction F3 to facing the second direction F2 or the fourth direction F4, the user may operate the first unlocking mechanism 300 to withdraw the first locking portion 2111 from the locking concave portion 212. Therefore, when the first positioning assembly 110 is connected to the second carrier body 600, the first locking portion 2111 can be controlled only through the first unlocking mechanism 300.

As can be seen from the foregoing description, when the first positioning assembly 110 is connected to the first carrier body 500, the first positioning assembly 110 can freely rotate relative to the second positioning assembly 120. That is, the first positioning assembly 110 may rotate towards any one of the first direction F1, the second direction F2, the third direction F3, and the fourth direction F4. In an embodiment, as shown in FIG. 25 to FIG. 27, the locking assembly 211 further includes a seventh reset member 2114, and the seventh reset member 2114 abuts between the second bottom cover 1213 and the second locking portion 2112 and is configured to make the second locking portion 2112 have a tendency to be inserted into the locking concave portion 212. Therefore, when the first positioning assembly 110 faces the first direction F1, the locking concave portion 212 is opposite to the second locking portion 2112, and under the action of the seventh reset member 2114, the second locking portion 2112 can be inserted into the locking concave portion 212 to be engaged with the locking concave portion 212. In this case, the first locking portion 2111 is abutted by the housing wall of the first housing 111 to be accommodated in the second mounting cavity 1211. When there is a need to switch the first positioning assembly 110 from facing the first direction F1 to facing another direction (such as the second direction F2 or the fourth direction F4), the user may first withdraw the second locking portion 2112 from the locking concave portion 212 and then change the orientation of the first positioning assembly 110 through the rotation moving mechanism 190.

Referring to FIG. 19 and FIG. 21, in an embodiment, the carrier 1000 further includes a second unlocking mechanism 400. The second unlocking mechanism 400 is configured mainly to be operably connected to the second locking portion 2112 and can be configured to drive the second locking portion 2112 to exit the locking concave portion 212.

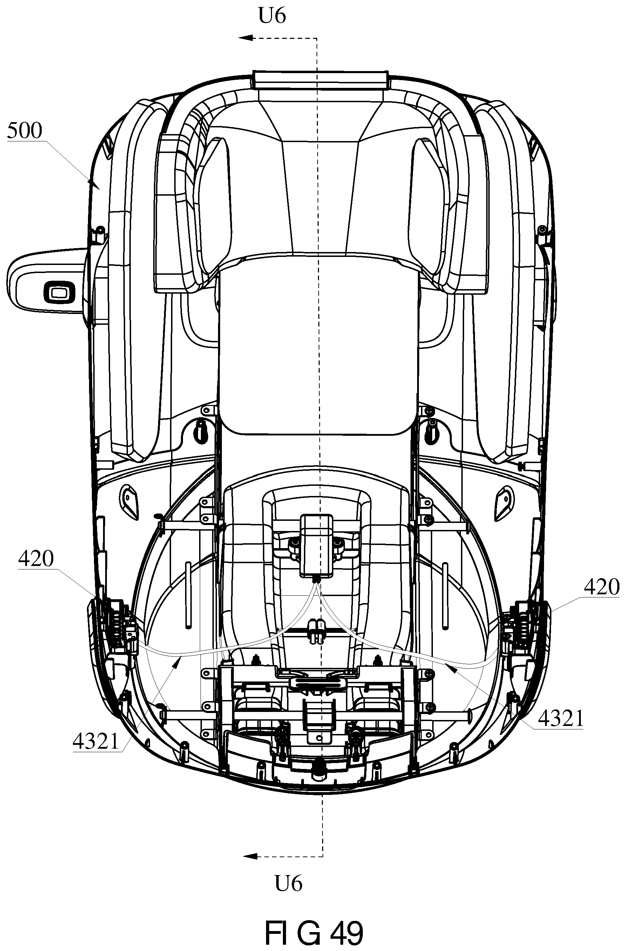

Referring to FIG. 19 to FIG. 29, in an embodiment, the locking concave portion 212 is a locking hole that can be in communication with the first mounting cavity 1111. Specifically, as shown in FIG. 19 and FIG. 27, the second unlocking mechanism 400 includes a second driving member 410, a second operating member 420, and a transmission unit. The second driving member 410 is movably arranged in the first mounting cavity 1111, and the second driving member 410 can drive the second locking portion 2112 to exit the locking concave portion 212. Specifically, when the first positioning assembly 110 faces or faces away from the first direction F1, a movement direction of the second driving member 410 is parallel to the first direction F1 or the third direction F3. In this way, the second driving member 410, when moving, can contact and abut against the second locking portion 2112 and then can push the second locking portion 2112 to exit the locking concave portion 212. Specifically, the second driving member 410 is provided with an elastic arm 411. The elastic arm 411 is configured to abut against a side wall of the first bottom cover 1116 or the first top cover 1115 to assist in driving the second driving member 410 to be reset. The second operating member 420 is operably arranged on the first carrier body 500 (see FIG. 29 and FIG. 49). The transmission unit is connected, in a transmission manner, to the second operating member 420 and the second driving member 410 respectively. When the second operating member 420 is operated, the second operating member 420 drives, through the transmission unit, the second driving member 410 to move, so that the second driving member 410 drives the first locking portion 2111 to exit the locking concave portion 212.

Referring to FIG. 30 and FIG. 34, in an embodiment, the transmission unit includes a first transmission assembly 430 and a second transmission assembly 440. The first transmission assembly 430 is arranged on the first carrier body 500, and the second transmission assembly 440 is arranged in the first mounting cavity 1111. The first transmission assembly 430 is drivingly connected to the second transmission assembly 440.

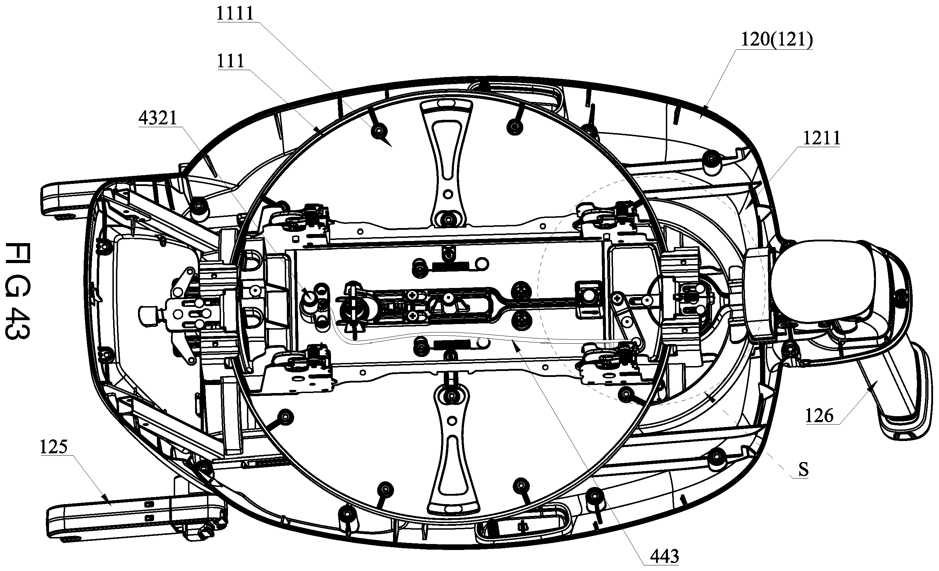

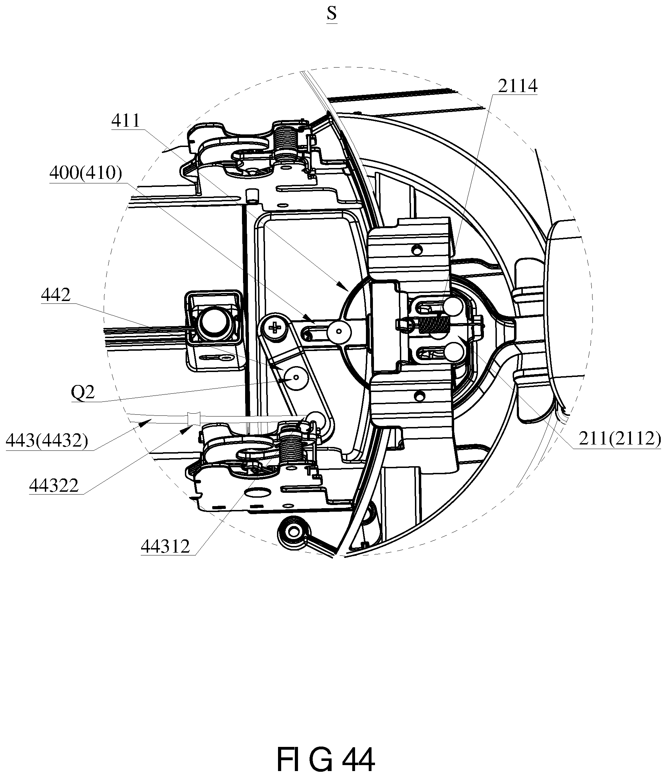

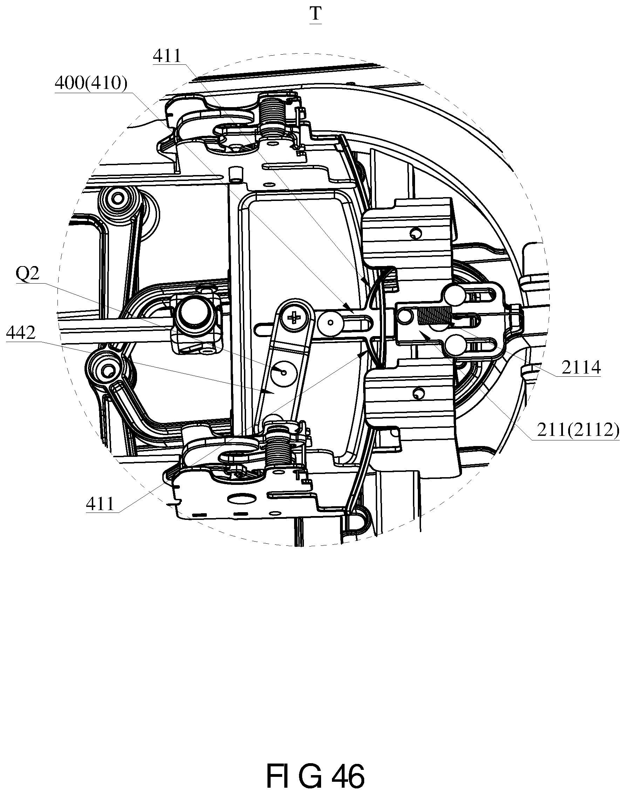

Referring to FIG. 30, FIG. 34, FIG. 43, and FIG. 44, in an embodiment, the second transmission assembly 440 includes a transmission member 441, a third driving member 442, and a third traction assembly 443. The transmission member 441 is movably arranged in the first mounting cavity 1111 and is drivingly connected to the first transmission assembly 430 (see FIG. 30 and FIG. 34). The third driving member 442 is pivotally connected to a bottom wall of the first mounting cavity 1111 and is pivotally connected to the second driving member 410. Specifically, the third driving member 442 and the first bottom cover 1116 are pivotally connected to a second pivot point Q2 (see FIG. 44 and FIG. 46). The third traction assembly 443 is connected to the transmission member 441 and the third driving member 442 respectively (see FIG. 43 and FIG. 44). When the first transmission assembly 430 drives the transmission member 441 to move, the transmission member 441 drives, through the third traction assembly 443, the third driving member 442 to pivot, so that the second driving member 410 moves to push the second locking portion 2112 to exit the locking concave portion 212.

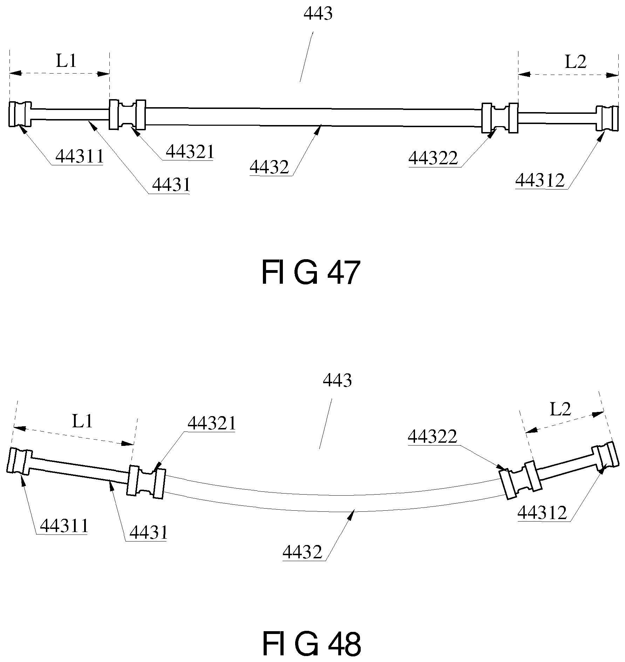

Specifically, as shown in FIG. 47 and FIG. 48, the third traction assembly 443 is a flexible element, which includes a third traction rope 4431 and a third traction sleeve 4432 sleeving the third traction rope 4431. When the transmission member 441 moves, the third traction sleeve 4432 deforms so that the third traction rope 4431 pivots by pulling the third driving member 442, thereby driving the second driving member 410 to move to push against the second locking portion 2112. Specifically, the third traction sleeve 4432 has a first sleeve end 44321 and a second sleeve end 44322, and the third traction rope 4431 has a first rope end 44311 adjacent to the first sleeve end 44321 and a second rope end 44312 adjacent to the second sleeve end 44322. More specifically, as shown in FIG. 30, the transmission member 441 includes a fixed seat 4411 and a movable pushing seat 4412, the fixed seat 4411 is fixedly arranged in the first mounting cavity 1111, and the movable pushing seat 4412 is movably arranged on the fixed seat 4411 along the fifth direction F5. That is, the movable pushing seat 4412 may move along the fifth direction F5 relative to the fixed seat 4411. The first rope end 44311 of the third traction rope 4431 is connected to a first connecting portion 44111 on the fixed seat 4411 (see FIG. 30), the second rope end 44312 of the third traction rope 4431 is connected to the third driving member 442 (see FIG. 43 and FIG. 44), and a connection point between the second rope end 44312 of the third traction rope 4431 and the third driving member 442 and a pivot point between the third driving member 442 and the second driving member 410 are respectively located on two sides of the second pivot point Q2. The first sleeve end 44321 of the third traction sleeve 4432 is connected to a second connecting portion 44121 on the movable pushing seat 4412 (see FIG. 30), the second connecting portion 44121 is located below the first connecting portion 44111 along the fifth direction F5, and the second sleeve end 44322 of the third traction sleeve 4432 is connected to the first top cover 1115 or the first bottom cover 1116 (see FIG. 43 and FIG. 44). Specifically, a third connecting portion 4413 is arranged on a side of the first bottom cover 1116 or the second top cover 1212 facing the first mounting cavity 1111 (see FIG. 21), and the second sleeve end 44322 of the third traction sleeve 4432 is connected to the third connecting portion 4413. Specifically, the third traction sleeve 4432 is a flexible wire sleeve. Moreover, it is to be noted that the third traction sleeve 4432 should be made of a hard but bendable material, such as a bendable tubular structure made of metal (such as steel) or plastic (such as PVC). Similarly, the third traction rope 4431 may alternatively be made of, for example, a hard but bendable material. An operating principle and process of the second transmission assembly 440 are described below with reference to FIG. 29 and FIG. 30.

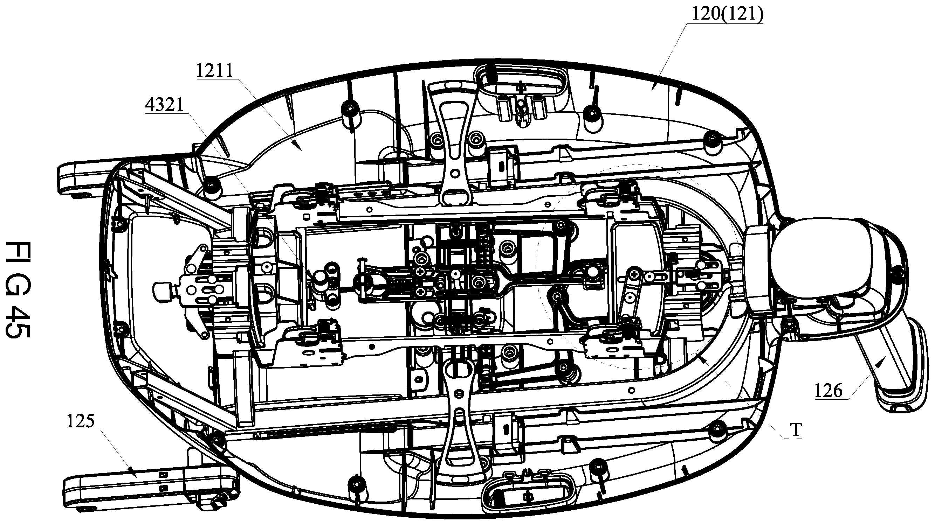

When there is a need to withdraw the second locking portion 2112 from the locking concave portion 212 to enable the first positioning assembly 110 to slide relative to the second positioning assembly 120, the user may move the movable pushing seat 4412 downwards along the fifth direction F5. In this way, the second connecting portion 44121 may drive the first sleeve end 44321 to move, and at the same time, the third traction sleeve 4432 may be extruded and bend, so that the third traction rope 4431 bends along with the third traction sleeve 4432. Since the first rope end 44311 of the third traction rope 4431 is fixed to the first connecting portion 44111, when the movable pushing seat 4412 moves downwards along the fifth direction F5, the first sleeve end 44321 moves downwards along the fifth direction F5 with the second connecting portion 44121, and a length of a section L1 of the third traction rope 4431 between the first sleeve end 44321 and the first rope end 44311 may increase (change from FIG. 47 to FIG. 48). Since a total length of the third traction rope 4431 remains unchanged, under a transmission effect of the third traction sleeve 4432, a length of a section L2 of the third traction rope 4431 between the second rope end 44312 and the second sleeve end 44322 decreases (change from FIG. 47 to FIG. 48). In this way, it may be regarded that the second rope end 44312 may pull the third driving member 442 to pivot clockwise around the second pivot point Q2, and then the third driving member 442 is enabled to push the second driving member 410 to move to push the second locking portion 2112 to exit the locking hole (switch from FIG. 43 to FIG. 45).

Referring to FIG. 30, in an embodiment, the second transmission assembly 440 further includes an eighth reset member 444, and the eighth reset member 444 may be, for example, an elastic member such as a spring, which abuts between the fixed seat 4411 (or a surface of the first bottom cover 1116 away from the second positioning assembly 120) and the movable pushing seat 4412 and is configured to drive the movable pushing seat 4412 to move upwards along the fifth direction F5. When the movable pushing seat 4412 is not pushed, the eighth reset member 444 enables the movable pushing seat 4412 to move and be reset, and then enables the third traction sleeve 4432 and the third traction rope 4431 to be reset. Under pushing of the third traction rope 4431, the third driving member 442 can pivot counterclockwise around the second pivot point Q2 to assist in driving the second driving member 410 to be reset.

Referring to FIG. 29 and FIG. 30, in an embodiment, the first transmission assembly 430 includes a pushing member 431 and a second traction assembly 432. The pushing member 431 is movably arranged on the first carrier body 500 and is configured to push against the transmission member 441. Specifically, the pushing member 431 may move along the fifth direction F5, and the first top cover 1115 is provided with a pushing hole 1117. In this way, when the first carrier body 500 is mounted on the first housing 111, the pushing member 431 may pass through the pushing hole 1117 to abut against the movable pushing seat 4412. More specifically, the second traction assembly 432 is connected to the pushing member 431 and the second operating member 420 respectively. In this way, when the second operating member 420 is operated, the second operating member 420 may drive, through the second traction assembly 432, the pushing member 431 to push against the movable pushing seat 4412 of the transmission member 441.

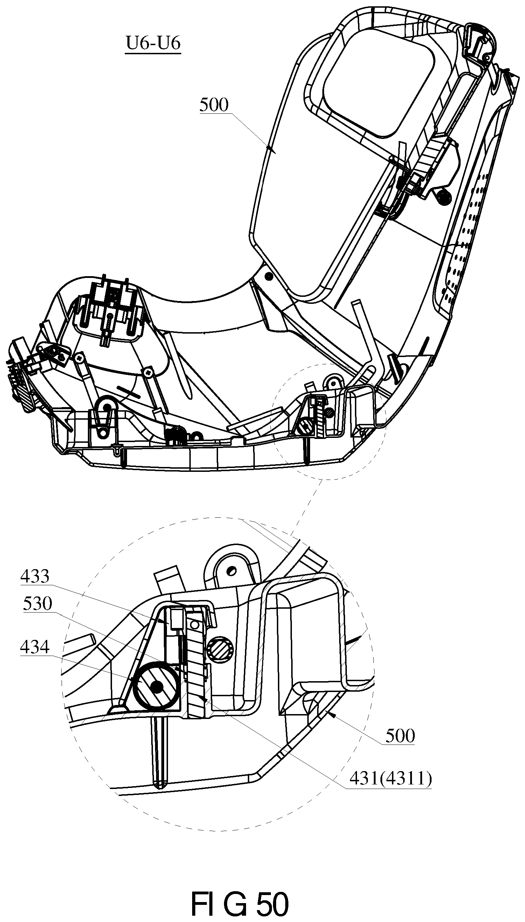

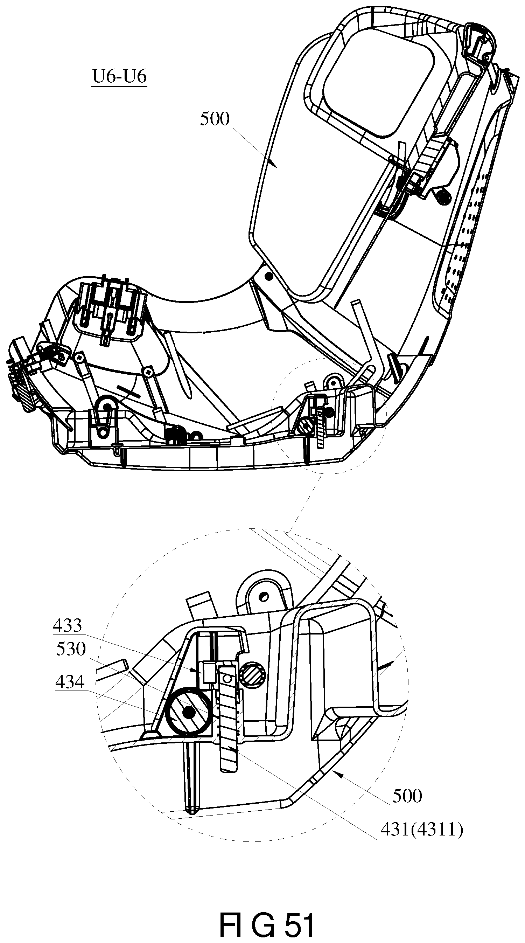

Referring to FIG. 29, in an embodiment, the second traction assembly 432 includes a second traction rope 4321, one end of the second traction rope 4321 is connected to the second operating member 420, and the other end of the second traction rope 4321 is connected to the pushing member 431. Specifically, the second operating member 420 is movably arranged on the first carrier body 500, the top of the pushing member 431 is provided with a linking block 433 (see FIG. 30, FIG. 50, and FIG. 51), and the linking block 433 and the first operating member 320 are arranged at intervals along a front-rear direction of the first carrier body 500. More specifically, a guide wheel 434 (see FIG. 30, FIG. 50, and FIG. 51) is arranged inside the first carrier body 500, and two ends of the second traction rope 4321 bypass the guide wheel 434 and are connected to the linking block 433 and the first operating member 320 respectively. In this way, when the second operating member 420 is operated (such as rotated, pressed, or moved), under guidance of the guide wheel 434, the second traction rope 4321 may pull the linking block 433 to push the pushing member 431 to move downwards along the fifth direction F5, and then cause the pushing member 431 to pass through the pushing hole 1117 and extend into the first mounting cavity 1111 to push the movable pushing seat 4412 to move downwards along the fifth direction F5. Specifically, a sixth reset member 530 (see FIG. 50 and FIG. 51) is arranged inside the first carrier body 500. The sixth reset member 530 abuts between the first carrier body 500 and the linking block 433. After the user releases the second operating member 420, the sixth reset member 530 is configured to drive the pushing member 431 to be reset, that is, drive the pushing member 431 to be withdrawn from the first mounting cavity 1111.

In this embodiment, the linking block 433 and the pushing member 431 are connected through a fastener such as a screw or a rivet, so that the second traction rope 4321, when pulling the linking block 433, can drive the pushing member 431 to move. In other embodiments, the linking block 433 may be omitted, and the second traction rope 4321 may be directly connected to the pushing member 431 to directly pull the pushing member 431 to move.

An operating principle and process of the second unlocking mechanism 400 will be briefly described below with reference to related drawings.

Referring to FIG. 29 to FIG. 31, when the first carrier body 500 is connected to the first positioning assembly 110, the pushing member 431 and the transmission member 441 are arranged opposite to each other. When the first positioning assembly 110 faces the first direction F1 relative to the second positioning assembly 120, the locking concave portion 212 (locking hole) faces the first direction F1 and is opposite to the second locking portion 2112. In this case, the second locking portion 2112 is automatically inserted into the locking hole of the first positioning assembly 110 under the action of the seventh reset member 2114, to lock the first positioning assembly 110 towards the first direction F1.

Referring to FIG. 29 to FIG. 31 and FIG. 43 to FIG. 48, when there is a need to change the orientation of the first carrier body 500, the user may operate the second operating member 420 so that the second operating member 420 pulls, through the second traction rope 4321, the pushing member 431 to move downwards along the fifth direction F5. During the downward movement, the pushing member 431 gradually passes through the push hole 1114 and extends into the first mounting cavity 1111 to abut against the movable pushing seat 4412. When the top of the movable pushing seat 4412 is subjected to a downward pushing force along the fifth direction F5, the movable pushing seat 4412 moves downwards so that the second connecting portion 44121 drives the first sleeve end 44321 to move, thereby further bending and deforming the third traction sleeve 4432. During the further bending and deformation of the third traction sleeve 4432, the length of the section L1 of the third traction rope 4431 between the first rope end 44311 and the first sleeve end 44321 increases, and the length of the section L2 of the third traction rope 4431 between the second rope end 44312 and the second sleeve end 44322 decreases. In this way, it may be regarded that the second rope end 44312 moves towards a direction close to the second sleeve end 44322, so as to pull the third driving member 442 to pivot clockwise around the second pivot point Q2, and then the third driving member 442 is enabled to push the second driving member 410 to move towards a direction close to the locking hole to push the second locking portion 2112 to exit the locking hole.

In this embodiment, the second unlocking mechanism 400 may also be configured to unlock the first locking portion 2111. Specifically, when the first carrier body 500 is mounted to the first positioning assembly 110 and the first positioning assembly 110 faces the third direction F3 relative to the second positioning assembly 120, the first locking portion 2111 is opposite to the locking hole, and the first locking portion 2111 can be automatically inserted into the locking hole under the action of the fifth reset member 2113. In this case, the user can selectively unlock the first locking portion 2111 through the second unlocking mechanism 400 or the first unlocking mechanism 300.

An operating manner of the positioning assembly 100 in the first embodiment is first described below based on an example in which the first carrier body 500 is detachably connected to the first positioning assembly 110. The positioning assembly 100 is connected to the car seat. The first carrier body 500 is connected to the first positioning assembly 110. When the first carrier body 500 faces the first direction F1 (i.e., faces the front of the car) relative to the first positioning assembly 110, the first limiting mechanism 140 can restrict the first carrier body 500 from being disassembled from the first positioning assembly 110 (refer to the foregoing description for the specific principle). In other words, in a case that the first carrier body 500 is connected to the first positioning assembly 110 and faces the first direction F1, the first carrier body 500 cannot be detached to replace and mount the second carrier body 600. In a case that the first carrier body 500 faces the first direction F1 along with the first positioning assembly 110, the second locking portion 2112 may be inserted into the locking concave portion 212 on the first positioning assembly 110 to restrict the first positioning assembly 110 from rotating relative to the second positioning assembly 120, so that the first carrier body 500 remains facing the first direction F1. When there is a need to change the orientation of the first carrier body 500, the user may operate the second unlocking mechanism 400 (operate the second operating member 420) to withdraw the second locking portion 2112 from the locking concave portion 212. Then, under the action of the rotation moving mechanism 190, the first positioning assembly 110 may rotate towards any one of the second direction F2, the third direction F3, and the fourth direction F4. It is to be noted that when the first carrier body 500 rotates to the third direction F3 along with the first positioning assembly 110, the first locking portion 2111 may be inserted into the locking concave portion 212 to keep the first carrier body 500 in the third direction F3. When there is a need to change the orientation of the first carrier body 500 again, the user operates the second unlocking mechanism 400 or the first unlocking mechanism 300 to withdraw the first locking portion 2111 from the locking concave portion 212.

It is assumed that there is a need to disassemble the first carrier body 500 from the first positioning assembly 110 and connect the second carrier body 600 to the first positioning assembly 110. As can be seen from the foregoing description, the orientation of the first positioning assembly 110 may be changed first to face any one of the second direction F2, the third direction F3, and the fourth direction F4. When the first positioning assembly 110 faces directions other than the first direction F1, the first limiting mechanism 140 can allow the first carrier body 500 to be disassembled from the first positioning assembly 110 (refer to the foregoing description for the specific principle). When the second carrier body 600 is connected to the first positioning assembly 110, the second limiting mechanism 170 can limit a range of a rotation angle of the first positioning assembly 110 relative to the second positioning assembly 120, so that the first positioning assembly 110 cannot rotate towards the first direction F1 (refer to the foregoing description for the specific principle). When the first positioning assembly 110 faces the third direction F3, the first locking portion 2111 may be automatically inserted into the locking concave portion 212 on the first positioning assembly 110, so that the second carrier body 600 can remain facing the third direction F3. When there is a need to change the orientation of the second carrier body 600, the user can only operate the first unlocking mechanism 300 to withdraw the first locking portion 2111 from the locking concave portion 212 to unlock the first positioning assembly 500 and the second positioning assembly 600.

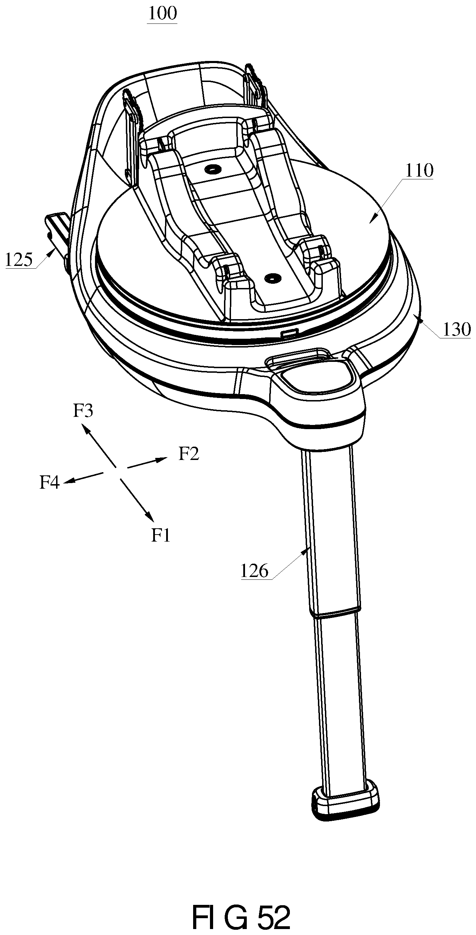

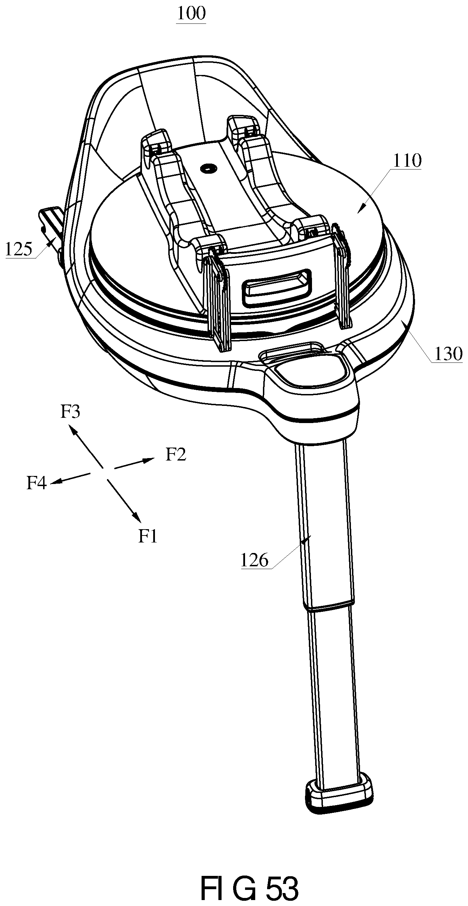

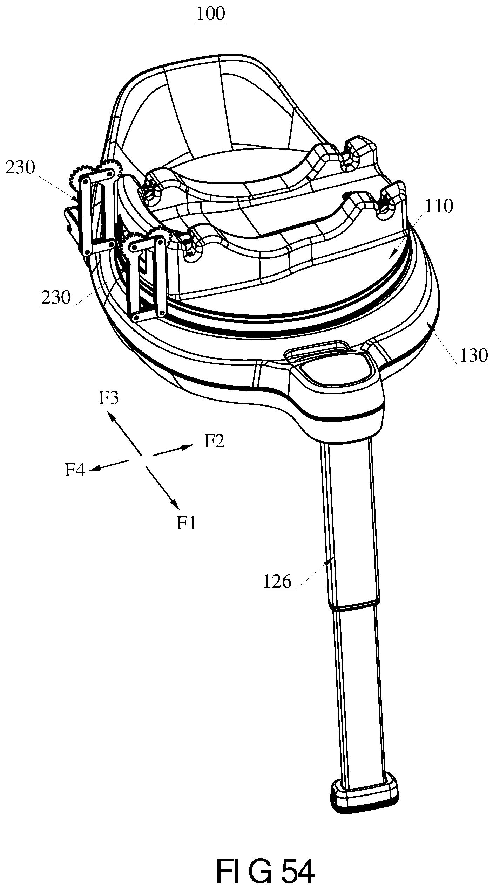

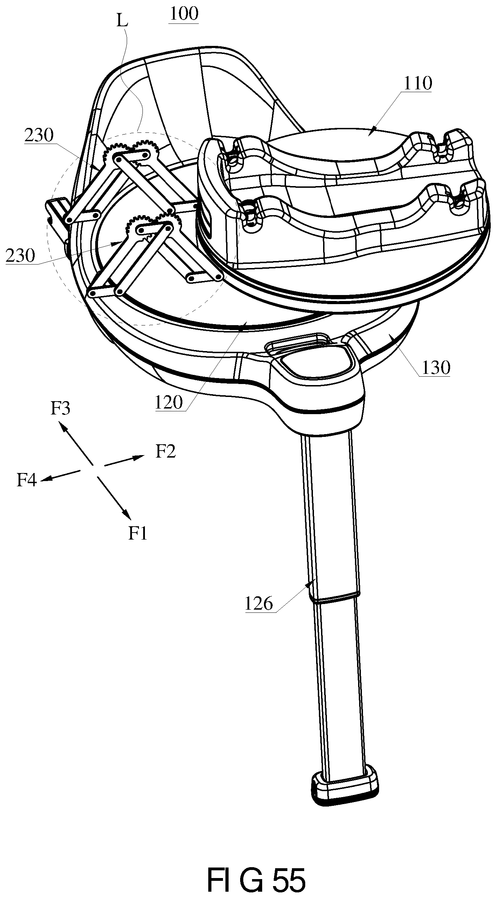

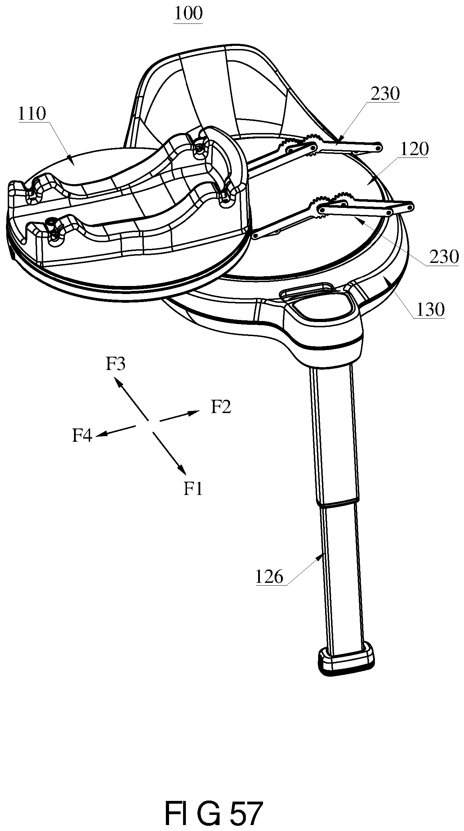

Referring to FIG. 52 to FIG. 54, a second embodiment of the present disclosure provides another positioning assembly 100. The positioning assembly 100 is configured to mount the first carrier body 500 or the second carrier body 600 to the car seat. Specifically, the positioning assembly 100 includes a first positioning assembly 110, a second positioning assembly 120, a third positioning assembly 130, and an extension mechanism 230. The third positioning assembly 130 is detachably mounted on the car seat. The third positioning assembly 130 is provided with a seat connecting plug 125 and a support leg 126. The seat connecting mechanism 125 is mainly configured to fix the third positioning assembly 130 to the car seat. The support leg 126 is configured to abut against the floor inside the car. The second positioning assembly 120 is rotatably arranged on the third positioning assembly 130. The first positioning assembly 110 is movably arranged on the second positioning assembly 120 and has an extended state and a collapsed state, and the first positioning assembly 110 is configured to be detachably connected to the first carrier body 500 or the second carrier body 600. In this way, through the rotation of the second positioning assembly 120, the first positioning assembly 110 can face any one of the first direction F1 (see FIG. 52), the second direction F2 (see FIG. 54), the third direction F3 (see FIG. 53), and the fourth direction F4 (see FIG. 57). Specifically, the second positioning assembly 120 and the third positioning assembly 130 in this embodiment each have a substantially circular structure, and have substantially a same radius. When the first positioning assembly 110 is in the collapsed state, the first positioning assembly 110 and the second positioning assembly 120 overlap up and down (see FIG. 52 to FIG. 54). When the first positioning assembly 110 is in the extended state, the first positioning assembly 110 is misaligned up and down relative to the second positioning assembly 120 (see FIG. 55 and FIG. 57). The extension mechanism 230 is connected between the first positioning assembly 110 and the second positioning assembly 120 to guide the first positioning assembly 110 to switch between the extended state and the collapsed state.

It is to be noted that in this embodiment, "the second positioning assembly 120 is rotatably arranged on the third positioning assembly 130" means that the second positioning assembly 120 can rotate on the third positioning assembly 130 about an axis. In this embodiment, the second positioning assembly 120 is in the shape of a circle, and an axis is a center of a circle thereof. In other embodiments, the second positioning assembly 120 may be in another symmetrical shape (such as an oval or a rectangle), and the axis may be a geometric center position of the second positioning assembly 120 or deviate from the geometric center position. Alternatively, the second positioning assembly 120 may be in an asymmetrical shape, and the axis may be set according to an actual requirement.

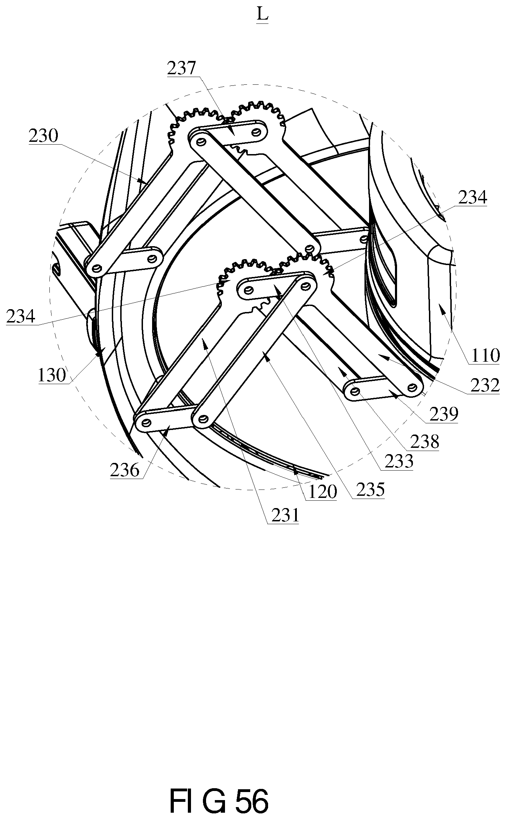

Referring to FIG. 55 and FIG. 56, in an embodiment, the extension mechanism 230 includes a first main connecting rod 231, a second main connecting rod 232, and a first auxiliary rod 233. One of the first main connecting rod 231 and the second main connecting rod 232 is connected to the first positioning assembly 110, and the other is connected to the second positioning assembly 120. Two ends of the first auxiliary rod 233 are pivotally connected to the first main connecting rod 231 and the second main connecting rod 232 respectively, so that the first main connecting rod 231 and the second main connecting rod 232 can move close to or away from each other. Specifically, when the first main connecting rod 231 and the second main connecting rod 232 move close to each other, the first positioning assembly 110 is in the collapsed state. When the first main connecting rod 231 and the second main connecting rod 232 move away from each other, the first positioning assembly 110 is in the extended state.

Referring to FIG. 56, in an embodiment, one end of the first main connecting rod 231 and one end of the second main connecting rod 232 are each provided with a gear 234, and the two gears 234 engage with each other. Two ends of the first auxiliary rod 233 are pivotally connected to wheel centers of the two gears 234 respectively.

Still referring to FIG. 56, in an embodiment, the extension mechanism 230 further includes a second auxiliary rod 237, two ends of the second auxiliary rod 237 are pivotally connected to wheel centers of the two gears 234 respectively, and the second auxiliary rod 237 and the first auxiliary rod 233 are located on two sides of the gear 234 respectively. In this way, stability of the first main connecting rod 231 and the second main connecting rod 232 in the process of moving close to or moving away from each other can be improved.

Referring to FIG. 56 again, in an embodiment, the extension mechanism 230 further includes a first reinforcing rod 235, a second reinforcing rod 238, a third auxiliary rod 236, and a fourth auxiliary rod 239. The first reinforcing rod 235 is pivotally connected to the third auxiliary rod 236, and an end of the first reinforcing rod 235 away from the third auxiliary rod 236 is pivotally connected to the first auxiliary rod 233, and an end of the third auxiliary rod 236 away from the first reinforcing rod 235 is pivotally connected to the first main connecting rod 231, so that the first main connecting rod 231, the first auxiliary rod 233, the first reinforcing rod 235, and the third auxiliary rod 236 form a four-connecting-rod structure (hereinafter referred to as a first connecting rod assembly). The second reinforcing rod 238 is pivotally connected to the fourth auxiliary rod 239, and an end of the second reinforcing rod 238 away from the fourth auxiliary rod 239 is pivotally connected to the second auxiliary rod 237, and an end of the fourth auxiliary rod 239 away from the second reinforcing rod 238 is pivotally connected to the second main connecting rod 232, so that the second main connecting rod 232, the second auxiliary rod 237, the second reinforcing rod 238, and the fourth auxiliary rod 239 also form a four-connecting-rod structure (hereinafter referred to as a second connecting rod assembly). Specifically, the third auxiliary rod 236 is connected to the second positioning assembly 120, and the fourth auxiliary rod 239 is connected to the first positioning assembly 110.

Referring to FIG. 54 and FIG. 55, before the first positioning assembly 110 is stretched outwards, the first connecting rod assembly is in the shape of a rectangle, the second connecting rod assembly is in the shape of a rectangle, and the first connecting rod assembly and the second connecting rod assembly overlap. During the outward stretching of the first positioning assembly 110, the first connecting rod assembly deforms and becomes a parallelogram, and angles of four inner corners of the parallelogram formed by the first connecting rod assembly gradually change. Similarly, the second connecting rod assembly deforms and becomes a parallelogram, and angles of four inner corners of the parallelogram formed by the second connecting rod assembly gradually change. In this embodiment, during the outward stretching of the first positioning assembly 110, the first connecting rod assembly and the second connecting rod assembly change from overlapping to mirror symmetry.

In an embodiment, as shown in FIG. 55, the positioning assembly 100 includes at least one extension mechanism 230. Specifically, in this embodiment, the positioning assembly 100 includes two extension mechanisms 230, and the two extension mechanisms 230 are arranged in parallel.

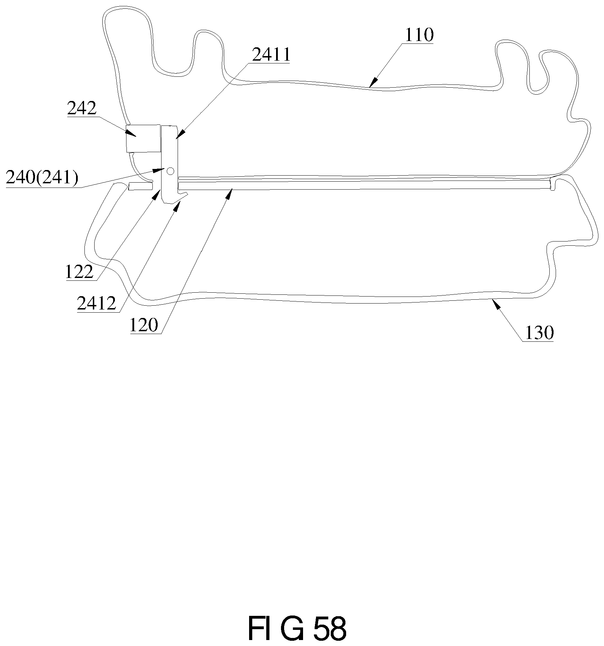

Referring to FIG. 58, in an embodiment, the positioning assembly 100 further includes a second locking mechanism 240. The second locking mechanism 240 is arranged between the first positioning assembly 110 and the second positioning assembly 120. The second locking mechanism 240 has a second locked state and a second unlocked state. When the second locking mechanism 240 is in the second locked state, the first positioning assembly 110 is restricted from rotating relative to the second positioning assembly 120. That is, the first positioning assembly 110 may not switch between the extended state and the collapsed state. When the second locking mechanism 240 is in the second unlocked state, the first positioning assembly 110 is allowed to move relative to the second positioning assembly 120. That is, the first positioning assembly 110 may switch between the extended state and the collapsed state.

Still referring to FIG. 58, in an embodiment, the second locking mechanism 240 includes a second locking member 241 pivotally connected to the first positioning assembly 110. The second locking member 241 has an operating end 2411 and a locking end 2412. The second positioning assembly 120 is provided with a locking fitting portion 122 (e.g., a fitting hole). The second locking member 241 is pivotable between the locked position and the unlocked position. When the second locking member 241 is at the locked position, the locking end 2412 can be engaged with the locking fitting portion 122. When the second locking member 241 is at the unlocked position, the locking end 2412 can be disengaged from the locking fitting portion 122. The operating end 2411 is operable to cause the second locking member 241 to pivot from the locked position to the unlocked position. Specifically, a pivot point between the second locking member 241 and the first positioning assembly 110 is located between the operating end 2411 and the locking end 2412, so that the second locking member 241 generally has a "seesaw" structure when pivoting on the first positioning assembly 110. That is, when the operating end 2411 is pressed, the locking end 2412 tilts to be detached from the locking fitting portion 122.

In an embodiment, as shown in FIG. 58, the second locking mechanism 240 further includes a button 242. The button 242 is configured to abut against the operating end 2411. When the second locking member 241 is required to be unlocked, the user may drive the second locking member 241 to pivot to the unlocked position by pushing the button 242.

Certainly, in some other embodiments not shown, the second locking mechanism 240 may alternatively be a locking structure. For example, the locking structure includes a male buckle and a female buckle that can be engaged with each other. One of the male buckle and the female buckle is arranged on the first positioning assembly 110, and the other is arranged on the second positioning assembly 120. In another example, the second locking member 241 is a locking column operable to move in an up-down direction. Locking or unlocking between the first positioning assembly 110 and the second positioning assembly 120 can be realized through insertion or detachment of the second locking member 241 into or from the locking fitting portion 122.

An operating manner in the second embodiment is described below based on an example in which the first carrier body 500 is detachably connected to the first positioning assembly 110. The positioning assembly 100 is connected to the car. The first carrier body 500 is connected to the first positioning assembly 110. It is assumed that the first carrier body 500 is used towards the first direction F1. When the child needs to be taken out of the first carrier body 500, the user operates the first positioning assembly 110 to rotate towards the second direction F2 or the fourth direction F4 relative to the second positioning assembly 120, so that the first positioning assembly 110 faces a side door of the car, so that the child faces the side door of the car. Then, the user operates the button 242, so that the second locking member 241 and the locking fitting portion 122 are unlocked, the user pulls the first positioning assembly 110 towards the second direction F2 or the fourth direction F4, the extension mechanism 230 is stretched and deformed, and the first carrier body 500 faces the second direction F2 or the fourth direction F4. The technical features of the above-mentioned embodiments can be combined arbitrarily. In order to make the description concise, not all possible combinations of the technical features are described in the embodiments. However, as long as there is no contradiction in the combination of these technical features, the combinations should be considered as in the scope of the specification.

The above-described embodiments are only several implementations of the present disclosure, and the descriptions are relatively specific and detailed, but they should not be construed as limiting the patent scope of the present disclosure. It should be understood by those of ordinary skill in the art that various modifications and improvements can be made without departing from the concept of the present disclosure, and all fall within the protection scope of the present disclosure. Therefore, the patent protection of the present disclosure shall be defined by the appended claims.

## Claims

1. A positioning assembly, comprising a first positioning assembly and a second positioning assembly, the first positioning assembly being rotatably arranged on the second positioning assembly, the first positioning assembly being configured to be detachably connected to a carrier body, the carrier body being a first carrier body or a second carrier body; wherein
when the first positioning assembly is configured to be connected to the first carrier body and rotates to face a first direction relative to the second positioning assembly, the first positioning assembly is capable of preventing the first carrier body from being detached from the first positioning assembly; and
when the first positioning assembly is configured to be connected to the second carrier body, the first positioning assembly is prevented from rotating to face the first direction relative to the second positioning assembly.

2. The positioning assembly according to claim 1, further comprising:
a first connecting mechanism arranged on the first positioning assembly and having a locked state and an unlocked state, when the first connecting mechanism is in the locked state, the first connecting mechanism being connected to the carrier body, and when the first connecting mechanism is in the unlocked state, the first connecting mechanism being detached from the carrier body; and
a first limiting mechanism, the first limiting mechanism being arranged between the first positioning assembly and the second positioning assembly and configured to selectively allow or restrict switching of the first connecting mechanism between the locked state and the unlocked state.

3. The positioning assembly according to claim 2, further comprising:
a locking holding mechanism movably arranged on the first positioning assembly and configured to maintain the connection between the first connecting mechanism and the carrier body;
wherein when the first positioning assembly is configured to be connected to the first carrier body and faces the first direction, the first limiting mechanism enters a movement path of the locking holding mechanism to limit movement of the locking holding mechanism, to restrict the first connecting mechanism from switching from the locked state to the unlocked state.

4. The positioning assembly according to claim 2 or 3, wherein the first limiting mechanism comprises:
a first limiting groove provided on a surface of the second positioning assembly facing the first positioning assembly; and
a first limiting member movably arranged on the first positioning assembly and capable of being inserted into or withdrawn from the first limiting groove;
wherein when the first limiting member is inserted into the first limiting groove, the first limiting member allows the first connecting mechanism to switch to the unlocked state; when the first limiting member is withdrawn from the first limiting groove, the first limiting member restricts the first connecting mechanism from switching to the unlocked state; and when the first positioning assembly rotates towards the first direction relative to the second positioning assembly, the first limiting member is withdrawn from the first limiting groove.

5. The positioning assembly according to claim 4, wherein the first positioning assembly has a rotation axis, and the first limiting member deviates from the rotation axis; and
a straight line passing through the rotation axis and perpendicular to the first direction is defined as a control straight line, and when the first positioning assembly faces the first direction, the first limiting member and the first limiting groove are misaligned and respectively located on two sides of the control straight line.

6. The positioning assembly according to claim 5, wherein the first positioning assembly has a circular structure, the rotation axis is a center of a circle of the first positioning assembly, the first limiting groove is a semicircular groove, a radius of the semicircular groove is a distance between the first limiting member and the center of the circle of the first positioning assembly, and when the first positioning assembly rotates away from the first direction relative to the second positioning assembly, the first limiting member is located at a midpoint of the first limiting groove.

7. The positioning assembly according to claim 4, wherein an end of the first limiting member facing the second positioning assembly is provided with a sliding slope, the sliding slope being capable of pushing against a groove wall of the first limiting groove, so that the first limiting member moves out of the first limiting groove in a direction away from the second positioning assembly.

8. The positioning assembly according to claim 7, wherein
the first positioning assembly includes a first housing, the first connecting mechanism comprises an engaging hook, the engaging hook being pivotally connected to the first housing and having a locked position and an unlocked position; and
when the engaging hook is at the locked position, the engaging hook is configured to be engaged and locked with the carrier body.

9. The positioning assembly according to claim 8, wherein the first housing has a first mounting cavity, and the positioning assembly further comprises:
a locking holding mechanism, movably arranged in the first mounting cavity, wherein when the engaging hook is driven to the locked position, the locking holding mechanism is configured to lock the engaging hook to the locked position.

10. The positioning assembly according to claim 9, wherein
the locking holding mechanism comprises a first locking member, the first locking member being movably arranged in the first mounting cavity and having a first position and a second position; and
one of the first locking member and the engaging hook is provided with a locking groove, and the other is provided with an engaging portion; when the first locking member is at the first position, the locking groove is engaged with the engaging portion to lock the engaging hook to the locked position; and when the first locking member is at the second position, the locking groove is separated from the engaging portion to allow the engaging hook to switch between the locked position and the unlocked position.

11. The positioning assembly according to claim 10, wherein
when the first limiting member is withdrawn from the first limiting groove, the first limiting member is located on a movement path of the first locking member to restrict the first locking member from switching from the first position to the second position; and
when the first limiting member is inserted into the first limiting groove, the first limiting member deviates from the movement path of the first locking member to allow the first locking member to switch from the first position to the second position.

12. The positioning assembly according to claim 1, further comprising a second limiting mechanism, the second limiting mechanism being arranged between the first positioning assembly and the second positioning assembly and configured to selectively limit a range of a rotation angle of the first positioning assembly relative to the second positioning assembly.

13. The positioning assembly according to claim 12, wherein the second limiting mechanism has a first state and a second state, the second limiting mechanism, when in the first state, restricts the first positioning assembly from rotating towards the first direction relative to the second positioning assembly, and the second limiting mechanism, when in the second state, allows the first positioning assembly to rotate towards the first direction relative to the second positioning assembly; and
the positioning assembly further comprises an elastic member; wherein the elastic member always keeps the second limiting mechanism in the first state, and when the first positioning assembly is configured to be connected to the first carrier body, the second limiting mechanism overcomes an elastic force of the elastic member through the first carrier body and is in the second state; or the elastic member always keeps the second limiting mechanism in the second state, and when the first positioning assembly is configured to be connected to the second carrier body, the second limiting mechanism overcomes the elastic force of the elastic member through the second carrier body and is in the first state.

14. The positioning assembly according to claim 13, wherein the second limiting mechanism comprises:
a second limiting groove provided in one of the second positioning assembly and the first positioning assembly; and
a second limiting member movably arranged on the other of the second positioning assembly and the first positioning assembly and capable of being inserted into or withdrawn from the second limiting groove;
wherein when the first positioning assembly is configured to be connected to the second carrier body, the second limiting member is inserted into the second limiting groove, and the first positioning assembly is restricted from rotating towards the first direction relative to the second positioning assembly.

15. The positioning assembly according to claim 14, wherein the first positioning assembly has a rotation axis, and the second limiting member deviates from the rotation axis; and
a straight line passing through the rotation axis and perpendicular to the first direction is defined as a control straight line, and when the first positioning assembly faces the first direction, the second limiting member and the second limiting groove are misaligned and respectively located on two sides of the control straight line.

16. The positioning assembly according to claim 15, wherein the first positioning assembly has a circular structure, the rotation axis is a center of a circle of the first positioning assembly, the second limiting groove is a semicircular groove, a radius of the semicircular groove is a distance between the second limiting member and the center of the circle of the first positioning assembly, and when the first positioning assembly rotates away from the first direction relative to the second positioning assembly, the second limiting member is located at a midpoint of the second limiting groove.

17. The positioning assembly according to claim 14, further comprising a linking mechanism, the linking mechanism being arranged on the first positioning assembly and configured to be drivingly connected to the second limiting member, and the linking mechanism being capable of driving the second limiting member to be inserted into or withdrawn from the second limiting groove.

18. The positioning assembly according to claim 17, wherein the linking mechanism comprises a linking member, the linking member being movably arranged on the first positioning assembly and having a third position and a fourth position, a first end of the linking member being provided with a first chute, and an end of the second limiting member facing away from the second limiting groove is slidably arranged in the first chute; when the linking member moves to the third position, the second limiting member is inserted into the second limiting groove; and when the linking member moves to the fourth position, the second limiting member is withdrawn from the second limiting groove.

19. The positioning assembly according to claim 18, wherein
the linking mechanism further comprises a pressing member, the pressing member being movably arranged on the first positioning assembly and having a fifth position and a sixth position, the pressing member being provided with a second chute, and a second end of the linking member being slidably arranged in the second chute; and
when the pressing member is at the fifth position, the linking member is at the third position; and when the pressing member is at the sixth position, the linking member is at the fourth position.

20. The positioning assembly according to claim 19, wherein when the first positioning assembly is configured to be connected to the second carrier body, the pressing member is at the fifth position, and the linking member is at the third position.

21. A positioning assembly, comprising a first positioning assembly and a second positioning assembly, wherein the first positioning assembly is rotatably arranged on the second positioning assembly, the first positioning assembly is configured to be detachably connected to a carrier body, the positioning assembly further comprises a first locking mechanism, the first locking mechanism being arranged between the first positioning assembly and the second positioning assembly, the first locking mechanism having a first locked state and a first unlocked state, when the first locking mechanism is in the first locked state, the first positioning assembly is restricted from rotating relative to the second positioning assembly, and when the first locking mechanism is in the first unlocked state, the first positioning assembly is allowed to rotate relative to the second positioning assembly.

22. The positioning assembly according to claim 21, wherein the first locking mechanism comprises:
a locking assembly movably arranged on one of the second positioning assembly and the first positioning assembly; and
a locking concave portion arranged in the other of the second positioning assembly and the first positioning assembly;
wherein when the locking assembly is inserted into the locking concave portion, the first positioning assembly is engaged with the second positioning assembly to restrict the first positioning assembly from rotating relative to the second positioning assembly; and when the locking assembly is withdrawn from the locking concave portion, the first positioning assembly is rotatable relative to the second positioning assembly.

23. The positioning assembly according to claim 22, wherein
the first positioning assembly is capable of rotating towards the first direction and away from the first direction relative to the second positioning assembly; the locking assembly comprises a first locking portion, the first locking portion being movably arranged on one of the second positioning assembly and the first positioning assembly along the first direction; and
when the first positioning assembly rotates in the case of one of being towards the first direction and being away from the first direction relative to the second positioning assembly, the first locking portion is capable of being engaged with the locking concave portion.

24. The positioning assembly according to claim 23, wherein
the positioning assembly further comprises a first unlocking mechanism, the first unlocking mechanism being operably connected to the first locking portion and configured to drive the first locking portion to exit the locking concave portion.

25. The positioning assembly according to claim 24, wherein the first locking portion is movably arranged on the second positioning assembly, the locking concave portion is arranged on the first positioning assembly, and the first unlocking mechanism comprises:
a first driving member pivotally connected to the second positioning assembly and pivotally connected to the first locking portion;
a first operating member operably arranged on the second positioning assembly; and
a first traction assembly connected to the first operating member and the first driving member respectively;
wherein when the first operating member is operated, the first operating member drives, through the first traction assembly, the first driving member to pivot to enable the first driving member to drive the first locking portion to exit the locking concave portion.

26. The positioning assembly according to any one of claims 23 to 25, wherein
the locking assembly further comprises a second locking portion, the second locking portion being movably arranged on one of the second positioning assembly and the first positioning assembly, and the second locking portion being arranged opposite to the first locking portion along the first direction; and
when the first positioning assembly rotates in the case of the other of being towards the first direction and being away from the first direction relative to the second positioning assembly, the second locking portion is capable of being engaged with the locking concave portion.

27. The positioning assembly according to claim 1, wherein the second positioning assembly comprises a second housing, a convex body protrudes from an upper surface of the second housing, a limiting convex portion is formed on the convex body, a groove-shaped structure is formed between the limiting convex portion and the upper surface of the second housing, the first positioning assembly comprises a first housing, and when the first positioning assembly faces the first direction or faces away from the first direction relative to the second positioning assembly, part of an edge of the first housing is inserted into the groove-shaped structure.

28. The positioning assembly according to claim 27, wherein the second positioning assembly comprises a framework and at least one first support mechanism, the first support mechanism comprising a first support member and a second support member, the first support member being fixed to the framework, the second support member being supported on the first support member, and when the first positioning assembly faces the first direction or faces away from the first direction relative to the second positioning assembly, at least part of the second support member being located below the first positioning assembly.

29. The positioning assembly according to claim 1, wherein the second positioning assembly further comprises a third support mechanism and a second housing, the second housing comprising a second top cover and a second bottom cover connected to each other, the third support mechanism comprising a plurality of support columns, each of the support columns comprising a bottom column arranged on the second bottom cover and a top column arranged on the second top cover, the bottom column being connected to the top column.

30. A carrier, comprising:
the positioning assembly according to any one of claims 1 to 29; and
a carrier body detachably connected to the first positioning assembly of the positioning assembly, the carrier body being a first carrier body or a second carrier body.

31. A positioning assembly, configured to mount a first carrier body or a second carrier body to a car seat, comprising:
a third positioning assembly detachably mounted on the car seat;
a second positioning assembly rotatably arranged on the third positioning assembly;
a first positioning assembly movably arranged on the second positioning assembly and having an extended state and a collapsed state, the first positioning assembly being configured to be detachably connected to the first carrier body or the second carrier body; and
an extension mechanism connected between the first positioning assembly and the second positioning assembly and configured to guide the first positioning assembly to switch between the extended state and the collapsed state.

32. The positioning assembly according to claim 31, wherein
the extension mechanism comprises a first main connecting rod, a second main connecting rod, and a first auxiliary rod, one of the first main connecting rod and the second main connecting rod being connected to the first positioning assembly, the other being connected to the second positioning assembly, two ends of the first auxiliary rod being pivotally connected to the first main connecting rod and the second main connecting rod respectively, to enable the first main connecting rod and the second main connecting rod to move close to or away from each other; and
when the first main connecting rod and the second main connecting rod move close to each other, the first positioning assembly is in the collapsed state, and when the first main connecting rod and the second main connecting rod move away from each other, the first positioning assembly is in the extended state.

33. The positioning assembly according to claim 32, wherein one end of the first main connecting rod and one end of the second main connecting rod are each provided with a gear, the two gears engaging with each other, and two ends of the first auxiliary rod are pivotally connected to wheel centers of the two gears respectively.

34. The positioning assembly according to claim 33, wherein the extension mechanism further comprises a first reinforcing rod and a third auxiliary rod, the first reinforcing rod and the third auxiliary rod being pivotally connected to each other, an end of the first reinforcing rod away from the third auxiliary rod being pivotally connected to the first auxiliary rod, an end of the third auxiliary rod away from the first reinforcing rod being pivotally connected to the first main connecting rod, so that the first main connecting rod, the first auxiliary rod, the first reinforcing rod, and the third auxiliary rod form a four-connecting-rod structure, and the third auxiliary rod being connected to the second positioning assembly.

35. The positioning assembly according to claim 34, wherein the extension mechanism further comprises a second auxiliary rod, two ends of the second auxiliary rod being pivotally connected to the wheel centers of the two gears respectively, and the second auxiliary rod and the first auxiliary rod being located on two sides of the gear respectively.

36. The positioning assembly according to claim 35, wherein the extension mechanism further comprises a second reinforcing rod and a fourth auxiliary rod, the second reinforcing rod and the fourth auxiliary rod being pivotally connected to each other, an end of the second reinforcing rod away from the fourth auxiliary rod being pivotally connected to the second auxiliary rod, an end of the fourth auxiliary rod away from the second reinforcing rod being pivotally connected to the second main connecting rod, so that the second main connecting rod, the second auxiliary rod, the second reinforcing rod, and the fourth auxiliary rod form a four-connecting-rod structure, and the fourth auxiliary rod being connected to the first positioning assembly.

37. The positioning assembly according to claim 36, further comprising a second locking mechanism, the second locking mechanism being arranged between the first positioning assembly and the second positioning assembly, the second locking mechanism having a second locked state and a second unlocked state, when the second locking mechanism is in the second locked state, the first positioning assembly is restricted from rotating relative to the second positioning assembly, and when the second locking mechanism is in the second unlocked state, the first positioning assembly is allowed to rotate relative to the second positioning assembly.

38. The positioning assembly according to claim 37, wherein the second locking mechanism comprises a second locking member pivotally connected to the first positioning assembly, the second locking member having an operating end and a locking end, the second positioning assembly is provided with a locking fitting portion, and the second locking member is pivotable between a locked position and an unlocked position, when the second locking member is at the locked position, the locking end is capable of being engaged with the locking fitting portion, and when the second locking member is at the unlocked position, the locking end is capable of being disengaged from the locking fitting portion; and the operating end being operable so that the second locking member pivots from the locked position to the unlocked position.
